# EUROPEAN PATENT APPLICATION

(11) **EP 2 237 257 A1**
(43) Date of publication of application: **06.10.2010**
(21) Application number: 08867439.5
(22) Date of filing: 11.11.2008
(51) Int. Cl.: G09G 3/36, G02F 1/133, G09G 3/20

(54) **LIQUID CRYSTAL DISPLAY, LIQUID CRYSTAL DISPLAY DRIVING METHOD, AND TELEVISION RECEIVER**

(30) Priority: 27.12.2007 JP 2007338259
(71) Applicant: Sharp Kabushiki Kaisha, Osaka-shi, Osaka 545-8522 (JP)
(72) Inventor: SUGIHARA, Toshinori, Osaka 545-8522 Japan (JP); BAN, Atsushi, Osaka 545-8522 Japan (JP); TSUBATA, Toshihide, Osaka 545-8522 Japan (JP)
(74) Representative: Goddar, Heinz J.
(86) International application number: PCT/JP2008/070491
(87) International publication number: WO 2009/084331

(57) **Abstract**

First and second data signal lines (for example, S1x, S1y) are provided for a column of pixels (for example, PS1), and signal potentials of opposite polarity to each other are supplied to the data signal lines respectively. A predetermined pixel (P(1,1)) is taken as the first pixel. A pixel (for example, P(2,1) for n=i=1) other than the (2xnxi+1)-th pixel in the scanning direction is connected to a data signal line (for example, S1y) different from that connected to the previous pixel, whereas the (2xnxi+1)-th pixel (for example, P(3,1) for n=i=1) is connected to the same data signal line (for example, S1y) as that connected to the previous pixel. The polarity of the signal potential supplied to each data signal line is inverted every n horizontal scanning periods (for example, 1H). Every adjacent two scan signal lines starting from the scan signal line (G1) connected to the predetermined pixel are sequentially selected at the same time among scan signal lines (G1, G2, ...). A liquid crystal display with this structure enables an increase of the pixel charging time as well as prevention of flickering.

## Description

### Technical Field

The present invention relates to a liquid crystal display capable of simultaneously writing data in a plurality of pixels in one pixel column.

### Background Art

Liquid crystal displays are becoming larger and having higher definitions. However, this raises the increase in the number of pixels and the increase in wiring resistance etc. of data signal lines, with a result that it is getting difficult to sufficiently charge individual pixels. In order to deal with this problem, Patent Literature 1 discloses an arrangement in which two data signal lines are provided for one pixel column and scanning signal lines respectively connected with adjacent two pixels are selected simultaneously. The polarity of a signal potential supplied to individual data signal lines is inverted with respect to each frame. This arrangement allows simultaneously writing signal potentials in adjacent two pixels, thereby increasing a time for charging one pixel.
[Patent Literature 1] Japanese Patent Application Publication, Tokukaihei, No. 10-253987 A (publication date: September 25, 1998)

### Summary of Invention

However, the arrangement disclosed in Patent Literature 1 is problematic in that the polarities of signal potentials to be written in individual pixels in one frame are the same and scanning signal lines connected with adjacent two pixels respectively are made ON/OFF simultaneously (the two pixels flicker simultaneously), resulting in highly noticeable flickers.

The present invention was made in view of the foregoing problems. An object of the present invention is to provide a liquid crystal display capable of increasing a time for charging one pixel while reducing flickers.

A liquid crystal display of the present invention is a liquid crystal display, having pixels aligned in a row direction and a column direction, the row direction being a direction in which scanning signal lines are extended, the liquid crystal display comprising pixel columns, first data signal lines, and second data signal lines, a first data signal line and a second data signal line being provided for each pixel column, one pixel included in the pixel column being connected with a scanning signal line and one of the first data signal line and the second data signal line, and signal potentials with opposite polarities being supplied to the first data signal line and the second data signal line, respectively, in a case where a predetermined pixel in the pixel column is regarded as a first pixel from which counting of a pixel starts, an odd-number-positioned pixel and an even-number-positioned pixel in a scanning direction are paired, n (n is a natural number) pairs are regarded as a group, and each group is given a count number, each group being configured such that two pixels in each pair are connected with different data signal lines and when n is two or more, each odd-number-positioned pixel is connected with one data signal line, and in two groups with successive count numbers, an odd-number-positioned pixel in one group and an odd-number-positioned pixel in the other group being connected with different data signal lines. Here, a period during which a potential corresponding to one pixel is supplied to a data signal line is regarded as one horizontal scanning period (1H).

The liquid crystal display of the present invention may be arranged such that, for example, a polarity of a signal potential supplied to a data signal line is inverted with respect to n horizontal scanning period, and a group is selected according to the count number, in the selected group, scanning signal lines respectively connected with two pixels in a pair are simultaneously selected, and when n is 2 or more, the simultaneous selection is sequentially performed with respect to each pair. This allows simultaneously selecting two scanning signal lines and at the same time dot-inverting individual pixels of the pixel column. This allows reducing flickers by dot-inverting individual pixels and at the same time lengthens one horizontal scanning period by simultaneously selecting two scanning signal lines so that a time for charging a pixel is increased.

Further, in this configuration of the present invention, when the length of one horizontal scanning period is set to be the same as that in a comparative configuration where scanning signal lines are selected one by one, it is possible to scan twice the number of scanning signal lines compared with the comparative configuration, and when the number of scanning signal lines is set to be the same as that in the comparative configuration, it is possible to make the length of one horizontal scanning period twice. Accordingly, the liquid crystal display of the present invention is preferably used for double speed driving in which the number of frames per unit time (e.g. the number of frames, the number of sub-frames, and the number of fields) is doubled (e.g. 120 frames/sec). Double speed driving inevitably results in a shorter time for charging a pixel. However, employing the configuration of the present invention allows securing a sufficient time for charging a pixel. Further, the liquid crystal display of the present invention may be preferably used for a digital-cinema-standard liquid crystal display having 2160 scanning signal lines and a super-high-vision-standard liquid crystal display having 4320 scanning signal lines.

The liquid crystal display of the present invention may be arranged such that the odd-number-positioned pixel and the even-number-positioned pixel in a pair are adjacent to each other. In this case, each pixel other than 2×n×i+1^{st} (i is a natural number) pixel and its upstream-adjacent pixel which are adjacent thereto upstream in the scanning direction are connected with different data signal lines and the 2×n×i+1^{st} pixel and its upstream-adjacent pixel are connected with a same data signal line, and the scanning signal lines are sequentially selected with starting from a scanning signal line connected with the predetermined pixel in such a manner that adjacent two scanning signal lines are selected simultaneously.

In the liquid crystal display of the present invention, n may be 1. Inverting a signal potential supplied to a data signal line with respect to one horizontal scanning period allows a liquid crystal display with a large size, high definition or high speed driving to greatly reduce unevenness in reached potential (charge ratio) during a current horizontal scanning period due to a difference in the levels of potentials supplied to the same data signal line during the previous horizontal scanning period.

A liquid crystal display of the present invention is a liquid crystal display, having pixels aligned in a row direction and a column direction, the row direction being a direction in which scanning signal lines are extended, the liquid crystal display comprising pixel columns, first data signal lines, and second data signal lines, a first data signal line and a second data signal line being provided for each pixel column, one pixel included in the pixel column being connected with a scanning signal line and one of the first data signal line and the second data signal line, and signal potentials with opposite polarities being supplied to the first data signal line and the second data signal line, respectively, in a case where a predetermined pixel in the pixel column is regarded as a first pixel from which counting of a pixel starts, an odd-number-positioned pixel and an even-number-positioned pixel counted in a scanning direction are paired, and each pair is given a count number, two pixels in each pair being connected with different data signal lines, and an odd-number-positioned pixel in one of two pairs with successive count numbers and an odd-number-positioned pixel in the other of the two pairs with successive count numbers being connected with a same data signal line.

The liquid crystal display of the present invention may be arranged such that a polarity of a signal potential supplied to each data signal line is inverted with respect to each vertical scanning period, and simultaneous selection of scanning signal lines that are respectively connected with two pixels in a pair is performed according to the count number with respect to each pair. This allows simultaneously selecting two scanning signal lines and at the same time dot-inverting individual pixels of the pixel column. This allows reducing flickers by dot-inverting individual pixels and at the same time lengthens one horizontal scanning period by simultaneously selecting two scanning signal lines so that a time for charging a pixel is increased.

Further, in this configuration of the present invention, when the length of one horizontal scanning period is set to be the same as that in a comparative configuration where scanning signal lines are selected one by one, it is possible to scan twice the number of scanning signal lines compared with the comparative configuration, and when the number of scanning signal lines is set to be the same as that in the comparative configuration, it is possible to make the length of one horizontal scanning period twice. Accordingly, the liquid crystal display of the present invention is preferably used for double speed driving in which the number of frames per unit time is doubled (e.g. 120 frames/sec). Double speed driving inevitably results in a shorter time for charging a pixel. However, employing the configuration of the present invention allows securing a sufficient time for charging a pixel. Further, the liquid crystal display of the present invention may be preferably used for a digital-cinema-standard liquid crystal display having 2160 scanning signal lines and a super-high-vision-standard liquid crystal display having 4320 scanning signal lines.

The liquid crystal display of the present invention may be arranged such that the odd-number-positioned pixel and the even-number-positioned pixel in a pair are adjacent to each other. In this case, the liquid crystal display may be arranged such that pixels positioned at downstream side in a scanning direction from the predetermined pixel and a pixel at an upstream-adjacent position of said each pixel are connected with different data signal lines, and scanning signal lines are selected with starting from a scanning signal line connected with the predetermined pixel in such a manner that adjacent two scanning lines are selected simultaneously.

The liquid crystal display of the present invention may be arranged such that pixels in one pixel row are connected with one scanning signal line, a first data signal line for one of adjacent two pixel columns and a first data signal line for the other of the adjacent two pixel columns are supplied with a signal potential with a same potential, and connections with a first data signal line and a second data signal line are made oppositely between pixels adjacent in a row direction. This allows dot-inverting pixels in the pixel row.

In this case, the liquid crystal display of the present invention may be arranged such that a first data signal line and a second data signal line for a pixel column are provided at both sides of the pixel column, and a first data signal line for one of adjacent two pixel columns and a first data signal line for the other of the adjacent two pixel columns are adjacent to each other without a pixel column therebetween or a second data signal line for one of adjacent two pixel columns and a second data signal line for the other of the adjacent two pixel columns are adjacent to each other without a pixel column therebetween. This arrangement causes signal potentials supplied to two data signal lines adjacent to each other (closest to each other) without a pixel column therebetween to always have the same polarity. This allows reducing power consumption due to parasitic capacitance between the two data signal lines, thereby reducing a load on a source driver.

The liquid crystal display of the present invention may be arranged such that a first data signal line and a second data signal line for a pixel column are provided at both sides of the pixel column, and a first data signal line for one of adjacent two pixel columns and a second data signal line for the other of the adjacent two pixel columns are adjacent to each other without a pixel column therebetween or a second data signal line for one of adjacent two pixel columns and a first data signal line for the other of the adjacent two pixel columns are adjacent to each other without a pixel column therebetween.

A liquid crystal display of the present invention is a liquid crystal display, having pixels aligned in a row direction and a column direction, the row direction being a direction in which scanning signal lines are extended, the liquid crystal display comprising pixel columns, first data signal lines, and second data signal lines, a first data signal line and a second data signal line being provided for each pixel column, one pixel included in the pixel column being connected with a scanning signal line and one of the first data signal line and the second data signal line, and signal potentials with opposite polarities being supplied to the first data signal line and the second data signal line, respectively, in a case where a predetermined pixel in the pixel column is regarded as a first pixel from which counting of pixel starts, two odd-number-positioned pixels counted in a scanning direction are paired and two even-number-positioned pixels counted in the scanning direction are paired, and a group including n (n is a natural number) pair consisting of two odd-number-positioned pixels and a group including n pair consisting of two even-number-positioned pixels are alternately given count numbers, two pixels in each pair are connected with different data signal lines, and a polarity of a signal potential supplied to a data signal line is inverted with respect to n (n is a natural number) horizontal scanning period.

The liquid crystal display of the present invention may be arranged such that, for example, a group is selected according to the count number, in the selected group, scanning signal lines respectively connected with two pixels in a pair are simultaneously selected, and when n is 2 or more, the simultaneous selection is sequentially performed with respect to each pair. This allows dot-inverting pixels of the pixel column while simultaneously selecting two scanning signal lines. This allows reducing flickers by dot-inverting individual pixels and at the same time lengthens one horizontal scanning period by simultaneously selecting two scanning signal lines so that a time for charging a pixel is increased.

Further, in this configuration of the present invention, when the length of one horizontal scanning period is set to be the same as that in a comparative configuration where scanning signal lines are selected one by one, it is possible to scan twice the number of scanning signal lines compared with the comparative configuration, and when the number of scanning signal lines is set to be the same as that in the comparative configuration, it is possible to make the length of one horizontal scanning period twice. Accordingly, the liquid crystal display of the present invention is preferably used for double speed driving in which the number of frames per unit time is doubled (e.g. 120 frames/sec). Double speed driving inevitably results in a shorter time for charging a pixel. However, employing the configuration of the present invention allows securing a sufficient time for charging a pixel. Further, the liquid crystal display of the present invention may be preferably used for a digital-cinema-standard liquid crystal display having 2160 scanning signal lines and a super-high-vision-standard liquid crystal display having 4320 scanning signal lines.

The liquid crystal display of the present invention may be arranged such that a polarity of a signal potential supplied to a first data signal line and a second data signal line for one of adjacent two pixel columns is different from a polarity of a signal potential supplied to a first data signal line and a second data signal line for the other of the adjacent two pixel columns. This allows dot-inverting pixels of the pixel column. The liquid crystal display of the present invention may be arranged such that the two pixels in each pair are two pixels with successive odd count numbers or two pixels with successive even count numbers.

The liquid crystal display of the present invention may be arranged such that there are provided a plurality of retention capacitance lines whose potentials are controllable (e.g. retention capacitance lines to which retention capacitance line signals are supplied), the pixel includes a first transistor, second transistor, a first pixel electrode, and a second pixel electrode, the first pixel electrode and the second pixel electrode are connected with a same data signal line via the first transistor and the second transistor, respectively, the first transistor and the second transistor are connected with the scanning signal line, the first pixel electrode and the second pixel electrode form retention capacitances with different retention capacitance lines, respectively, potentials of the two different retention capacitance lines with which the first pixel electrode and the second pixel electrode form retention capacitances (e.g. potentials of retention capacitance line signals supplied to the two retention capacitance lines, respectively) are caused to shift their levels in an opposite direction to each other in synchronization with or after completion of scanning of the scanning signal line with which the first transistor and the second transistor are connected. This allows the liquid crystal display to display a halftone based on a configuration that one pixel includes a bright sub-pixel and a dark sub-pixel, thereby improving a viewing angle characteristic while displaying a halftone. In this case, the liquid crystal display of the present invention may be arranged such that a retention capacitance line is provided for two pixels adjacent in a column direction, and a first pixel electrode or a second pixel electrode provided in one of the two pixels and a first pixel electrode or a second pixel electrode provided in the other of the two pixels form retention capacitances with the retention capacitance line. This arrangement allows two pixels to share one retention capacitance line, thereby reducing the number of retention capacitance lines. Further, the liquid crystal display of the present invention is configured such that each pixel can be dot-inverted. Accordingly, even when two pixels share one retention capacitance line as in the present arrangement, it is possible to position bright sub-pixels and dark sub-pixels in a checkered pattern, thereby preventing bright sub-pixels from being adjacent to each other or preventing dark sub-pixels from being adjacent to each other in one pixel column. This allows improving a viewing angle characteristic while subduing jaggyness.

The liquid crystal display of the present invention may be arranged such that during each horizontal scanning period, the first data signal line and the second data signal line are supplied with a preliminary potential (e.g. refresh potential) and thereafter with the signal potential. Supplying a preliminary potential at the beginning of each horizontal scanning period in this manner allows a liquid crystal display with a large size, high definition or high speed driving to reduce variations in reached potential (charge ratio) during a current horizontal scanning period due to a difference in the levels of potentials supplied to the same data signal line during the previous horizontal scanning period.

The liquid crystal display of the present invention may be arranged such that an intermediate selection period is provided between scanning periods for a scanning signal line in accordance with timing of supplying the preliminary potential, and the preliminary potential is written in a pixel connected with the scanning signal line during the intermediate selection period. This allows each pixel to display a specific image (e.g. black display) during a part of one frame period, thereby reducing tailing etc. when displaying moving images. This improves the quality of moving images.

The liquid crystal display of the present invention may be arranged such that the preliminary potential has a constant value. By making the preliminary potential constant, it becomes easy to supply the preliminary potential. In this case, the constant value is a middle value of a range of the signal potential. This causes the preliminary potential of a normally-black-mode liquid crystal display to be a black display potential. Further, the preliminary potential may be determined based on a signal potential supplied to a data signal line during the previous horizontal scanning period and a signal potential to be supplied to the data signal line during a current horizontal scanning period. This allows more effectively subduing variations in reached potential (charge ratio) during a current horizontal scanning period due to a difference in the levels of potentials supplied to the same data signal line during the previous horizontal scanning period.

The liquid crystal display of the present invention may be arranged such that one of the first data signal line and the second data signal line is provided at one side of the pixel column and the other of the first data signal line and the second data signal line is provided in such a manner as to overlap the pixel column. This configuration allows maintaining a wider distance between the data signal lines, compared with a configuration in which data signal lines for a pixel column are provided at both sides of the pixel column, respectively. This allows reducing the ratio of short-circuits between data signal lines, thereby increasing the yield ratio of products.

The liquid crystal display of the present invention may be arranged such that the simultaneously selected scanning signal lines are connected in a liquid crystal panel or connected with a same output of a gate driver for driving the scanning signal lines.

The liquid crystal display of the present invention may be arranged such that a display section includes a plurality of domains, and each of the plurality of domains includes data signal lines, scanning signal lines, and pixels, and the data signal lines, scanning signal lines, and the pixels included in each domain are driven with respect to said each domain.

The present arrangement is preferably applicable to a liquid crystal display in which the number of frames displayed per one second (e.g. the number of frames, the number of sub-frames, the number of fields) is more than 60 (e.g. a liquid crystal display with 120 frames/sec).

The liquid crystal display of the present invention may be arranged such that there are provided a plurality of retention capacitance lines whose potentials are controllable, each pixel includes a first transistor, a second transistor, a first pixel electrode, and a second pixel electrode, the first pixel electrode and the second pixel electrode are connected with a same data signal line via the first transistor and the second transistor, respectively, the first transistor and the second transistor are connected with a same scanning signal line, the first pixel electrode and the second pixel electrode form retention capacitances with different retention capacitance lines, respectively, a retention capacitance line is provided for adjacent two pixels in the pixel column, one of a first pixel electrode and a second pixel electrode of one of the adjacent two pixels and one of a first pixel electrode and a second pixel electrode of the other of the adjacent two pixels form retention capacitances with the retention capacitance line provided for the two pixels, retention capacitance lines that form retention capacitances with a first pixel electrode and a second pixel electrode in a first-positioned pixel positioned first among all the pixels are first-positioned and second-positioned retention capacitance lines, the second-positioned retention capacitance line also forms retention capacitance with one of a first pixel electrode and a second pixel electrode of a second-positioned pixel positioned second among all the pixels, and at a time of completion of writing of the first-positioned and second-positioned pixels or after the completion, potentials of the first-positioned and second-positioned retention capacitance lines shift simultaneously and in an opposite direction, between two successive odd-number-positioned retention capacitance lines counted in a scanning direction from the first-positioned retention capacitance line, shift of a potential of a former of the two successive odd-number-positioned retention capacitance lines is followed after 1 horizontal scanning period by shift of potential of a latter of the two successive odd-number-positioned retention capacitance lines in a same direction, and between two successive even-number-positioned retention capacitance lines, shift of a potential of a former of the two successive even-number-positioned retention capacitance lines is followed after 1 horizontal scanning period by shift of a potential of a latter of the two successive even-number-positioned retention capacitance lines in a same direction. For example, at the time of or after completion of writing of the first-positioned and second-positioned pixels, potentials of retention capacitance line signals supplied to the first-positioned and second-positioned retention capacitance lines are shifted simultaneously in an opposite direction, phases of retention capacitance line signals supplied to successive odd-number-positioned retention capacitance lines are delayed by one horizontal scanning period with respect to each of the successive odd-number-positioned retention capacitance lines sequentially from the first-positioned retention capacitance line, and phases of retention capacitance line signals supplied to successive even-number-positioned retention capacitance lines are delayed by one horizontal scanning period with respect to each of the successive even-number-positioned retention capacitance lines sequentially from the second-positioned retention capacitance line.
This allows easily configuring a liquid crystal display with a multi-pixel structure, in which the polarities of signal potentials supplied to the first and second data signal lines are different.

The liquid crystal display of the present invention may be arranged such that there are provided a plurality of retention capacitance lines whose potentials are controllable, each pixel includes a first transistor, a second transistor, a first pixel electrode, and a second pixel electrode, the first pixel electrode and the second pixel electrode are connected with a same data signal line via the first transistor and the second transistor, respectively, the first transistor and the second transistor are connected with a same scanning signal line, the first pixel electrode and the second pixel electrode form retention capacitances with different retention capacitance lines, respectively, a retention capacitance line is provided for adjacent two pixels in the pixel column, one of a first pixel electrode and a second pixel electrode of one of the adjacent two pixels and one of a first pixel electrode and a second pixel electrode of the other of the adjacent two pixels form retention capacitances with the retention capacitance line provided for the adjacent two pixels, retention capacitance lines that form retention capacitances with a first pixel electrode and a second pixel electrode in a first-positioned pixel positioned first among all the pixels are first-positioned and second-positioned retention capacitance lines, the second-positioned retention capacitance line also forms retention capacitance with one of a first pixel electrode and a second pixel electrode of a second-positioned pixel positioned second among all the pixels, and at a time of completion of writing of the first-positioned and second-positioned pixels or after the completion, potentials of the first-positioned and second-positioned retention capacitance lines shift simultaneously and in an opposite direction, when every successive two odd-number-positioned retention capacitance lines are paired based on counting in a scanning direction from the first-positioned retention capacitance line, potentials of two retention capacitance lines in each pair are shifted simultaneously in a same direction, and between adjacent two pairs, shift of potentials of retention capacitance lines in a pair at upstream side of a scanning direction is followed after 2 horizontal scanning periods by shift of potentials of retention capacitance lines in a pair at downstream side of the scanning direction, and when every successive two even-number-positioned retention capacitance lines are paired, potentials of two retention capacitance lines in each pair are shifted simultaneously in a same direction, and between adjacent two pairs, shift of potentials of retention capacitance lines in a pair at upstream side of a scanning direction is followed after 2 horizontal scanning periods by shift of potentials of retention capacitance lines in a pair at downstream side of the scanning direction. For example, at the time of or after completion of writing of the first-positioned and second-positioned pixels, potentials of retention capacitance line signals supplied to the first-positioned and second-positioned retention capacitance lines are shifted simultaneously in an opposite direction, phases of retention capacitance line signals supplied to successive odd-number-positioned retention capacitance lines are delayed by two horizontal scanning periods with respect to each of the successive odd-number-positioned retention capacitance lines sequentially from the first-positioned retention capacitance line, and phases of retention capacitance line signals supplied to successive even-number-positioned retention capacitance lines are delayed by two horizontal scanning periods with respect to each of the successive even-number-positioned retention capacitance lines sequentially from the second-positioned retention capacitance line.
This allows easily configuring a liquid crystal display with a multi-pixel structure, in which the polarities of signal potentials supplied to the first and second data signal lines are same. Further, in each pair, in synchronization with shift of the level of a potential of the former retention capacitance line in the pair, a potential of the latter retention capacitance line in the pair is shifted in the same direction. That is, two retention capacitance lines in each pair may be subject to the same potential control. Accordingly, it is possible for the retention capacitance lines in each pair to share the same signal (Cs signal) supplied thereto. This allows simplification of a control circuit for retention capacitance lines.

A method of the present invention for driving a liquid crystal display is a method for driving a liquid crystal display having pixels aligned in a row direction and a column direction, the row direction being a direction in which scanning signal lines are extended, the liquid crystal display comprising pixel columns, first data signal lines, and second data signal lines, a first data signal line and a second data signal line being provided for each pixel column, one pixel included in the pixel column being connected with a scanning signal line and one of the first data signal line and the second data signal line, in a case where a predetermined pixel in the pixel column is regarded as a first-positioned pixel from which counting of a pixel starts, an odd-number-positioned pixel and an even-number-positioned pixel in a scanning direction are paired, n (n is a natural number) pairs are regarded as a group, and each group is given a count number, each group being configured such that two pixels in each pair are connected with different data signal lines and each odd-number-positioned pixel is connected with one data signal line, and in two groups with successive count numbers, an odd-number-positioned pixel in one group and an odd-number-positioned pixel in the other group being connected with different data signal lines, the method comprising the steps of: supplying signal potentials with opposite polarities to the first data signal line and the second data signal line, respectively, inverting a polarity of a signal potential supplied to a data signal line with respect to n horizontal scanning period, selecting a group according to the count number, and performing simultaneous selection of scanning signal lines respectively connected with two pixels in a pair in the selected group, whereby when n is 2 or more, the simultaneous selection is sequentially performed with respect to each pair.

A method of the present invention for driving a liquid crystal display is a method for driving a liquid crystal display having pixels aligned in a row direction and a column direction, the row direction being a direction in which scanning signal lines are extended, the liquid crystal display comprising pixel columns, first data signal lines, and second data signal lines, a first data signal line and a second data signal line being provided for each pixel column, one pixel included in the pixel column being connected with a scanning signal line and one of the first data signal line and the second data signal line, in a case where a predetermined pixel in the pixel column is regarded as a first pixel from which counting of a pixel starts, an odd-number-positioned pixel and an even-number-positioned pixel counted in a scanning direction are paired, and each pair is given a count number, two pixels in a pair being connected with different data signal lines, and an odd-number-positioned pixel in one of two pairs with successive count numbers and an odd-number-positioned pixel in the other of the two pairs with successive count numbers being connected with a same data signal line, the method comprising the steps of: supplying signal potentials with opposite polarities to the first data signal line and the second data signal line, respectively, inverting a polarity of a signal potential supplied to each data signal line with respect to each vertical scanning period, and simultaneously selecting scanning signal lines that are respectively connected with two pixels in a pair according to the count number with respect to each pair.

A method of the present invention for driving a liquid crystal display is a method for driving a liquid crystal display having pixels aligned in a row direction and a column direction, the row direction being a direction in which scanning signal lines are extended, the liquid crystal display comprising pixel columns, first data signal lines, and second data signal lines, a first data signal line and a second data signal line being provided for each pixel column, one pixel included in the pixel column being connected with a scanning signal line and one of the first data signal line and the second data signal line, in a case where a predetermined pixel in the pixel column is regarded as a first pixel from which counting of pixel starts, two odd-number-positioned pixels counted in a scanning direction are paired and two even-number-positioned pixels counted in the scanning direction are paired, and a group including n (n is a natural number) pair consisting of two odd-number-positioned pixels and a group including n (n is a natural number) pair consisting of two even-number-positioned pixels are alternately given count numbers, two pixels in a pair are connected with different data signal lines, the method comprising the steps of: supplying signal potentials with opposite polarities to the first data signal line and the second data signal line, respectively, inverting a polarity of a signal potential supplied to a data signal line with respect to n (n is a natural number) horizontal scanning period, selecting a group according to the count number, and performing simultaneous selection of scanning signal lines respectively connected with two pixels in a pair in the selected group, whereby when n is 2 or more, the simultaneous selection is sequentially performed with respect to each pair.

A television receiver of the present invention includes the above-described liquid crystal display, and a tuner section for receiving television broadcasting.

As described above, the liquid crystal display of the present invention allows reducing flickers by dot-inverting individual pixels and at the same time lengthens one horizontal scanning period by simultaneously selecting two scanning signal lines so that a time for charging a pixel is increased.

### Brief Description of Drawings

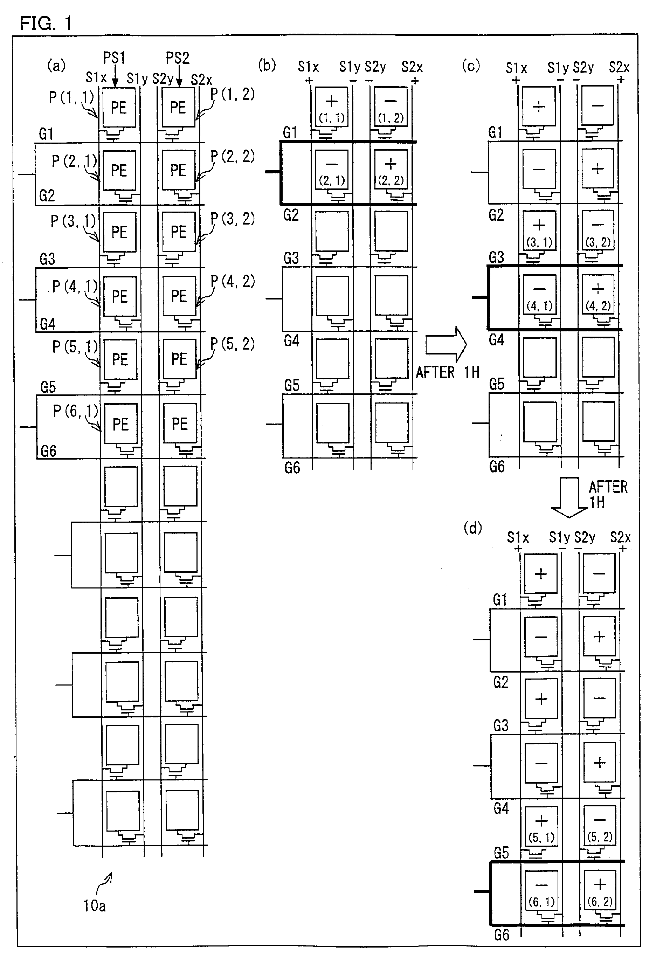

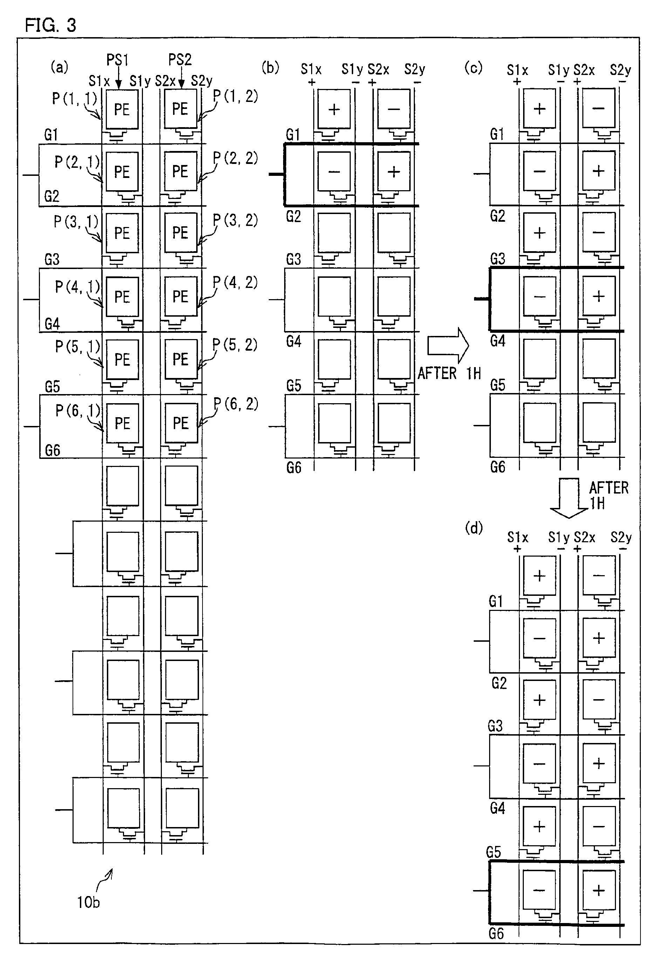

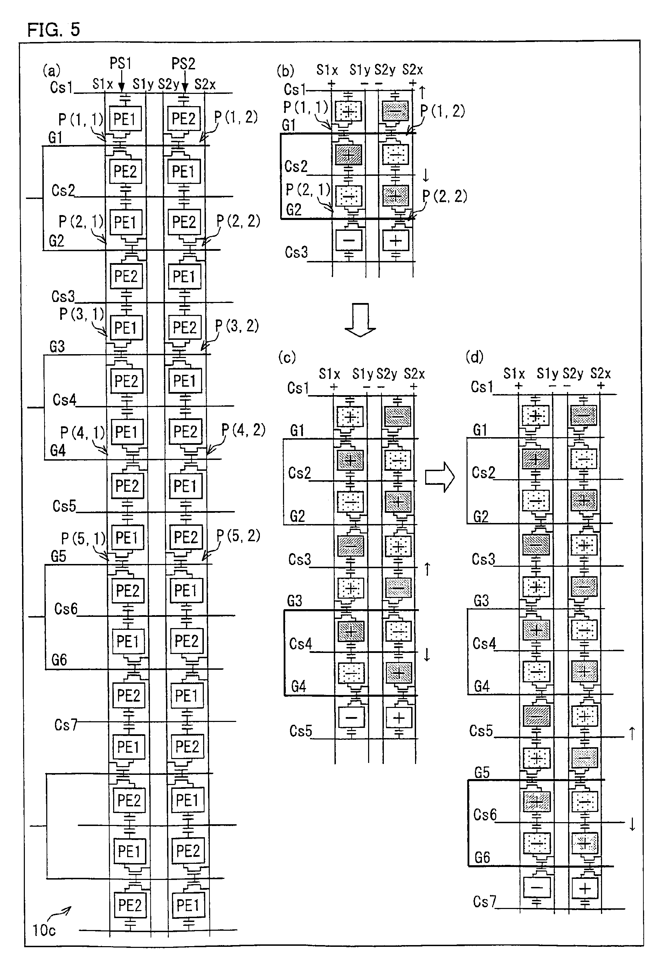

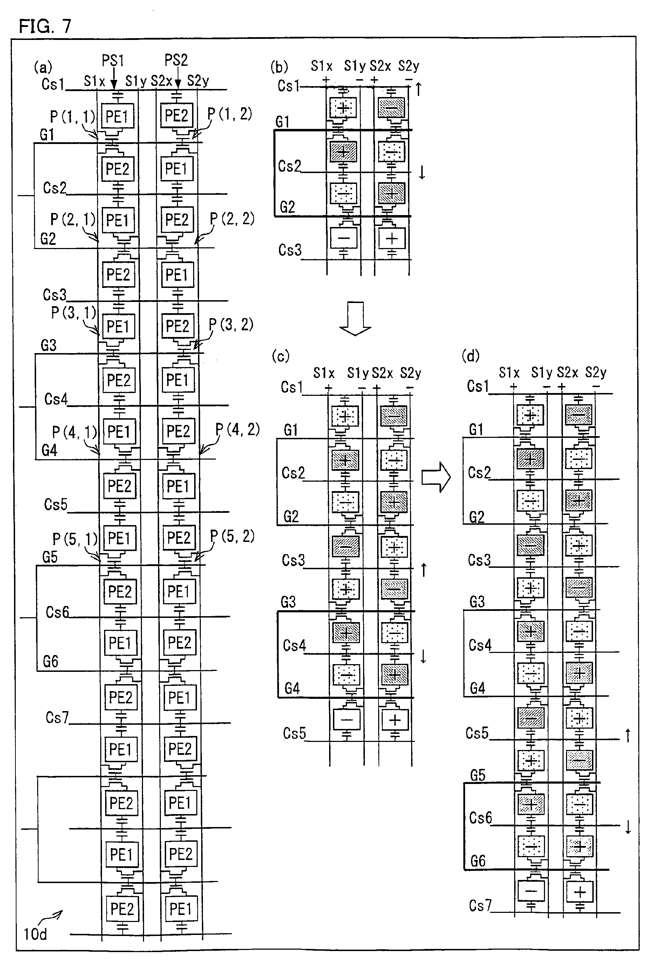

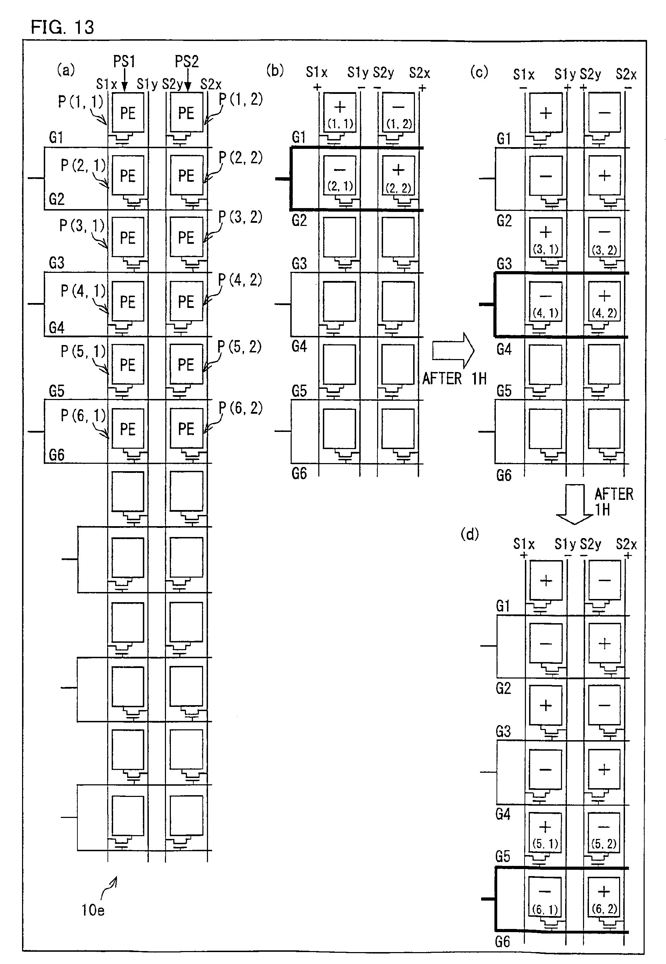

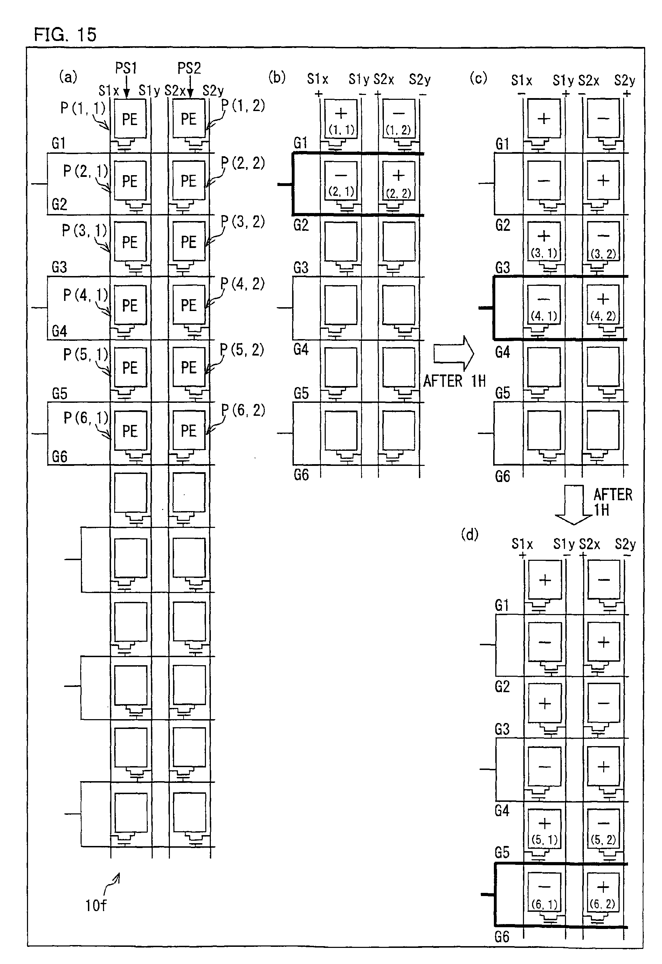

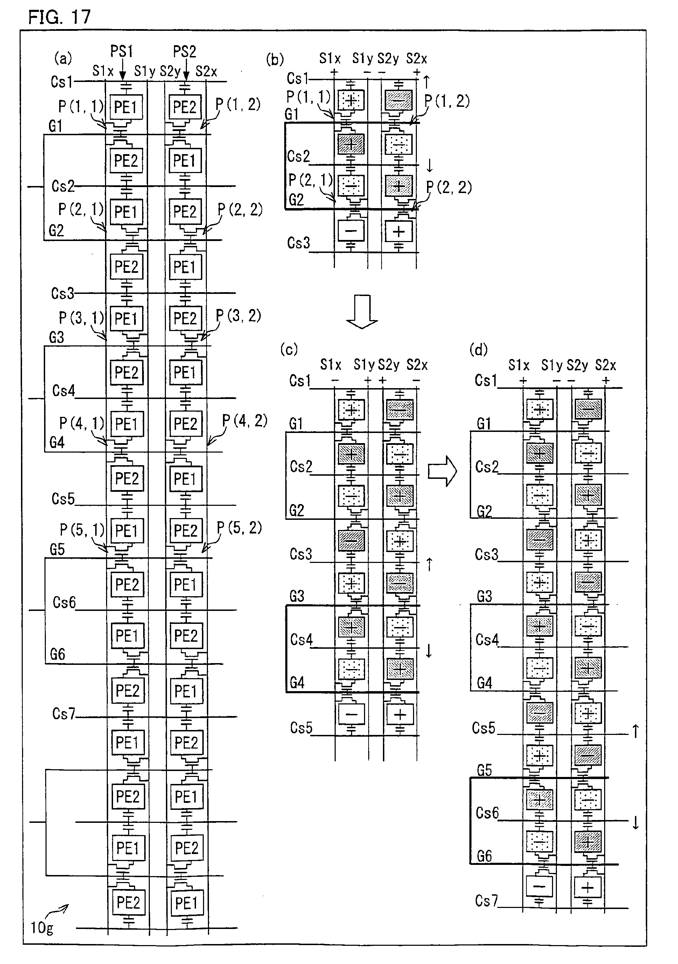

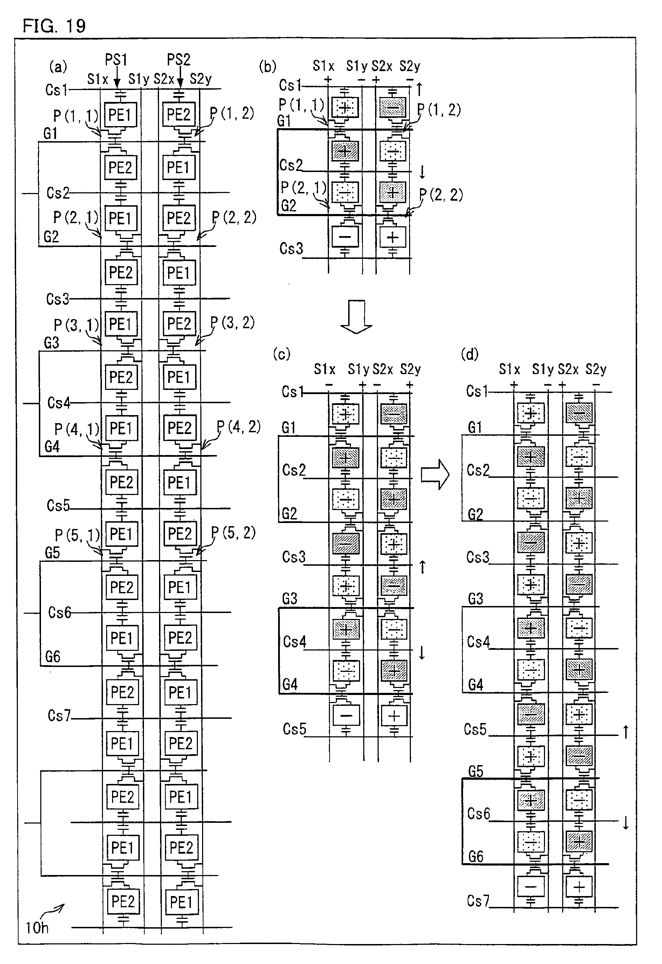

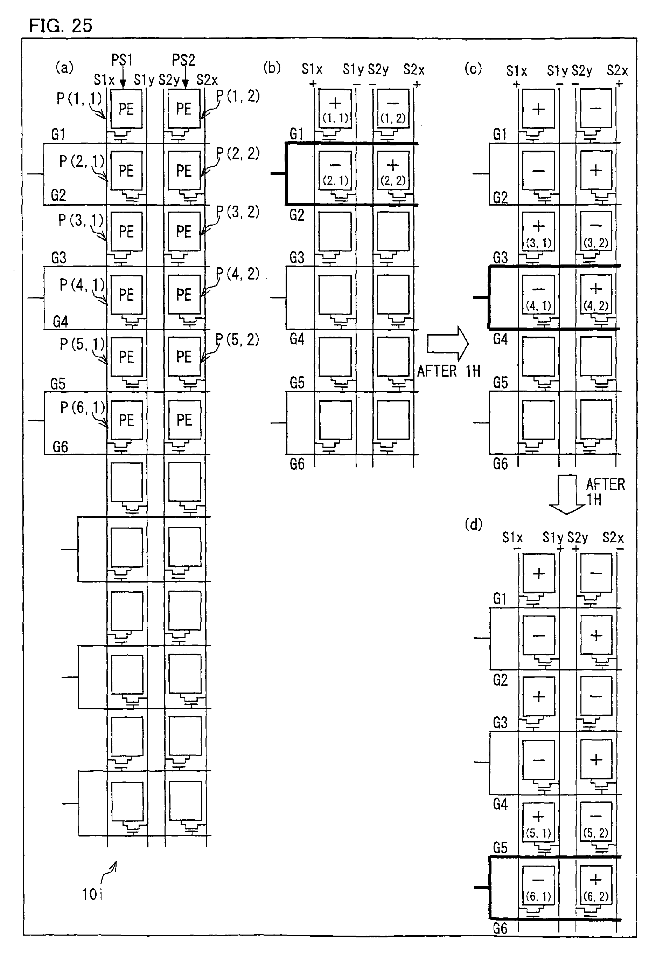

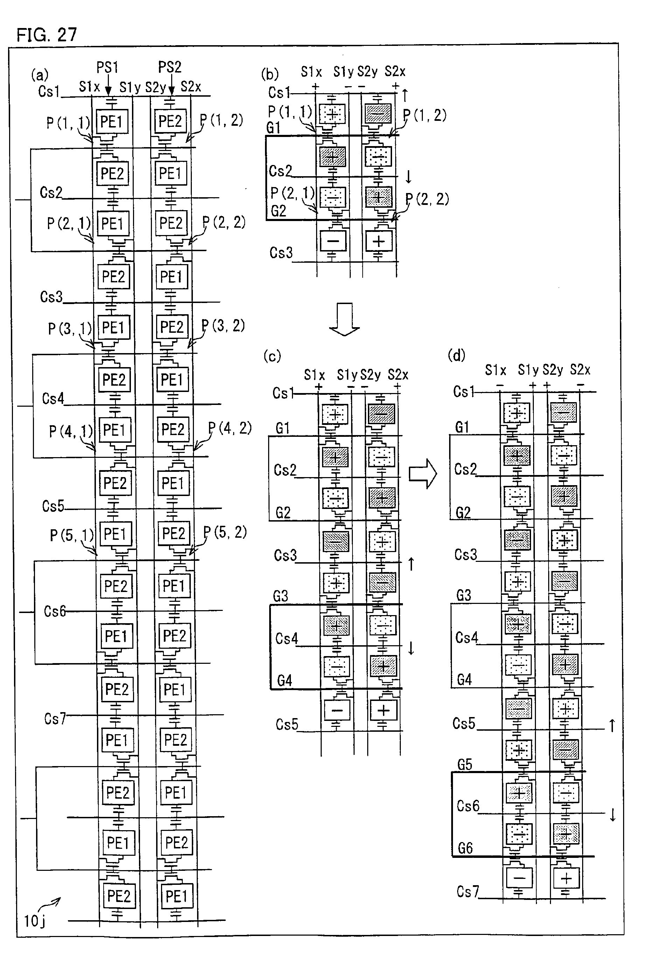

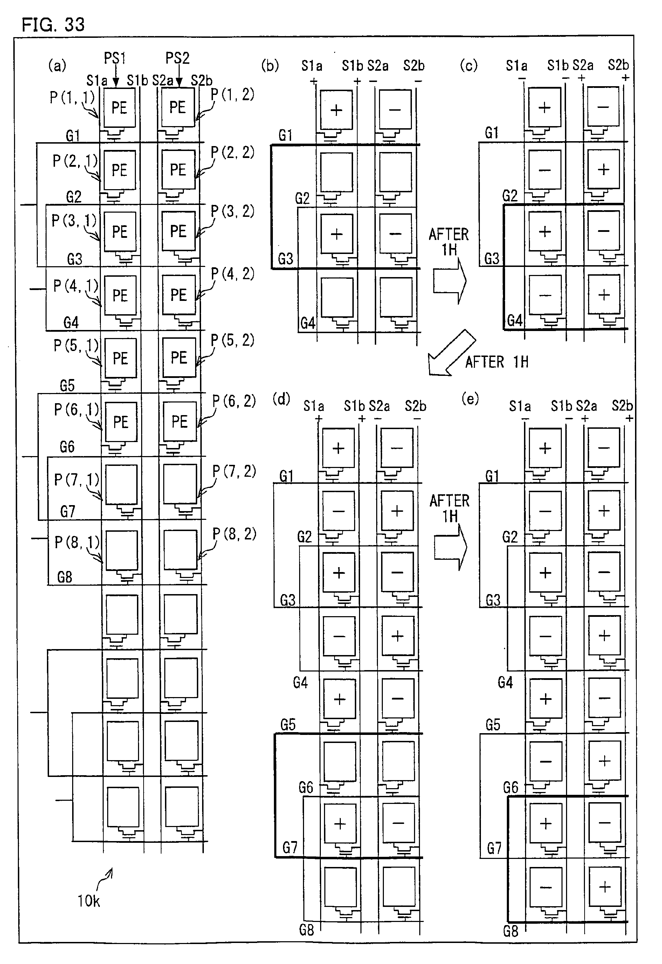

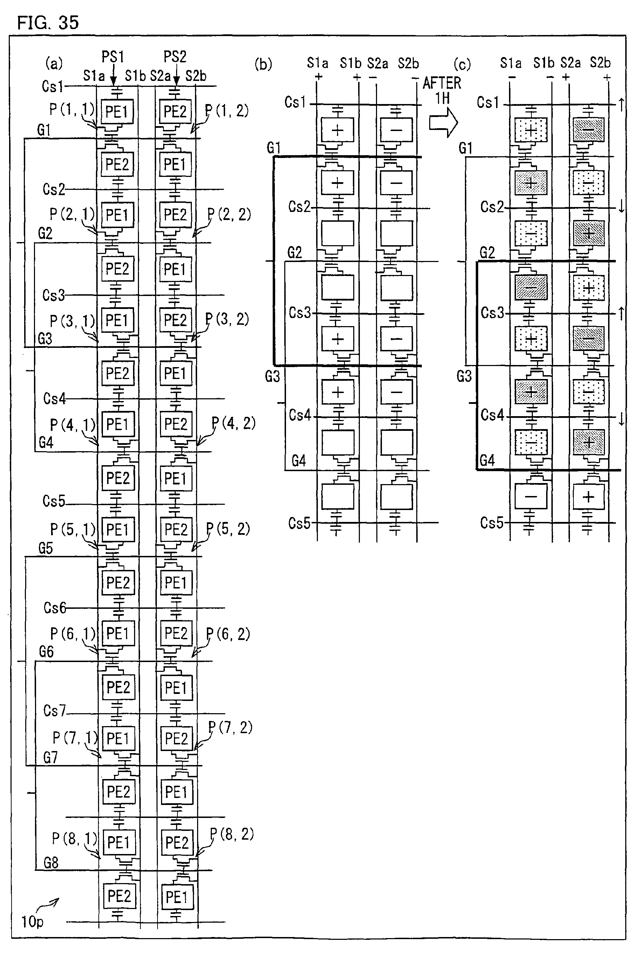

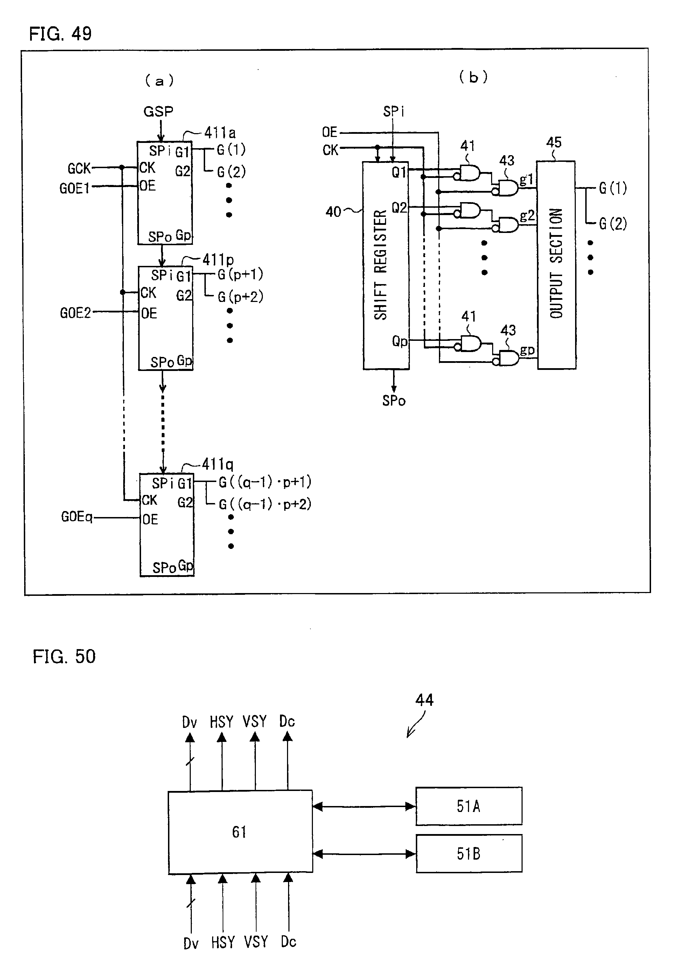

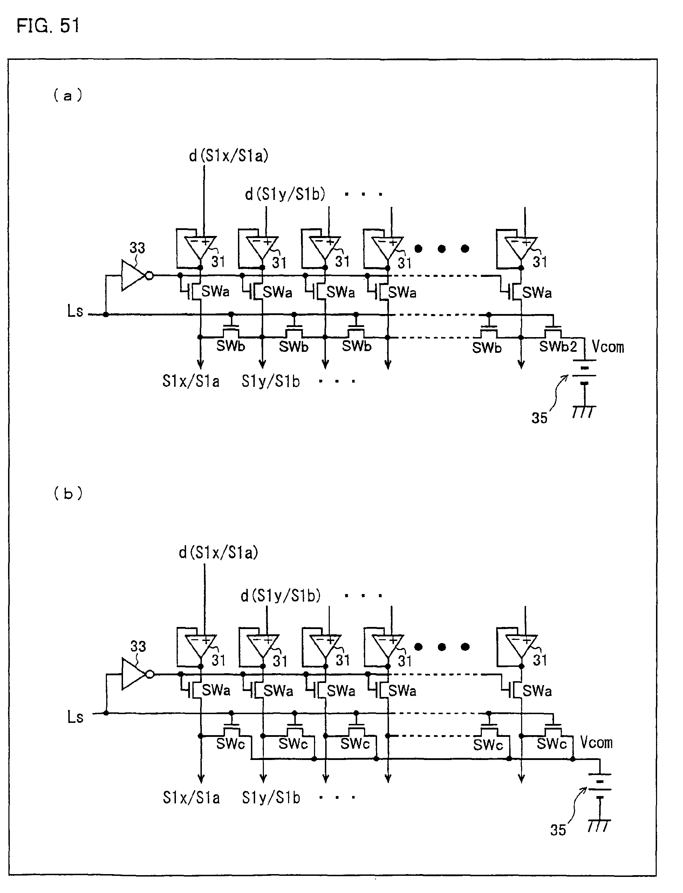

Fig. 1
   (a) of Fig. 1 is a drawing schematically showing a display section of a liquid crystal display in accordance with Embodiment 1. (b) to (d) of Fig. 1 are drawings showing how to drive the display section.
Fig. 2

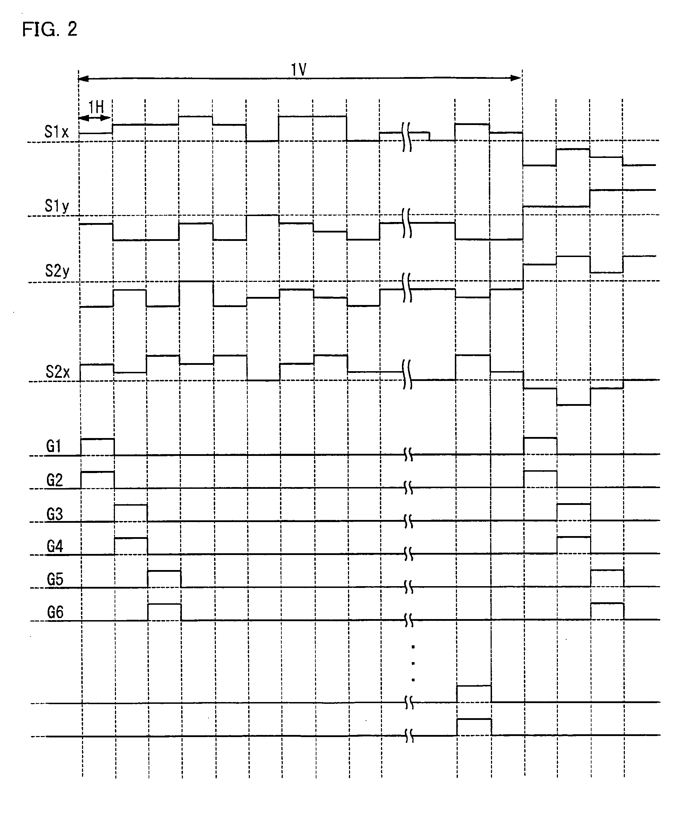

   Fig. 2 is a timing chart showing how to drive the display section shown in (a) of Fig. 1.
Fig. 3
   (a) of Fig. 3 is a drawing schematically showing a display section of another liquid crystal display in accordance with Embodiment 2. (b) to (d) of Fig. 3 are drawings showing how to drive the display section.
Fig. 4

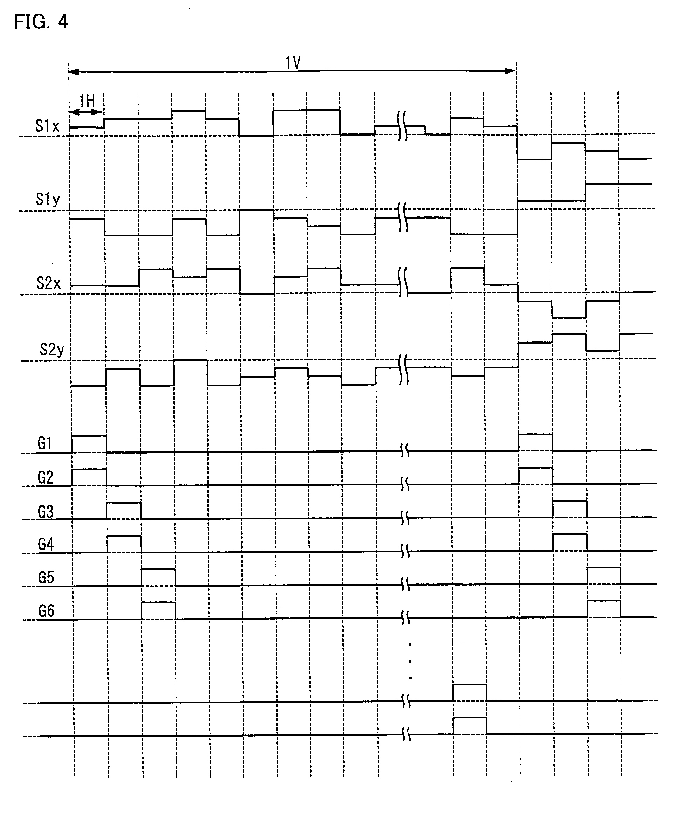

   Fig. 4 is a timing chart showing how to drive the display section shown in (a) of Fig. 3.
Fig. 5
   (a) of Fig. 5 is a drawing schematically showing a display section of still another liquid crystal display in accordance with Embodiment 2. (b) to (d) of Fig. 5 are drawings showing how to drive the display section.
Fig. 6

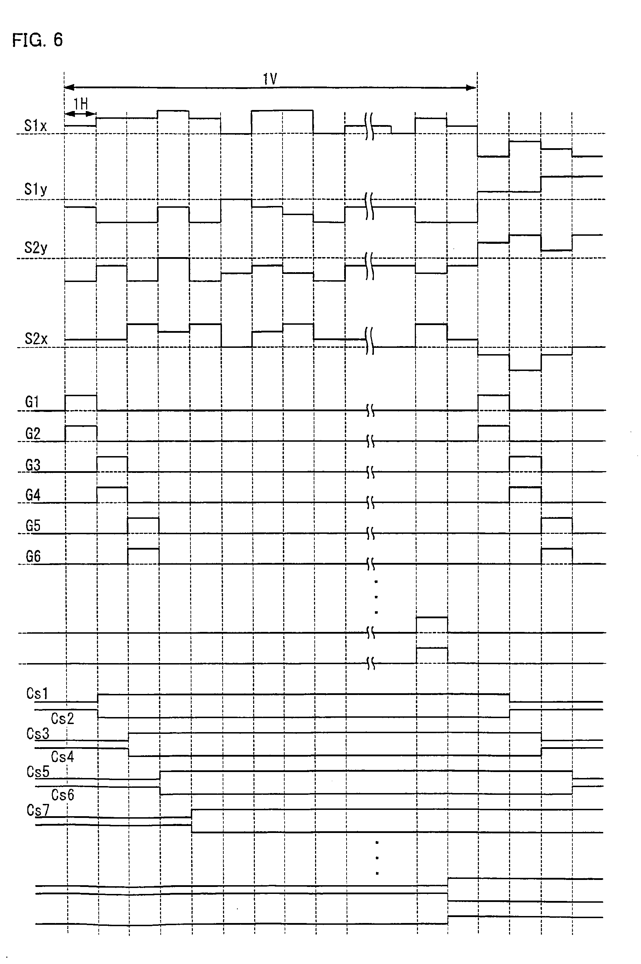

   Fig. 6 is a timing chart showing how to drive the display section shown in (a) of Fig. 5.
Fig. 7
   (a) of Fig. 7 is a drawing schematically showing a display section of further another liquid crystal display in accordance with Embodiment 2. (b) to (d) of Fig. 7 are drawings showing how to drive the display section.
Fig. 8

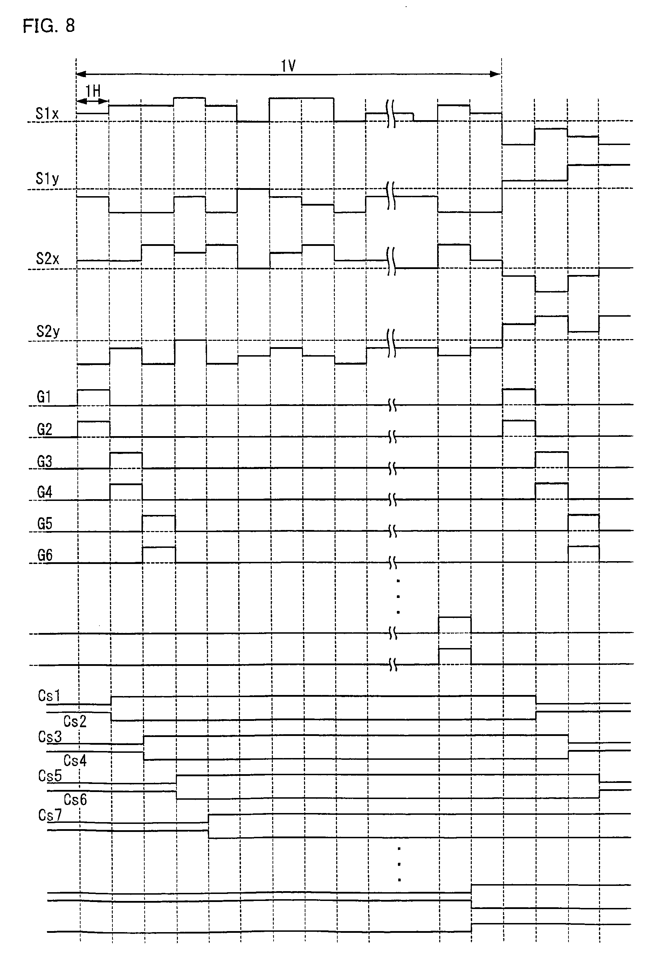

   Fig. 8 is a timing chart showing how to drive the display section shown in (a) of Fig. 7.
Fig. 9

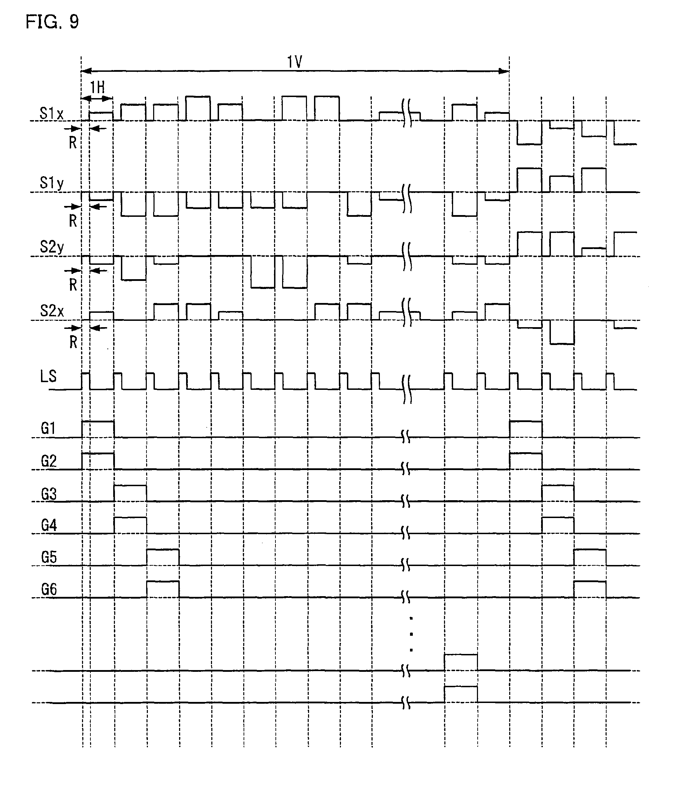

   Fig. 9 is a timing chart showing another way of how to drive the display section shown in (a) of Fig. 1.
Fig. 10

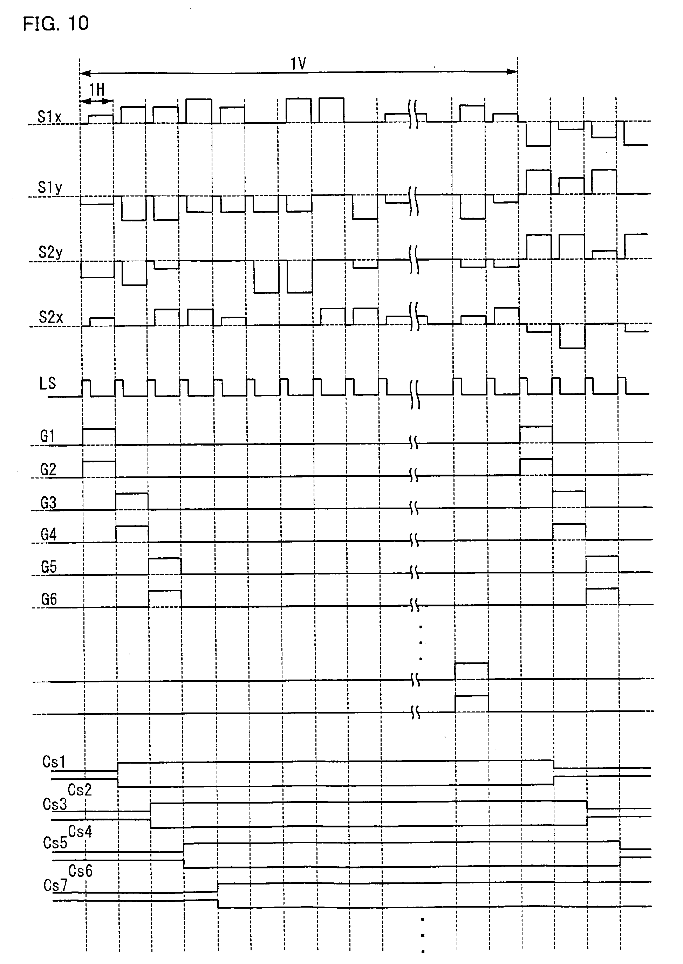

   Fig. 10 is a timing chart showing another way of how to drive the display section shown in (a) of Fig. 5.
Fig. 11

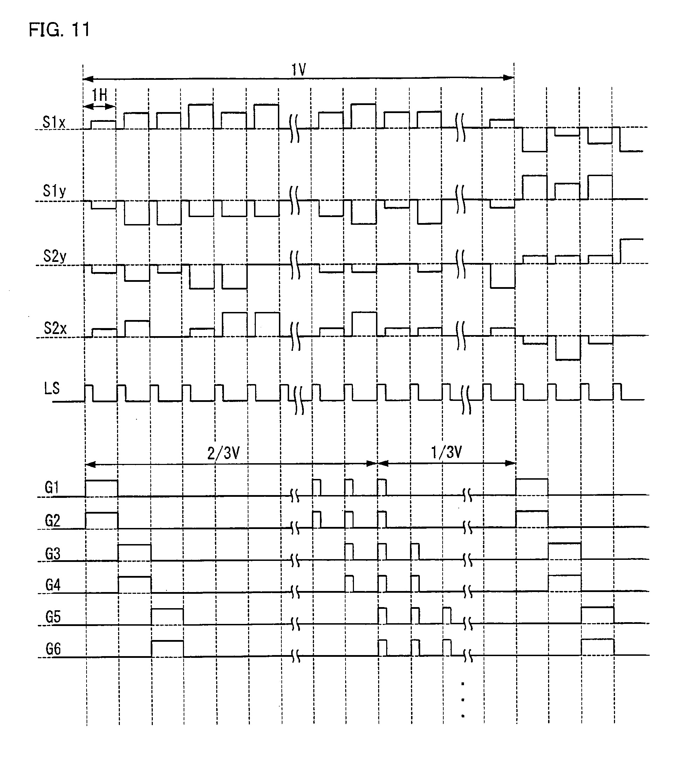

   Fig. 11 is a timing chart showing still another way of how to drive the display section shown in (a) of Fig. 1.
Fig. 12

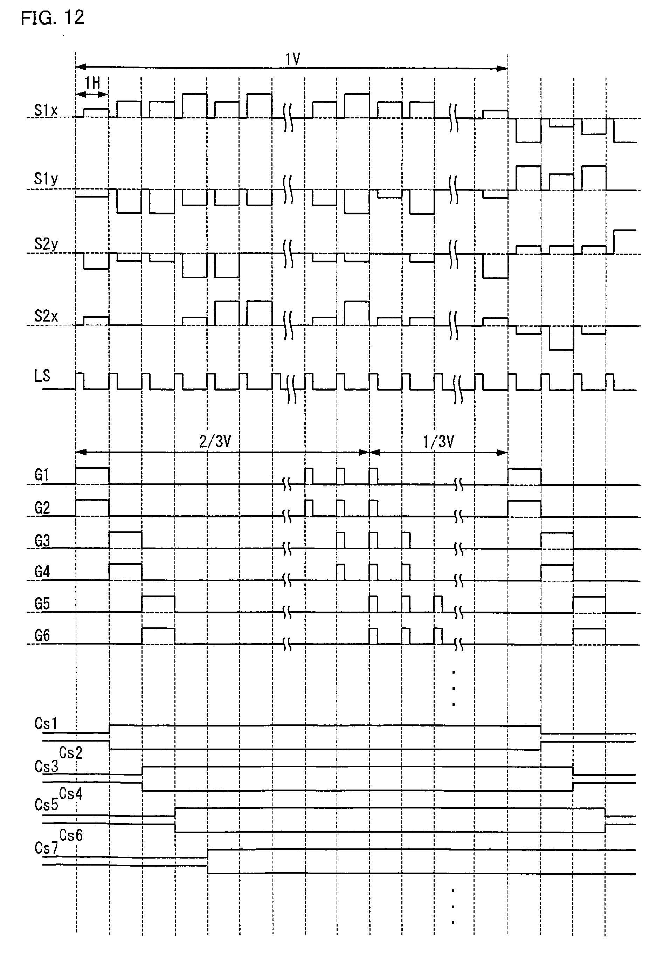

   Fig. 12 is a timing chart showing still another way of how to drive the display section shown in (a) of Fig. 5.
Fig. 13
   (a) of Fig. 13 is a drawing schematically showing a display section of a liquid crystal display in accordance with Embodiment 2. (b) to (d) of Fig. 13 are drawings showing how to drive the display section.
Fig. 14

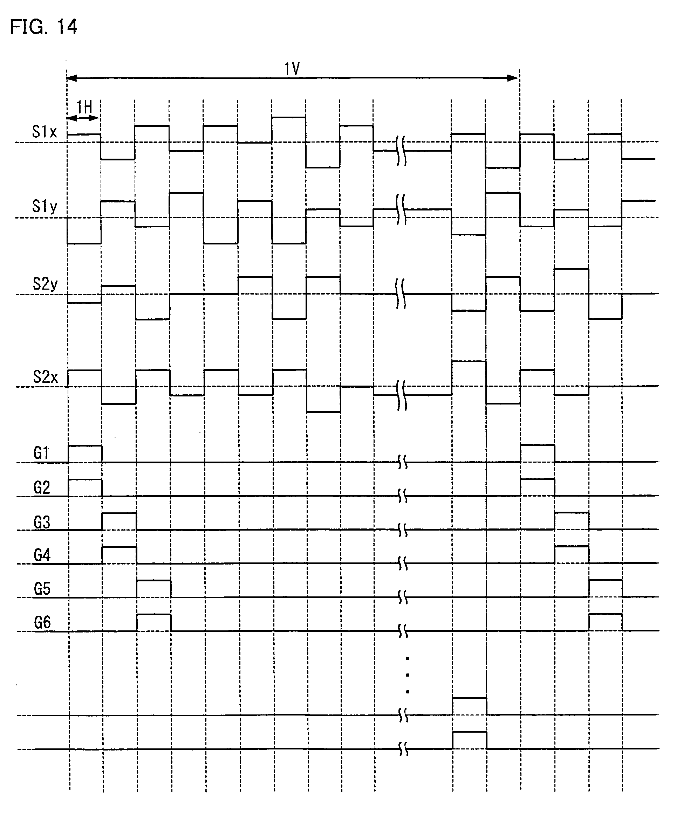

   Fig. 14 is a timing chart showing how to drive the display section shown in (a) of Fig. 13.
Fig. 15
   (a) of Fig. 15 is a drawing schematically showing another display section of the liquid crystal display in accordance with Embodiment 2. (b) to (d) of Fig. 15 are drawings showing how to drive the display section.
Fig. 16

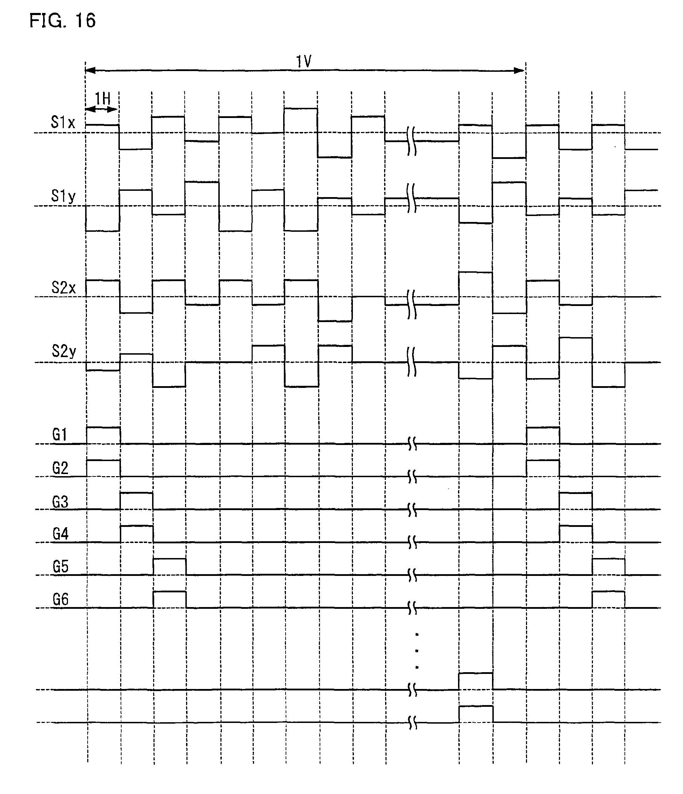

   Fig. 16 is a timing chart showing how to drive the display section shown in (a) of Fig. 15.
Fig. 17
   (a) of Fig. 17 is a drawing schematically showing still another display section of a liquid crystal display in accordance with Embodiment 2. (b) to (d) of Fig. 17 are drawings showing how to drive the display section.
Fig. 18

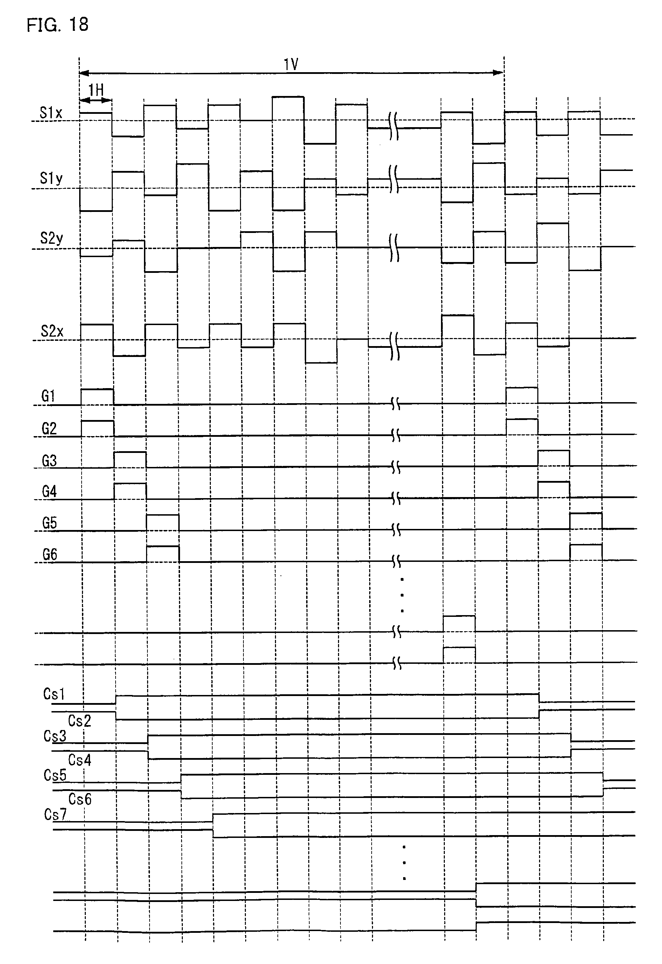

   Fig. 18 is a timing chart showing how to drive the display section shown in (a) of Fig. 17.
Fig. 19
   (a) of Fig. 19 is a drawing schematically showing a display section of further another liquid crystal display in accordance with Embodiment 2. (b) to (d) of Fig. 19 are drawings showing how to drive the display section.
Fig. 20

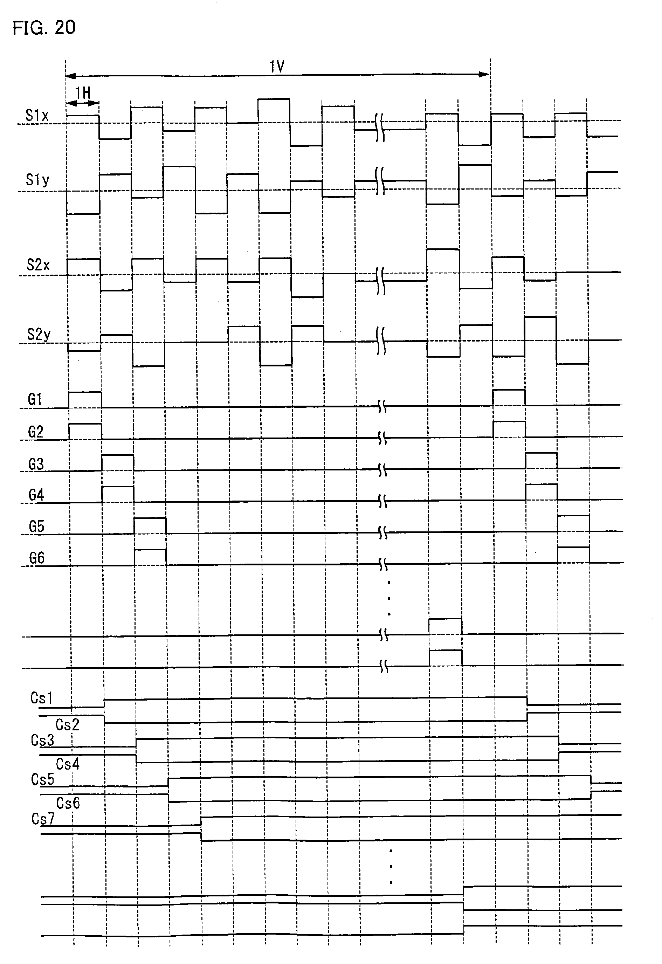

   Fig. 20 is a timing chart showing how to drive the display section shown in (a) of Fig. 19.
Fig. 21

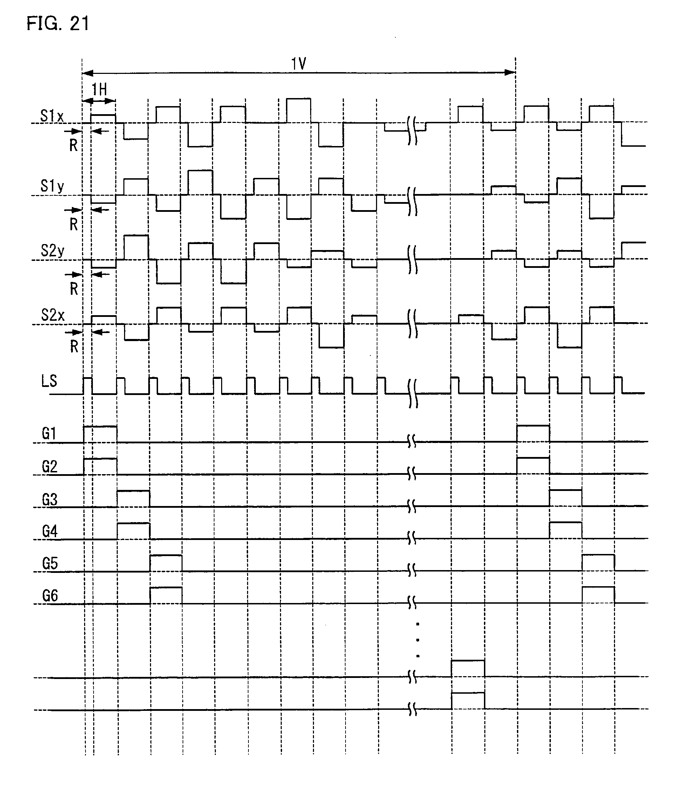

   Fig. 21 is a timing chart showing another way of how to drive the display section shown in (a) of Fig. 13.
Fig. 22

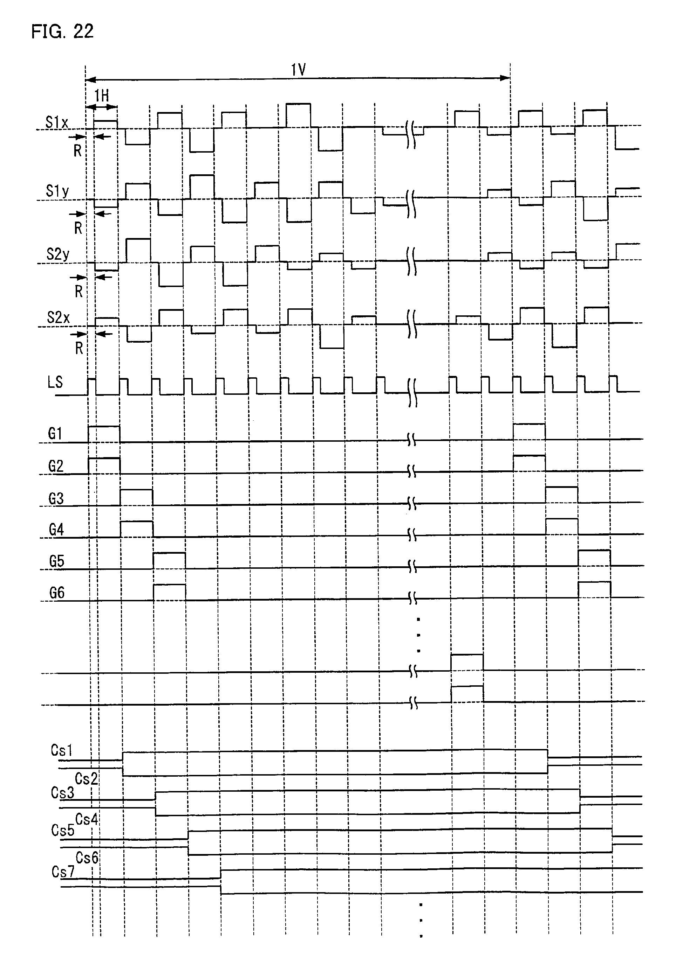

   Fig. 22 is a timing chart showing another way of how to drive the display section shown in (a) of Fig. 17.
Fig. 23

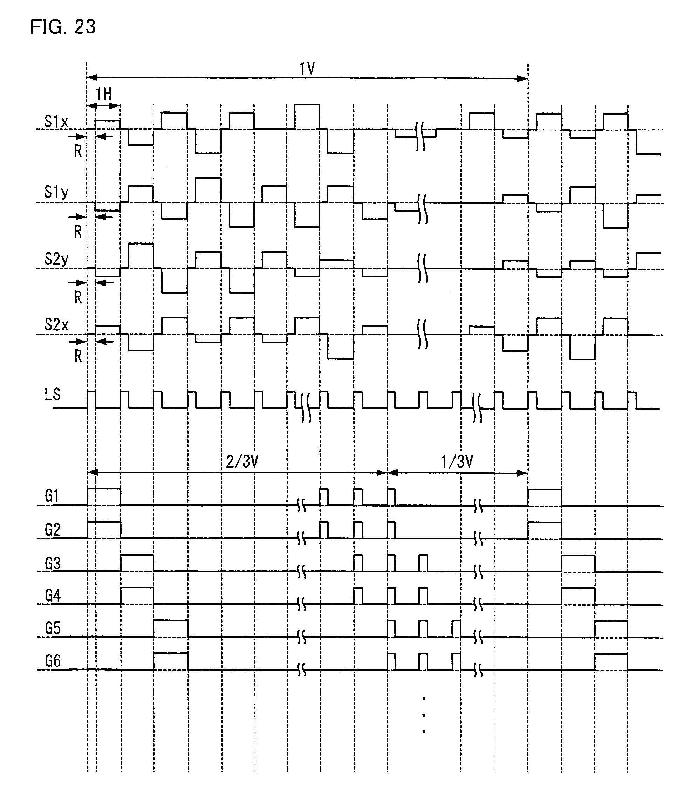

   Fig. 23 is a timing chart showing still another way of how to drive the display section shown in (a) of Fig. 13.
Fig. 24

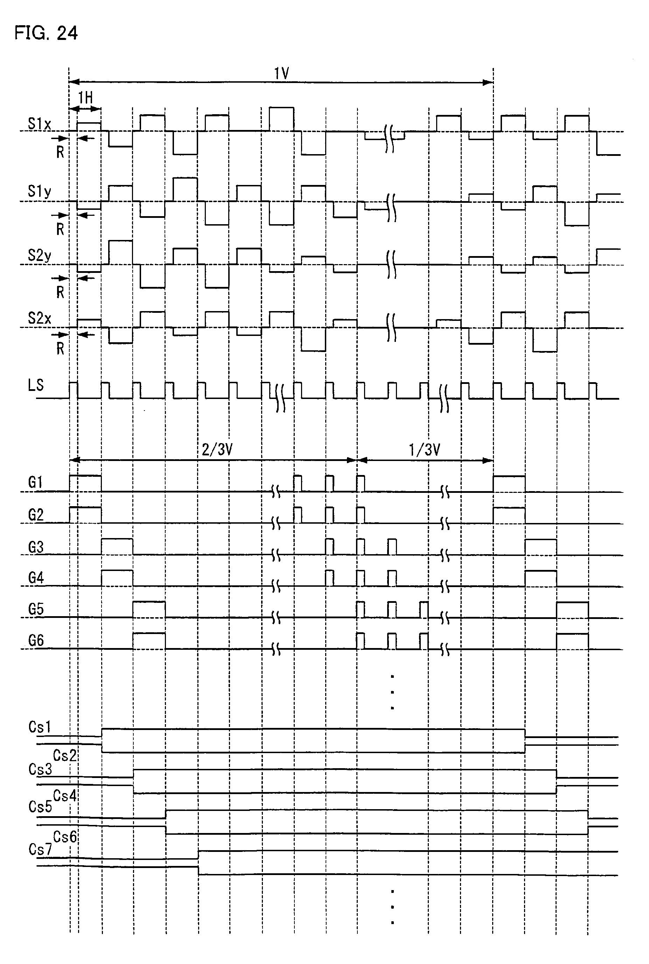

   Fig. 24 is a timing chart showing still another way of how to drive the display section shown in (a) of Fig. 17.
Fig. 25
   (a) of Fig. 25 is a drawing schematically showing a display section of a liquid crystal display in accordance with Embodiment 3. (b) to (d) of Fig. 25 are drawings showing how to drive the display section.
Fig. 26

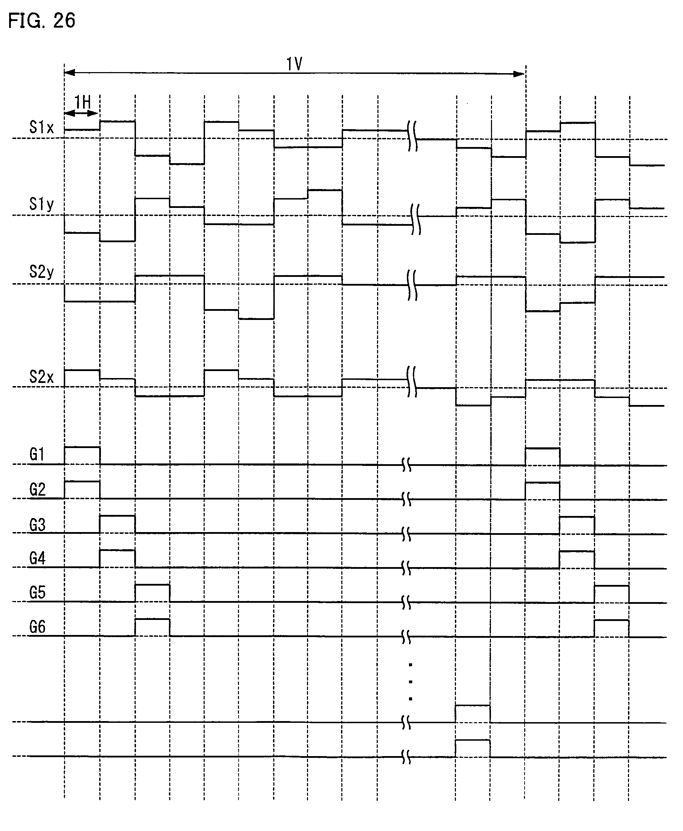

   Fig. 26 is a timing chart showing how to drive the display section shown in (a) of Fig. 25.
Fig. 27
   (a) of Fig. 27 is a drawing schematically showing a display section of another liquid crystal display in accordance with Embodiment 3. (b) to (d) of Fig. 27 are drawings showing how to drive the display section.
Fig. 28

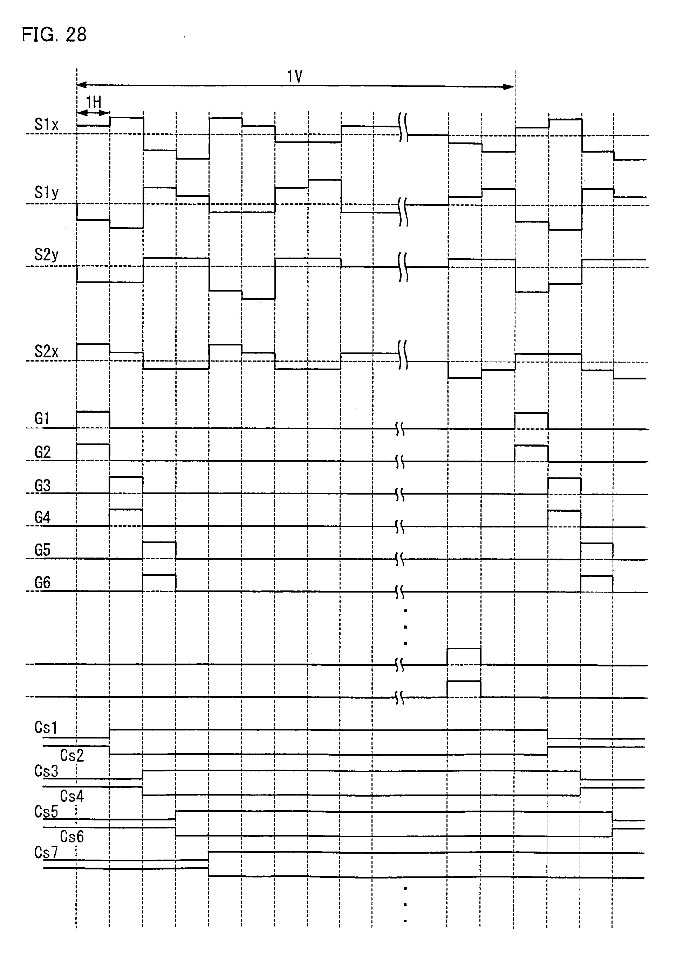

   Fig. 28 is a timing chart showing how to drive the display section shown in (a) of Fig. 27.
Fig. 29

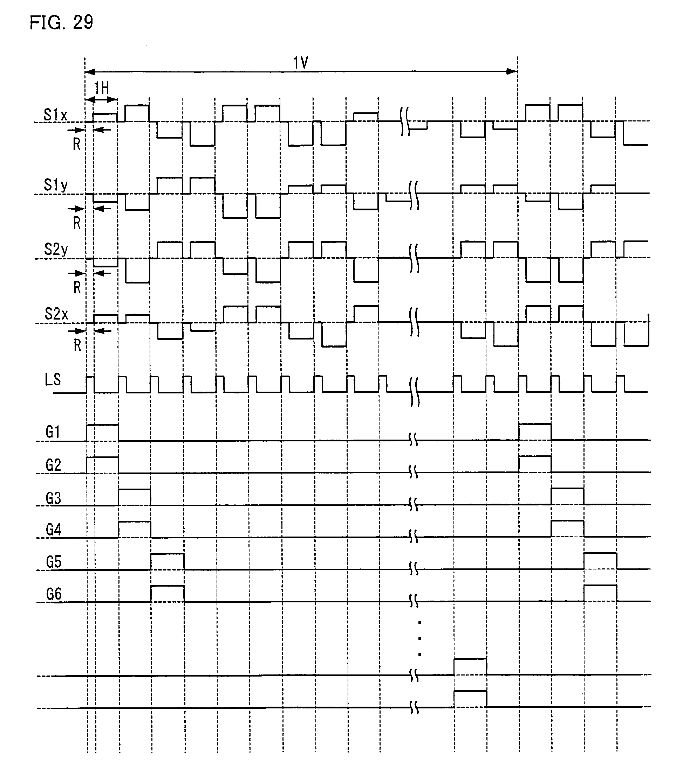

   Fig. 29 is a timing chart showing another way of how to drive the display section shown in (a) of Fig. 25.
Fig. 30

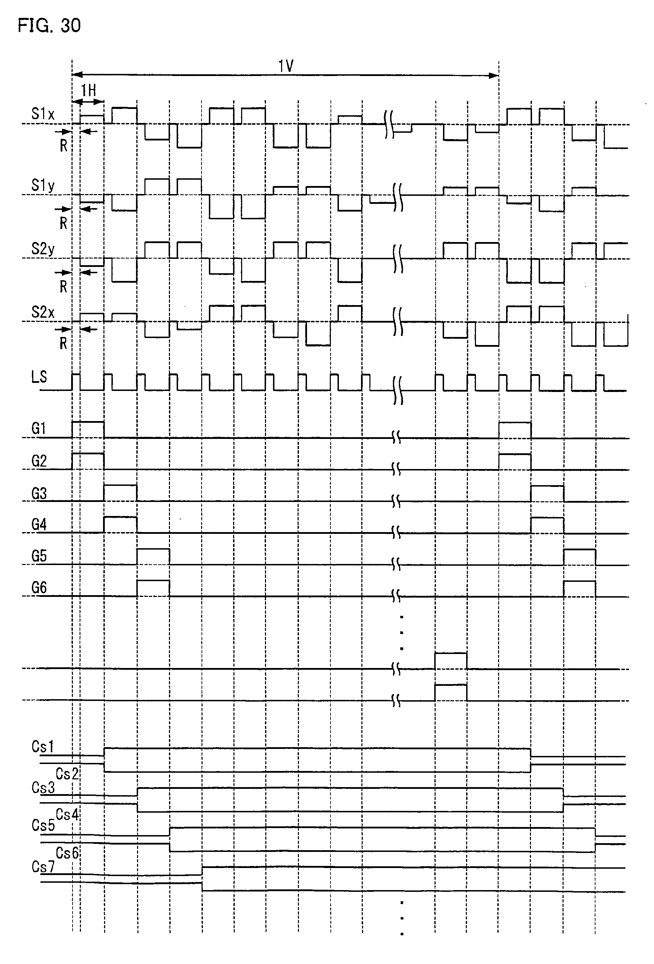

   Fig. 30 is a timing chart showing another way of how to drive the display section shown in (a) of Fig. 27.
Fig. 31

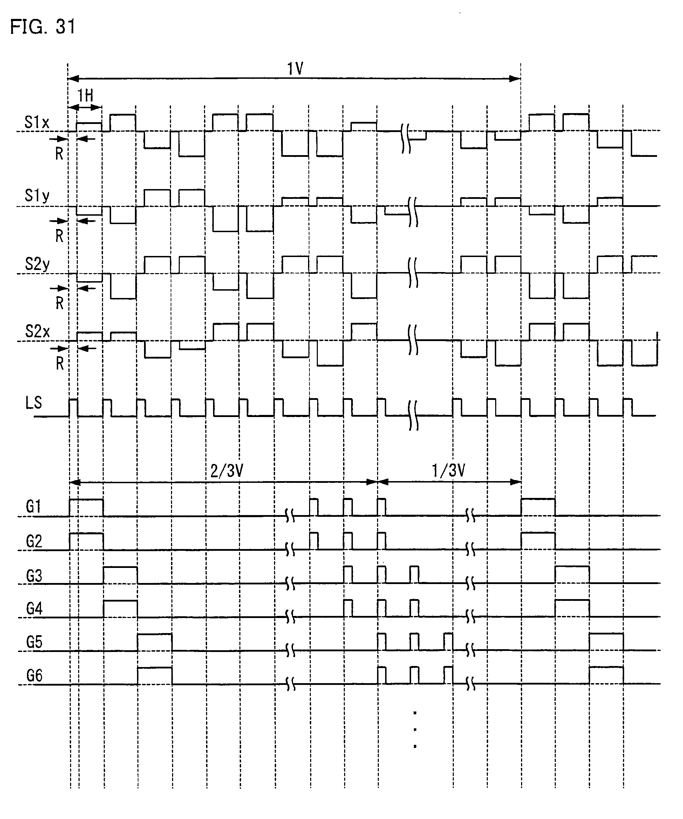

   Fig. 31 is a timing chart showing still another way of how to drive the display section shown in (a) of Fig. 31.
Fig. 32

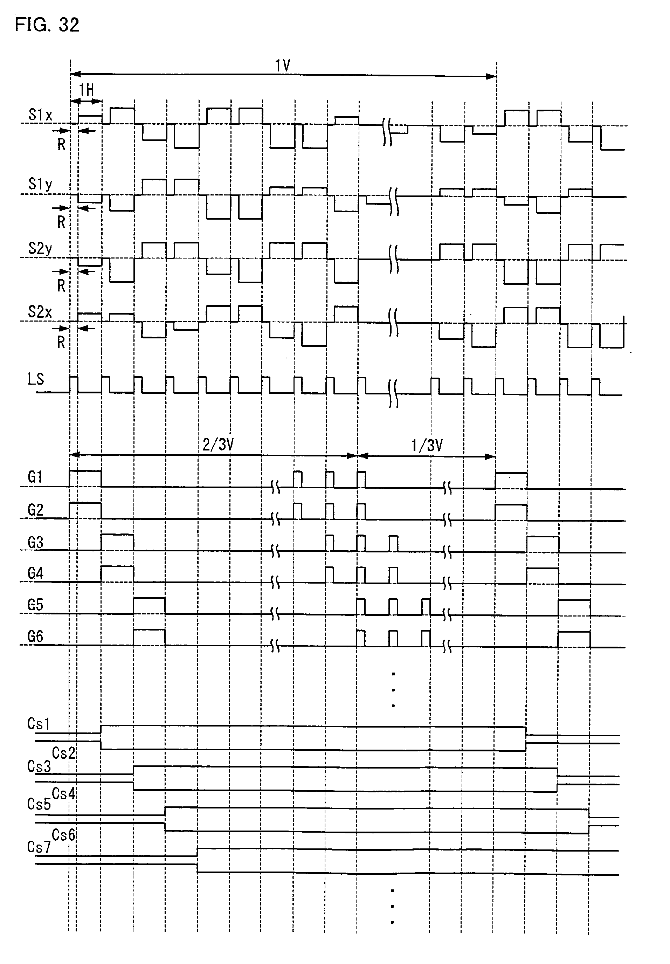

   Fig. 32 is a timing chart showing still another way of how to drive the display section shown in (a) of Fig. 27.
Fig. 33
   (a) of Fig. 33 is a drawing schematically showing a display section of a liquid crystal display in accordance with Embodiment 4. (b) to (d) of Fig. 33 are drawings showing how to drive the display section.
Fig. 34

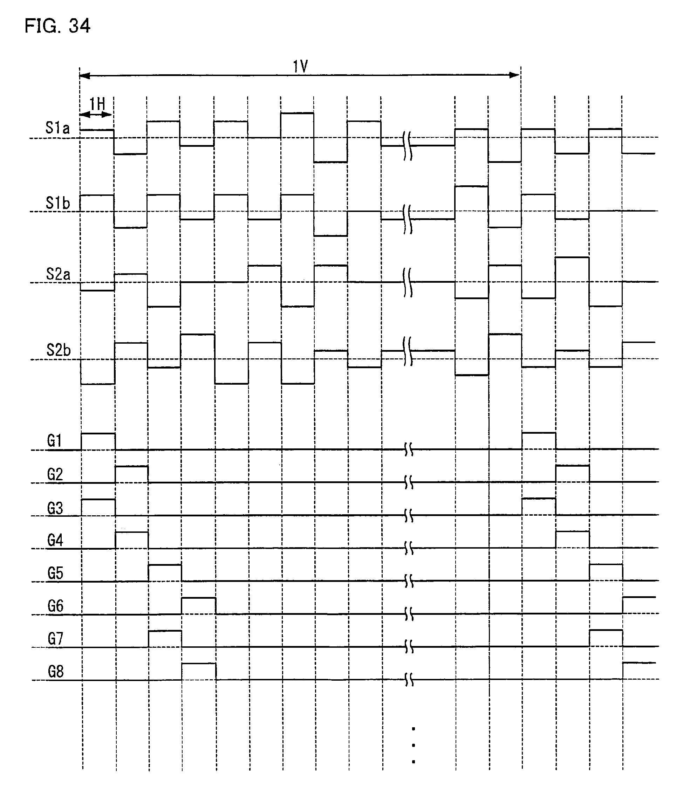

   Fig. 34 is a timing chart showing how to drive the display section shown in (a) of Fig. 33.
Fig. 35
   (a) of Fig. 35 is a drawing schematically showing a display section of another liquid crystal display in accordance with Embodiment 4. (b) to (d) of Fig. 35 are drawings showing how to drive the display section.
Fig. 36

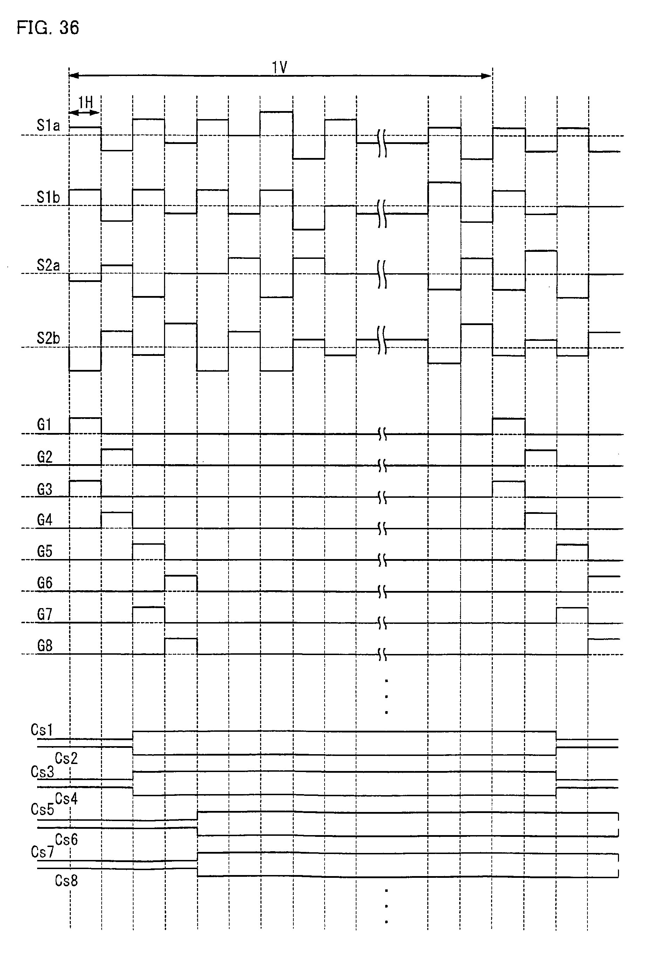

   Fig. 36 is a timing chart showing how to drive the display section shown in (a) of Fig. 35.
Fig. 37

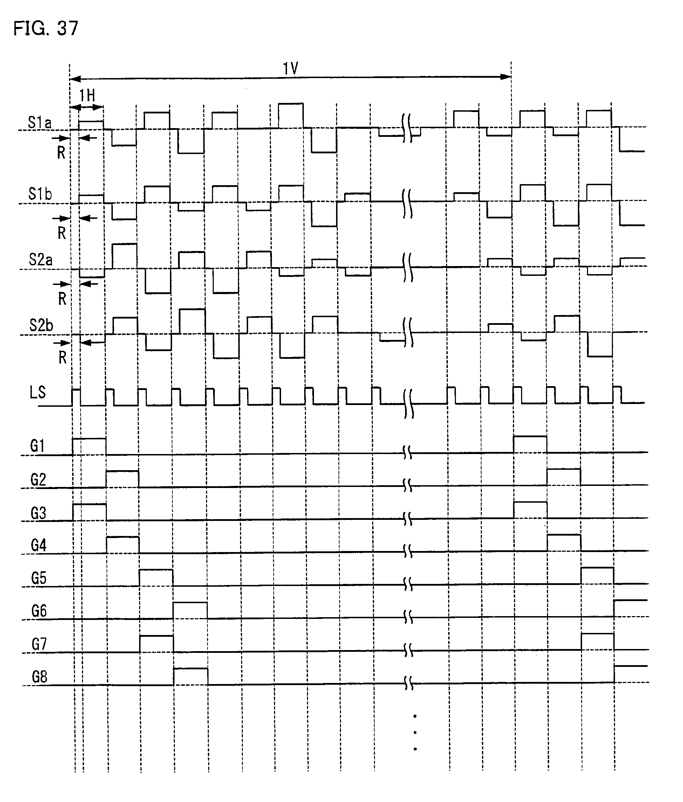

   Fig. 37 is a timing chart showing another way of how to drive the display section shown in (a) of Fig. 33.
Fig. 38

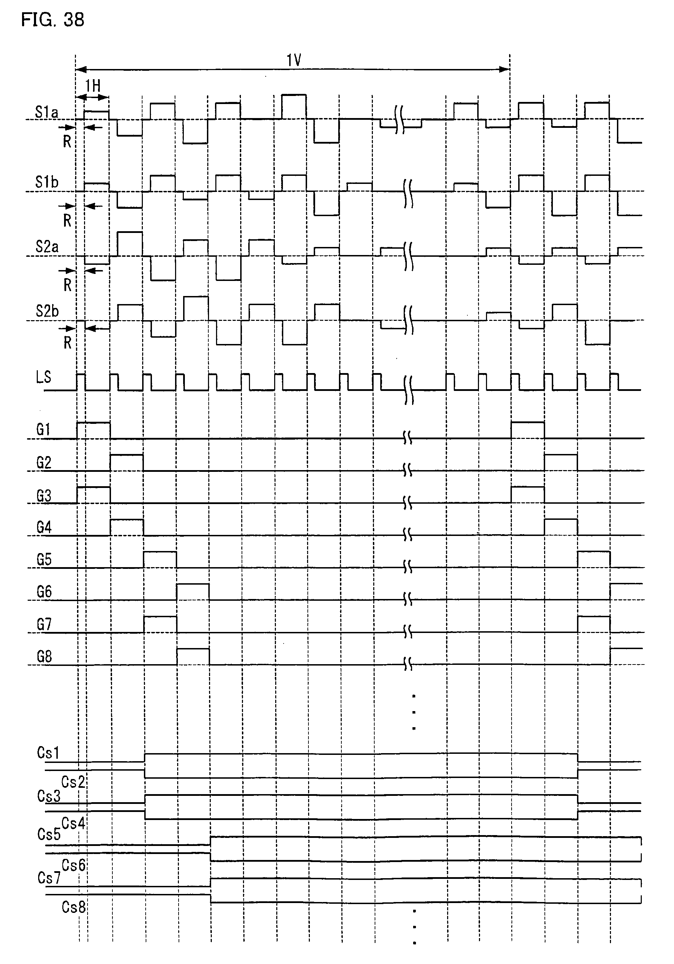

   Fig. 38 is a timing chart showing another way of how to drive the display section shown in (a) of Fig. 35.
Fig. 39

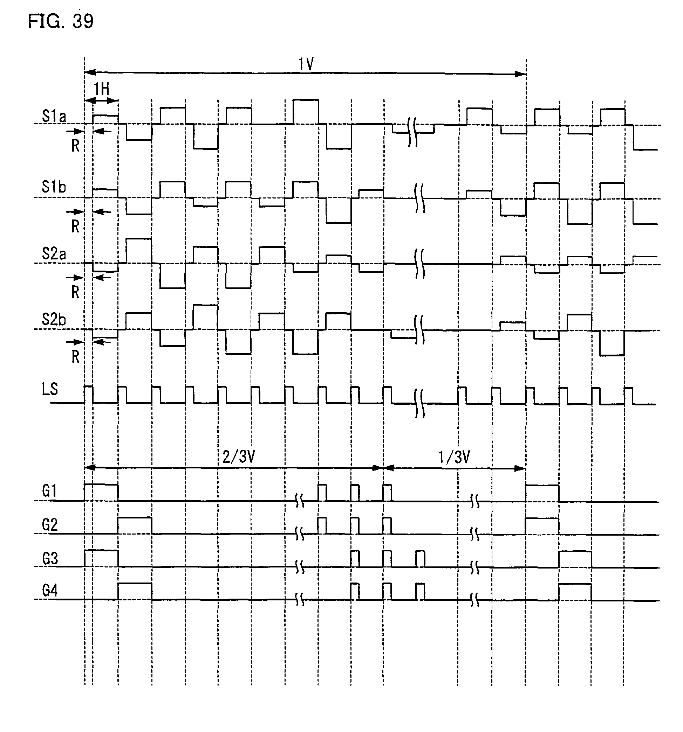

   Fig. 39 is a timing chart showing still another way of how to drive the display section shown in (a) of Fig. 33.
Fig. 40

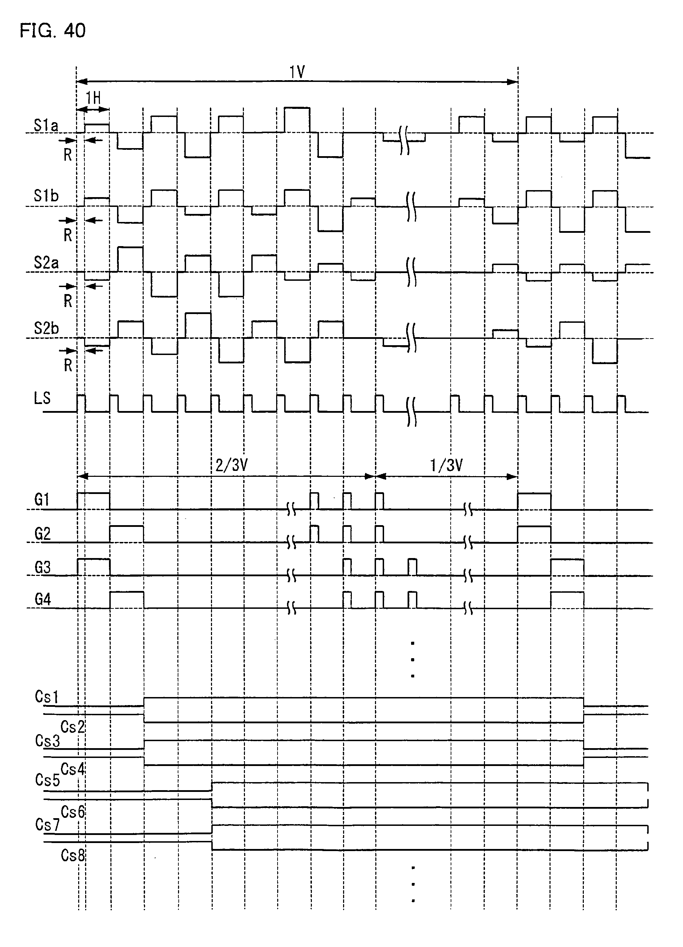

   Fig. 40 is a timing chart showing still another way of how to drive the display section shown in (a) of Fig. 35.
Fig. 41

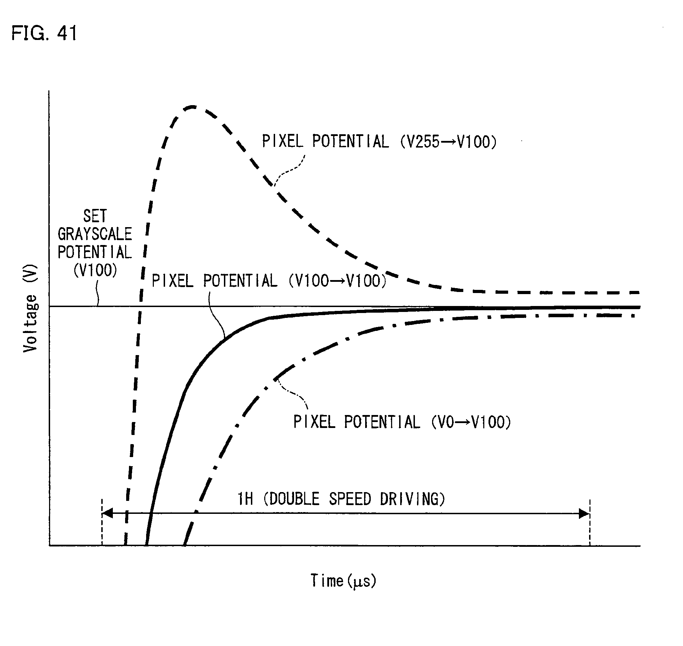

   Fig. 41 is a waveform chart showing variation in reached potential during a current horizontal scanning period due to the level of a potential supplied during the previous horizontal scanning period in a case where the polarity of a signal potential supplied to a data signal line is inverted with respect to each vertical scanning period.
Fig. 42

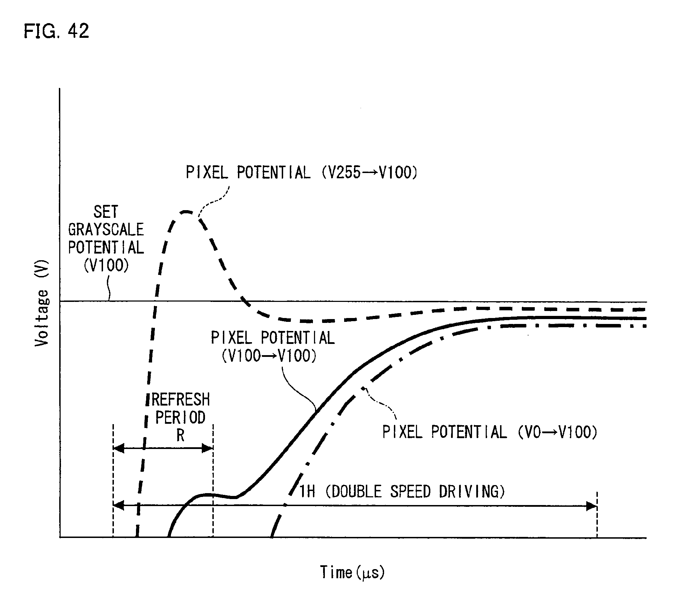

   Fig. 42 is a waveform chart showing variation in reached potential during a current horizontal scanning period due to the level of a potential supplied during the previous horizontal scanning period in a case where the polarity of a signal potential supplied to a data signal line is inverted with respect to each vertical scanning period and a refresh potential is supplied to a data signal line at the beginning of a horizontal scanning period.
Fig. 43

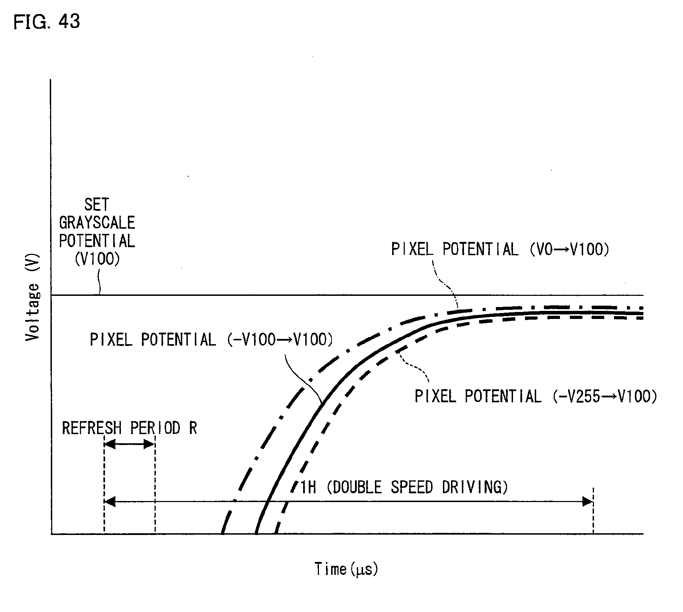

   Fig. 43 is a waveform chart showing variation in reached potential during a current horizontal scanning period due to the level of a potential supplied during the previous horizontal scanning period in a case where the polarity of a signal potential supplied to a data signal line is inverted with respect to each horizontal scanning period and a refresh potential is supplied to a data signal line at the beginning of a horizontal scanning period.
Fig. 44

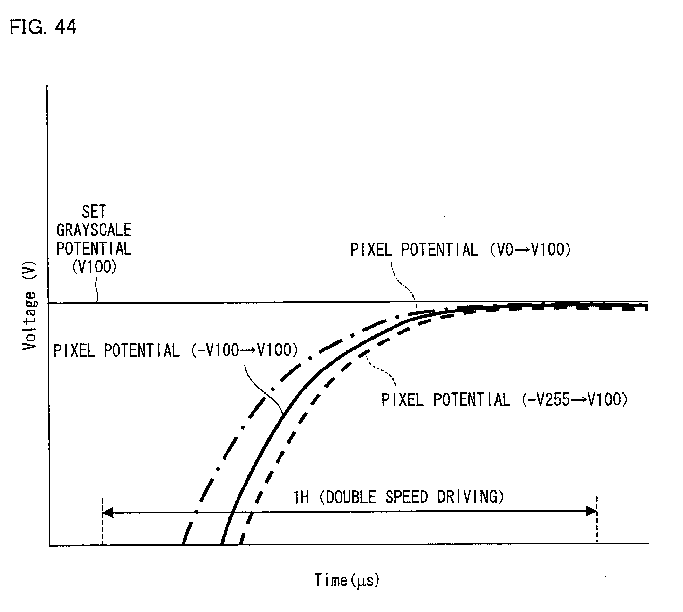

   Fig. 44 is a waveform chart showing variation in reached potential during a current horizontal scanning period due to the level of a potential supplied during the previous horizontal scanning period in a case where the polarity of a signal potential supplied to a data signal line is inverted with respect to each horizontal scanning period.
Fig. 45

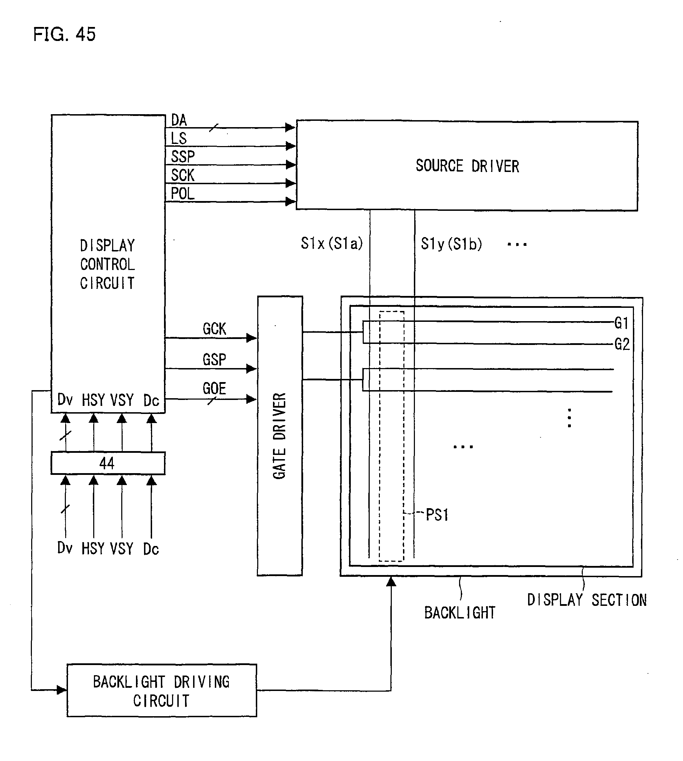

   Fig. 45 is a block diagram showing a configuration of a liquid crystal display of the present invention (based on pixel-non-division system).
Fig. 46

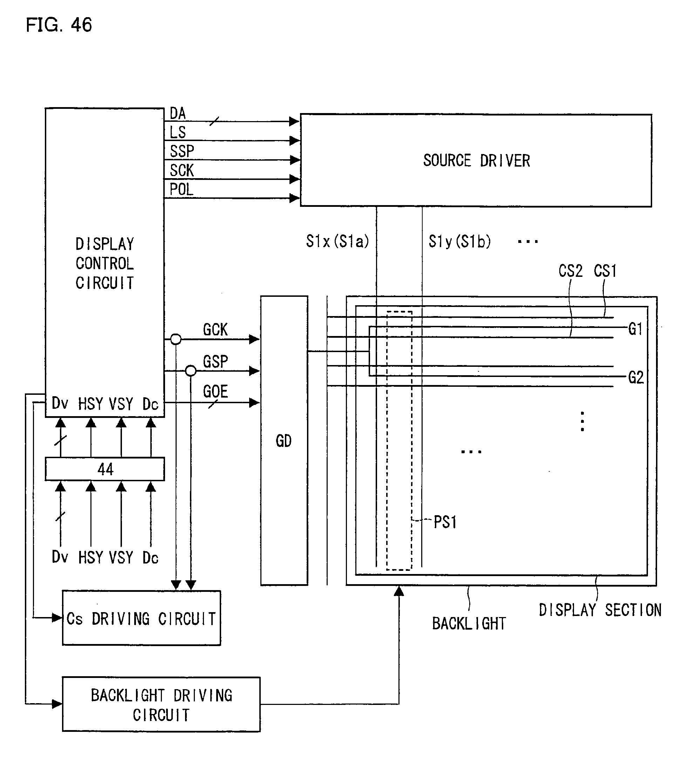

   Fig. 46 is a block diagram showing a configuration of a liquid crystal display of the present invention (based on pixel-division system).
Fig. 47

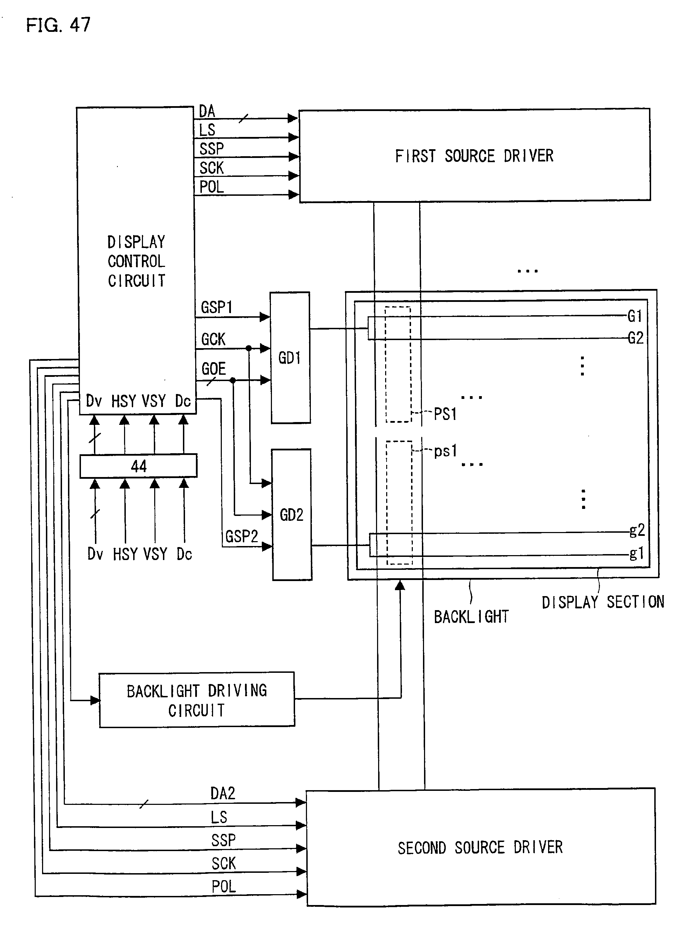

   Fig. 47 is a block diagram showing another configuration (domain-divided drive configuration) of a liquid crystal display of the present invention (based on pixel-non-division system).
Fig. 48

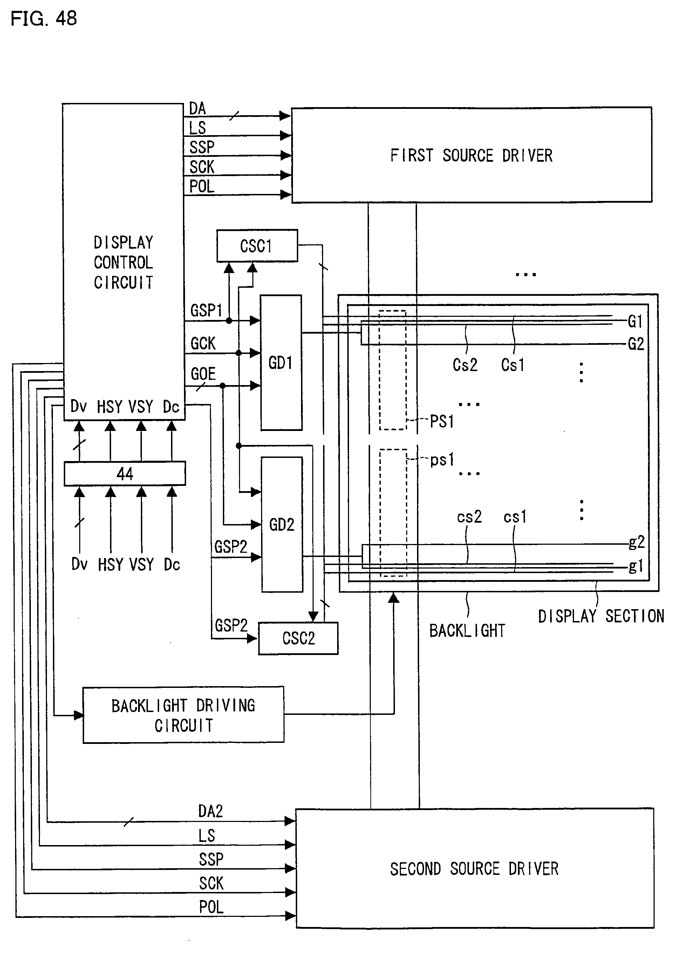

   Fig. 48 is a block diagram showing another configuration (domain-divided drive configuration) of a liquid crystal display of the present invention (based on pixel-division system).
Fig. 49
   (a) of Fig. 49 is a block diagram showing a configuration of a gate driver of a liquid crystal display of the present invention. (b) of Fig. 49 is a block diagram showing a configuration of a gate driver in a case where refresh drive is performed in the liquid crystal display of the present invention.
Fig. 50
   Fig. 50 is a block diagram showing a configuration of a data permutation circuit of a liquid crystal display of the present invention.
Fig. 51
   (a) and (b) of Fig. 51 are block diagrams each showing a source driver in a case where refresh drive is performed in a liquid crystal display of the present invention.
Fig. 52

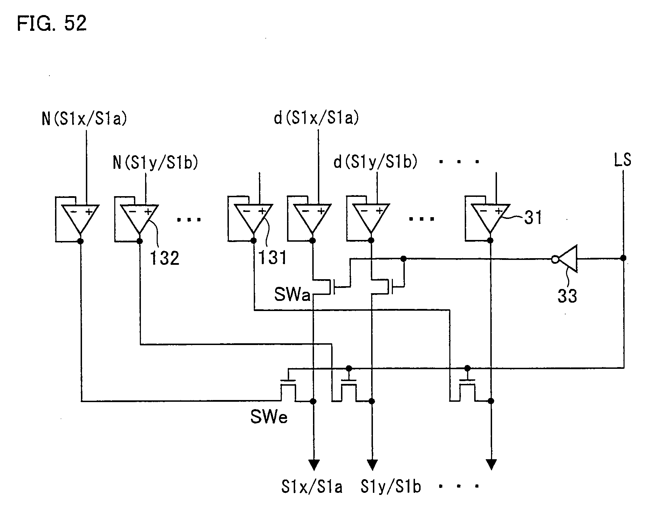

   Fig. 52 is a block diagram showing another source driver in a case where refresh drive is performed in a liquid crystal display of the present invention.
Fig. 53

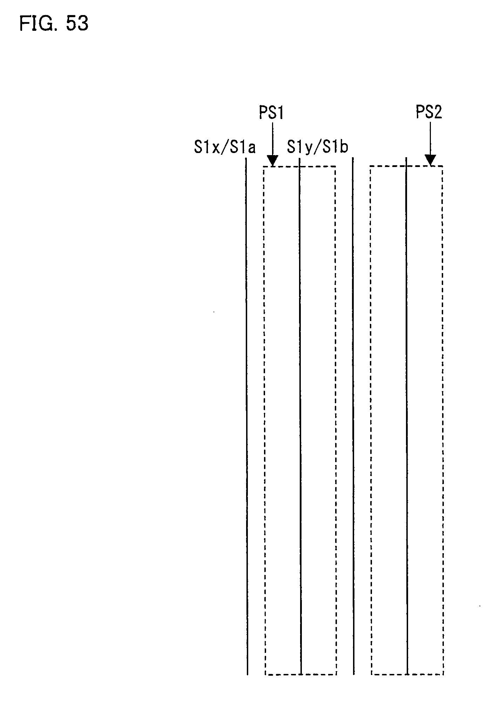

   Fig. 53 is a drawing schematically showing another example of positioning of a pixel column and first and second data signal lines for the pixel column.
Fig. 54

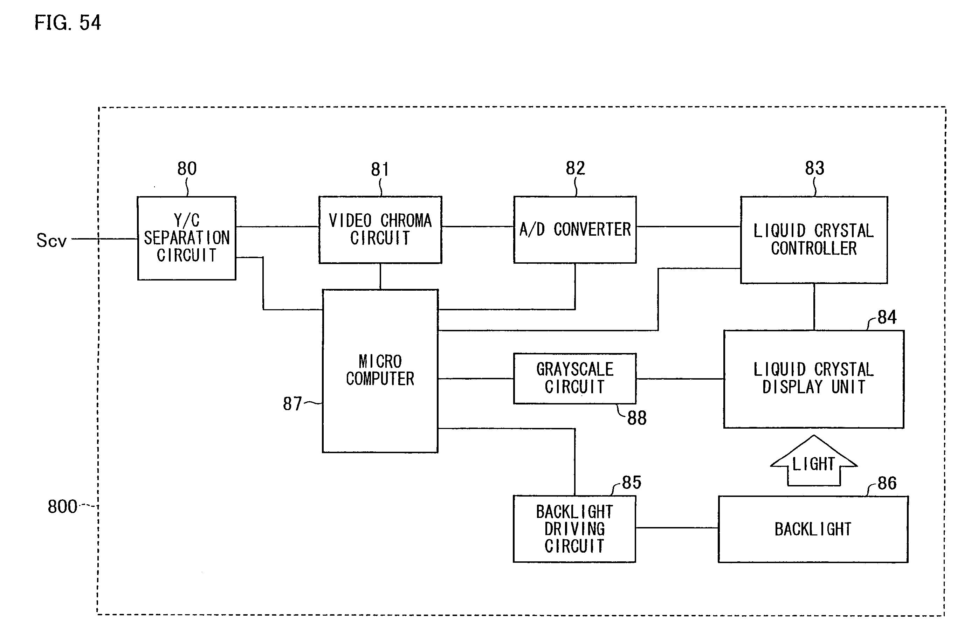

   Fig. 54 is a block diagram explaining an operation of a liquid crystal display of the present invention.
Fig. 55

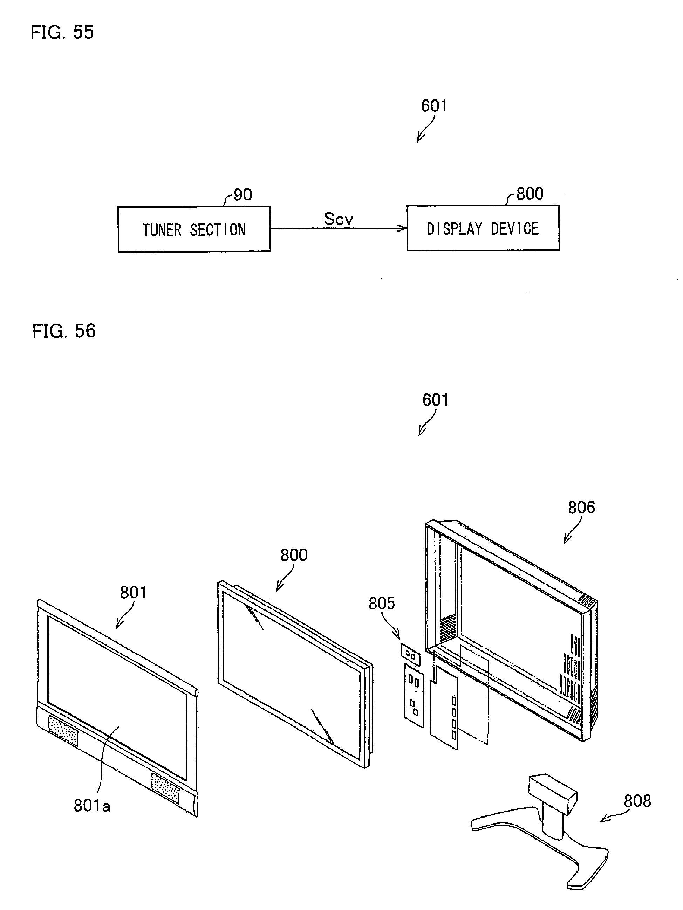

   Fig. 55 is a block diagram explaining an operation of a television receiver of the present invention.
Fig. 56
   Fig. 56 is an exploded perspective drawing showing a configuration of the television receiver of the present invention.
Fig. 57

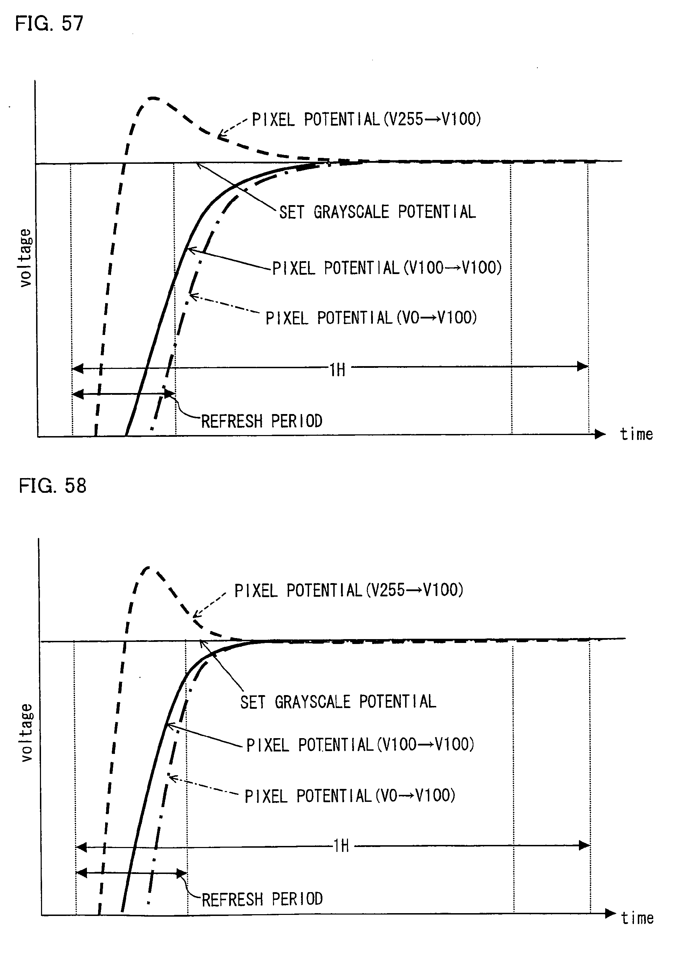

   Fig. 57 is a waveform chart showing variation in reached potential during a current horizontal scanning period due to the level of a potential supplied during the previous horizontal scanning period in a case where the polarity of a signal potential supplied to a data signal line is inverted with respect to each vertical scanning period and active refresh (refresh period = 100% of time constant of a data signal line) is performed.
Fig. 58
   Fig. 58 is a waveform chart showing variation in reached potential during a current horizontal scanning period due to the level of a potential supplied during the previous horizontal scanning period in a case where the polarity of a signal potential supplied to a data signal line is inverted with respect to each vertical scanning period and active refresh (refresh period = 90% of time constant of a data signal line) is performed.

### Reference Signs List

10a-10k·10p: display section
P(i,j): pixel
S1x: first data signal line
S2x: first data signal line
S1y: second data signal line
S2y: second data signal line
G1-G7: scanning signal line
Cs1-Cs7: retention capacitance line
PS1, PS2: pixel column
PE: pixel electrode
PE1: first pixel electrode
PE2: second pixel electrode
84: liquid crystal display unit
601: television receiver
800: liquid crystal display

### Description of Embodiments

Embodiments of the present invention are explained below with reference to Figs. 1-53. In a display section of a liquid crystal display (normally-black mode for example) of the present invention, pixels are arrayed in row and column directions. Hereinafter, a pixel row on i-th row is referred to as PGi, a pixel column on j-th column is referred to as PSj, and a pixel on j-th column on i-th row is referred to as P (i, j). For convenience of explanation, hereinafter, a direction in which a scanning signal line extends is regarded as a row direction. However, it goes without saying that when the liquid crystal display is used (is seen by a user), the scanning signal line may extend either in a lateral direction or in a longitudinal direction. Further, one horizontal scanning period (1H) is a period in which a potential corresponding to one pixel (signal potential or signal potential and refresh potential) is supplied to a data signal line.

### [Embodiment 1]

(a) of Fig. 1 is a drawing schematically showing one example of a configuration of a display section of the liquid crystal display of the present invention. (b)-(d) of Fig. 1 show a driving method of the display section. Fig. 2 is a timing chart showing the driving method. As shown in (a) of Fig. 1, a display section 10a includes a first data signal line and a second data signal line (e.g. S1x and S1y) with respect to each pixel column (e.g. PS1), and one pixel (e.g. P (1, 1)) included in the pixel column is connected with one scanning signal line (e.g. G1) and is connected with one of the first and second data signal lines (e.g. S1x and S1y). Specifically, assume that pixels on each pixel column are sequentially made pairs from a pixel on a first row on the column in such a manner that two pixels adjacent in a column direction are made a pair, and pairs thus made are given count numbers sequentially. In this case, two pixels in one pair are connected with different data signal lines, and two pairs that are given successive count numbers are designed such that an odd-number-positioned pixel in one of the two pairs and an odd-number-positioned pixel in the other of the two pairs are connected with the same data signal line. That is, in one pixel column, each of pixels on second row and thereafter is connected with a data signal line which is different from a data signal line with which a pixel in its upstream-adjacent row is connected. In each pixel, a pixel electrode PE is connected with one data signal line via a transistor (TFT) and the gate terminal of the transistor is connected with one scanning signal line.

Further, signal potentials with opposite polarities are supplied to first and second data signal lines, respectively, and the polarity of a signal potential supplied to each data signal line is inverted with respect to one vertical scanning period (1 frame). Further, pixels included in one pixel row are connected with the same scanning signal line, a first data signal line corresponding to one of two adjacent pixel columns and a first data signal line corresponding to the other of the two adjacent pixel columns are supplied with signal potentials having the same polarity, and connections with the first and second data signal lines are made oppositely between pixels adjacent in a row direction. First and second data signal lines corresponding to a pixel column are provided at both sides of the pixel column, respectively, and a first data signal line for one of adjacent two pixel columns and a first data signal line for the other of the adjacent two pixel columns are adjacent to each other without a pixel column therebetween, or a second data signal line for one of adjacent two pixel columns and a second data signal line for the other of the adjacent two pixel columns are adjacent to each other without a pixel column therebetween.

Simultaneous selection of two scanning signal lines respectively connected with two pixels in a pair is sequentially carried out in a scanning direction (according to the count number mentioned above). That is, scanning signal lines are sequentially selected with starting from a scanning signal line connected with a pixel on a first row in such a manner that adjacent two scanning signal lines are selected simultaneously.

For example, in a case of the pixel column PS1, the first data signal line S1x and the second data signal line S1y are provided at sides of the pixel column PS1, respectively, a first-positioned pixel P(1,1) and a second-positioned pixel P(2,1) are regarded as a pair, the pixel P(1,1) is connected with the scanning signal line G1 and the first data signal line S1x, and the pixel (2,1) is connected with a scanning signal line G2 and the second data signal line S1y. Similarly, a third-positioned pixel P(3,1) and a fourth-positioned pixel P(4,1) are regarded as a pair, the pixel P(3,1) is connected with the scanning signal line G3 and the first data signal line S1x, and the pixel (4,1) is connected with a scanning signal line G4 and the second data signal line S1y. Similarly, a fifth-positioned pixel P(5,1) and a sixth-positioned pixel P(6,1) are regarded as a pair, the pixel P(5,1) is connected with the scanning signal line G5 and the first data signal line S1x, the pixel (6,1) is connected with a scanning signal line G6 and the second data signal line S1y.

Further, in a case of a pixel column PS2, a first data signal line S2x and a second data signal line S2y are provided at sides of a pixel column PS2, respectively, a first-positioned pixel P(1,2) and a second-positioned pixel P(2,2) are regarded as a pair, the pixel P(1,2) is connected with the scanning signal line G1 and a second data signal line S2y, and the pixel (2,2) is connected with a scanning signal line G2 and the first data signal line S2x. Similarly, a third-positioned pixel P(3,2) and a fourth-positioned pixel P(4,2) are regarded as a pair, the pixel P(3,2) is connected with the scanning signal line G3 and the second data signal line S2y, and the pixel (4,2) is connected with a scanning signal line G4 and the first data signal line S2x. Similarly, a fifth-positioned pixel P(5,2) and a sixth-positioned pixel P(6,2) are regarded as a pair, the pixel P(5,2) is connected with the scanning signal line G5 and the second data signal line S2y, the pixel (6,2) is connected with a scanning signal line G6 and the first data signal line S2x.

In a certain frame (state shown in (b)-(d) of Fig. 1), the first data signal line S1x is always supplied with a potential having a plus polarity, and the second data signal line S1y is supplied with a potential having a minus polarity. In a next frame, the first data signal line S1x is supplied with a potential having a minus polarity, and the second data signal line S1y is supplied with a potential having a plus polarity. Further, in a certain frame (state shown in (b)-(d) of Fig. 1), the first data signal line S2x is always supplied with a potential having a plus polarity, and the second data signal line S2y is supplied with a potential having a minus polarity. In a next frame, the first data signal line S2x is supplied with a potential having a minus polarity, and the second data signal line S2y is supplied with a potential having a plus polarity. Between the adjacent pixel columns PS1 and PS2, the second data signal line S1y for the pixel column PS1 and the second data signal line S2y for the pixel column PS2 are adjacent to each other without a pixel column therebetween.

As shown in (b)-(d) of Fig. 1 and Fig. 2, initially, the scanning signal line G1 connected with the pixels P(1,1) and P(1,2) and the scanning signal line G2 connected with the pixels P(2,1) and P(2,2) are selected simultaneously. Then, the scanning signal line G3 connected with the pixels P(3,1) and P(3,2) and the scanning signal line G4 connected with the pixels P(4,1) and P(4,2) are selected simultaneously. Then, the scanning signal line G5 connected with the pixels P(5,1) and P(5,2) and the scanning signal line G6 connected with the pixels P(6,1) and P(6,2) are selected simultaneously.

Consequently, in the display section 10a, during a first horizontal scanning period, writing of a potential having a plus polarity from the first data signal line S1x to the pixel electrode of the pixel P(1,1) and writing of a potential having a minus polarity from the second data signal line S1y to the pixel electrode of the pixel P(2,1) are carried out simultaneously, and writing of a potential having a minus polarity from the second data signal line S2y to the pixel electrode of the pixel P(1,2) and writing of a potential having a plus polarity from the first data signal line S2x to the pixel electrode of the pixel P(2,2) are carried out simultaneously (see (b) of Fig. 1). Further, during a next horizontal scanning period, writing of a potential having a plus polarity from the first data signal line S1x to the pixel electrode of the pixel P(3,1) and writing of a potential having a minus polarity from the second data signal line S1y to the pixel electrode of the pixel P(4,1) are carried out simultaneously, and writing of a potential having a minus polarity from the second data signal line S2y to the pixel electrode of the pixel P(3,2) and writing of a potential having a plus polarity from the first data signal line S2x to the pixel electrode of the pixel P(4,2) are carried out simultaneously (see (c) of Fig. 1). During a further next horizontal scanning period, writing of a potential having a plus polarity from the first data signal line S1x to the pixel electrode of the pixel P(5,1) and writing of a potential having a minus polarity from the second data signal line S1y to the pixel electrode of the pixel P(6,1) are carried out simultaneously, and writing of a potential having a minus polarity from the second data signal line S2y to the pixel electrode of the pixel P(5,2) and writing of a potential having a plus polarity from the first data signal line S2x to the pixel electrode of the pixel P(6,2) are carried out simultaneously (see (d) of Fig. 1).

As described above, in the display section 10a, it is possible to lengthen one horizontal scanning period by simultaneously selecting two scanning signal lines, and at the same time to carry out dot-inversion of individual pixels. That is, it is possible to increase a time for charging a pixel while reducing flickers. Further, two data signal lines adjacent to each other (close to each other) without a pixel column therebetween (e.g. S1y and S2y) are supplied with signal potentials always having the same polarity, and therefore it is possible to reduce power consumption due to a parasitic capacitance between the two data signal lines. This allows reducing a load on a source driver.

Further, in this configuration of the present invention, when the length of one horizontal scanning period is set to be the same as that in a comparative configuration where scanning signal lines are selected one by one, it is possible to scan twice the number of scanning signal lines compared with the comparative configuration, and when the number of scanning signal lines is set to be the same as that in the comparative configuration, it is possible to make the length of one horizontal scanning period twice. Accordingly, the liquid crystal display of the present invention is preferably used for double speed driving in which the number of frames per unit time is doubled (e.g. 120 frames/sec). Double speed driving inevitably results in a shorter time for charging a pixel. However, employing the configuration of the present invention allows securing a sufficient time for charging a pixel. Further, the liquid crystal display of the present invention may be preferably used for a digital-cinema-standard liquid crystal display having 2160 scanning signal lines and a super-high-vision-standard liquid crystal display having 4320 scanning signal lines.

A display section of the liquid crystal display of the present invention may be configured as in (a) of Fig. 3. A display section 10b of (a) of Fig. 3 is different from the display section 10a in that the display section 10b is configured such that a second data signal line for one of adjacent two pixel columns and a first data signal line for the other of the adjacent two pixel columns are adjacent to each other without a pixel column therebetween, or a first data signal line for one of adjacent two pixel columns and a second data signal line for the other of the adjacent two pixel columns are adjacent to each other without a pixel column therebetween.

For example, a first data signal line S1x and a second data signal line S1y are provided at sides of a pixel column PS1, respectively, a first data signal line S2x and a second data signal line S2y are provided at sides of a pixel column PS2, respectively, and the second data signal line S1y for the pixel column PS1 and the first data signal line S2x for the pixel column PS2 are adjacent to each other. Fig. 4 shows a method for driving the display section 10b. (b)-(d) of Fig. 3 show states in which data is written into pixels. As shown in these drawings, also in the display section 10b, it is possible to lengthen one horizontal scanning period and at the same time to carry out dot-inversion of individual pixels.

The display section 10a in (a) of Fig. 1 may be configured to have a pixel-division system (multi-pixel configuration). In the display section 10c of (a) of Fig. 5, a scanning signal line for a pixel is provided in such a manner that the scanning signal line intersects the pixel, and a plurality of retention capacitance lines are provided in such a manner as to be parallel to the scanning signal line. Each pixel is configured such that a first transistor and a first pixel electrode PE1 are provided at one side of a scanning signal line intersecting the pixel, a second transistor and a second pixel electrode PE2 are provided at the other side of the scanning signal line, the first pixel electrode PE1 and the second pixel electrode PE2 are connected with the same data signal line via the first transistor and the second transistor, respectively, the first transistor and the second transistor are connected with the same scanning signal line, and the first pixel electrode PE1 and the second pixel electrode PE2 form retention capacitances with different retention capacitance lines, respectively. Further, a retention capacitance line is provided for two pixels adjacent in a column direction (two pixel columns), and a first or second pixel electrode provided in one of the two pixels and a first or second pixel electrode provided in the other of the two pixels form retention capacitance with the retention capacitance line. It should be noted that connections between individual pixels (first and second pixel electrodes PE1 and PE2 and first and second transistors that are included in each of the pixels) and a data signal line and a scanning signal line are designed to be the same as those of the display section 10a of (a) of Fig. 1.

For example, a scanning signal line G1 is provided in such a manner as to intersect a pixel P(1,1), and a plurality of retention capacitance lines (Cs1-Cs7) are provided in such a manner as to be parallel to scanning signal lines (G1-G6). The pixel P(1,1) is configured such that a first transistor and a first pixel electrode PE1 are provided at one side of the scanning signal line G1, and a second transistor and a second pixel electrode PE2 are provided at the other side of the scanning signal line G1, the first pixel electrode PE1 is connected with a first data signal line S1x via the first transistor and the second pixel electrode PE2 is connected with the first data signal line S1x via the second transistor, the first transistor and the second transistor are connected with the scanning signal line G1, the first pixel electrode PE1 forms retention capacitance with the retention capacitance line Cs1 and the second pixel electrode PE2 forms retention capacitance with the retention capacitance line Cs2. Further, a pixel (2,1) is configured such that a first pixel electrode PE1 is connected with a second data signal line S1y via a first transistor and a second pixel electrode PE2 is connected with a second data signal line S1y via a second transistor, the first transistor and the second transistor are connected with a scanning signal line G2, the first pixel electrode PE1 forms retention capacitance with a retention capacitance line Cs2 and the second pixel electrode PE2 forms retention capacitance with a retention capacitance line Cs3. Further, a pixel (1,2) is configured such that a first pixel electrode PE1 is connected with a second data signal line S2y via a first transistor and a second pixel electrode PE2 is connected with a second data signal line S2y via a second transistor, the first transistor and the second transistor are connected with the scanning signal line G1, the first pixel electrode PE1 forms retention capacitance with a retention capacitance line Cs2 and the second pixel electrode PE2 forms retention capacitance with a retention capacitance line Cs1. Further, a pixel (2,2) is configured such that a first pixel electrode PE1 is connected with a first data signal line S2x via a first transistor and a second pixel electrode PE2 is connected with a first data signal line S2x via a second transistor, the first transistor and the second transistor are connected with a scanning signal line G2, the first pixel electrode PE1 forms retention capacitance with a retention capacitance line Cs3 and the second pixel electrode PE2 forms retention capacitance with a retention capacitance line Cs2. In this manner, two pixels adjacent to each other in a column direction (P(1,1) and P(2,1) or P(1,2) and P(2,2)) share the retention capacitance line Cs2.

Fig. 6 is a timing chart showing a method for driving data signal lines, scanning signal lines, and retention capacitance lines of the display section 10c. As shown in Fig. 6, the method for driving is similar to the method shown in Fig. 2. In synchronization with putting a scanning signal line connected with a certain pixel in an OFF state, or after putting the scanning signal line in an OFF state, potentials of two retention capacitance lines that form retention capacitances with a first pixel electrode PE1 and a second pixel electrode PE2 of the pixel, respectively, are caused to shift in opposite directions (rising and falling directions). For example, in synchronization with putting the scanning signal lines G1 and G2 in an OFF state, a potential of the retention capacitance line Cs1 is caused to shift in a rising direction and a potential of the retention capacitance line Cs2 is caused to shift in a falling direction, and in synchronization with putting the scanning signal lines G3 and G4 in an OFF state, a potential of the retention capacitance line Cs3 is caused to shift in a rising direction and a potential of the retention capacitance line Cs4 is caused to shift in a falling direction.

To be more specific, the retention capacitance lines of the display section 10c are configured and subjected to potential-control as follows: retention capacitance lines that form retention capacitances with pixel electrodes PE1 and PE2 of a pixel on a 1^{st} row (e.g. P(1,1)) are first-positioned and second-positioned retention capacitance lines Cs1 and Cs2. The second-positioned retention capacitance line Cs2 also forms retention capacitance with a pixel electrode PE2 of a pixel on a 2^{nd} row (e.g. P(2,1)). At the time of completion of simultaneous writing of the pixels on the 1^{st} and 2^{nd} rows or after the completion, potentials of the first-positioned and second-positioned retention capacitance lines Cs1 and Cs2 shift simultaneously and in an opposite direction. Between two successive odd-number-positioned retention capacitance lines (e.g. Cs1 and Cs3), shift of the potential of the former of the two successive odd-number-positioned retention capacitance lines (e.g. Cs1) is followed after 1 horizontal scanning period by shift of the potential of the latter of the two successive odd-number-positioned retention capacitance lines (e.g. Cs3) in the same direction. Between two successive even-number-positioned retention capacitance lines (e.g. Cs2 and Cs4), shift of the potential of the former of the two successive even-number-positioned retention capacitance lines (e.g. Cs2) is followed after 1 horizontal scanning period by shift of the potential of the latter of the two successive even-number-positioned retention capacitance lines (e.g. Cs4) in the same direction. The cycle of shift of the potential of each retention capacitance line is 1 vertical scanning period (1 frame period).

As shown in Fig. 5(b), in the display section 10c, during a first horizontal scanning period, scanning signal lines G1 and G2 are simultaneously made ON (put in a selected state), writing of a same potential having a plus polarity from the first data signal line S1x to the first and second pixel electrodes PE1 and PE2 of the pixel P(1,1) and writing of a same potential having a minus polarity from the second data signal line S1y to the first and second pixel electrodes PE1 and PE2 of the pixel P(2,1) are carried out simultaneously, and writing of a same potential having a minus polarity from the second data signal line S2y to the first and second pixel electrodes PE1 and PE2 of the pixel P(1,2) and writing of a same potential having a plus polarity from the first data signal line S2x to the first and second pixel electrodes PE1 and PE2 of the pixel P(2,2) are carried out simultaneously.

In synchronization with making the scanning signal lines G1 and G2 OFF simultaneously, the retention capacitance line Cs1 is caused to rise and the retention capacitance line Cs2 is caused to fall. Consequently, a portion of the pixel P(1,1) which includes the first pixel electrode PE1 serves as a bright sub-pixel, a portion of the pixel P(1,1) which includes the second pixel electrode PE2 serves as a dark sub-pixel, a portion of the pixel P(2,1) which includes the first pixel electrode PE1 serves as a bright sub-pixel, a portion of the pixel P(1,2) which includes the first pixel electrode PE1 serves as a bright sub-pixel, a portion of the pixel P(1,2) which includes the second pixel electrode PE2 serves as a dark sub-pixel, and a portion of the pixel P(2,2) which includes the second pixel electrode PE2 serves as a dark sub-pixel. Control in the next horizontal scanning period is performed as shown in Fig. 5(c), and control in the further next horizontal scanning period is performed as shown in Fig. 5(d). This causes sub-pixels in the pixel column PS1 to be positioned in the order of bright, dark, bright, dark, bright ... and causes sub-pixels in the pixel column PS2 to be positioned in the order of dark, bright, dark, bright, dark .... Thus, bright sub-pixels and dark sub-pixels are positioned in a checkered pattern.

As described above, the display section 10c allows increasing a time for charging a pixel while reducing flickers and allows improving a viewing angle characteristic (i.e. the display section 10c displays a halftone based on a configuration that one pixel includes a bright sub-pixel and a dark sub-pixel, thereby reducing excess brightness etc. while displaying a halftone). Further, signal potentials supplied to two data signal lines adjacent to each other (close to each other) without a pixel column therebetween (e.g. S1y and S2y) always have the same polarity. This allows reducing power consumption due to parasitic capacitance between the two data signal lines, thereby reducing a load on a source driver.

Further, in the above configuration, bright sub-pixels and dark sub-pixels are positioned in a checkered pattern, thereby preventing bright sub-pixels from being adjacent to each other or preventing dark sub-pixels from being adjacent to each other. This allows improving a viewing angle characteristic while reducing jaggyness.

Further, in this configuration of the present invention, when the length of one horizontal scanning period is set to be the same as that in a conventional configuration where scanning signal lines are selected one by one, it is possible to scan twice the number of scanning signal lines compared with the conventional configuration, and when the number of scanning signal lines is set to be the same as that in the conventional configuration, it is possible to make the length of one horizontal scanning period twice. Accordingly, the liquid crystal display of the present invention is preferably used for a liquid crystal display performing double speed driving and a liquid crystal display with a digital cinema standard or super high vision standard.

The display section of the liquid crystal display device of the present invention may be configured as shown in Fig. 7(a). A display section 10d shown in Fig. 7(a) is different from the display section 10c shown in Fig. 5(a) in that the display section 10d is configured such that a second data signal line for one of two adjacent pixel columns and a first data signal line for the other of the two adjacent pixel columns are adjacent to each other without a pixel column therebetween, or a first data signal line for one of the two adjacent pixel columns and a second data signal line for the other of the two adjacent pixel columns are adjacent to each other without a pixel column therebetween.

For example, a first data signal line S1x and a second data signal line S1y are provided at sides of a pixel column PS1, respectively, a first data signal line S2x and a second data signal line S2y are provided at sides of a pixel column PS2, respectively, and the second data signal line S1y for the pixel column PS1 and the first data signal line S2x for the pixel column PS2 are adjacent to each other. Fig. 8 shows a method for driving the display section 10d. (b)-(d) of Fig. 7 show states in which data is written into pixels. As shown in these drawings, also in the display section 10d, it is possible to lengthen one horizontal scanning period and at the same time to carry out dot-inversion of individual pixels and to improve a viewing angle characteristic. Further, it is possible to position bright sub-pixels and dark sub-pixels in a checkered pattern, thereby preventing bright sub-pixels from being adjacent to each other or preventing dark sub-pixels from being adjacent to each other. This allows improving a viewing angle characteristic while reducing jaggyness.

The display section 10a shown in (a) of Fig. 1 may be driven as shown in Fig. 9. That is, a refresh period R is provided at the beginning of each horizontal scanning period, and a refresh potential (preliminary potential, Vcom for example) is supplied to each data signal line during the refresh period R. The refresh period R is in synchronization with a period during which a latch strobe signal LS is in a "High" state for example (this will be mentioned later). This allows a liquid crystal display whose time for charging a pixel gets inevitably shorter as the display gets enlarged, has higher definition and is driven by higher speed driving to reduce unevenness in reached potential (charge ratio) during a current horizontal scanning period due to a difference in the levels of potentials supplied to the same data signal line during the previous horizontal scanning period. In this regard, the inventors of the present invention have found that in a case where the grayscale during a current horizontal scanning period is a halftone (for example, grayscale 101 of grayscales 0-255 in 256 grayscales display, grayscale potential V101=2.1V (potential at the time when common potential is potential 0), a reached level of a pixel potential (hereinafter reached potential) differs between when the level of a potential supplied during the previous horizontal scanning period corresponds to a white tone and when the level corresponds to a black tone. For example, in a case where the polarity of a signal potential supplied to a data signal line in the double speed driving is plus in one frame and the grayscale during a current horizontal scanning period is a halftone, as shown in Fig. 41, when the level of a potential supplied to the data signal line during the previous horizontal scanning period corresponds to a white tone (grayscale potential V255=7.5V), a reached potential of the current horizontal scanning period exceeds a set grayscale potential, whereas when the level corresponds to a black tone (grayscale potential V0=0V), the reached potential of the current horizontal scanning period is lower than the set grayscale potential. If the double speed driving is performed while supplying a refresh potential (Vcom) during a refresh period R at the beginning of each horizontal scanning period as shown in Fig. 9, it is possible to drop the reached potential at a time when the level of a potential supplied to the data signal line during the previous horizontal scanning period corresponds to a white tone. This allows the reached potential at a time when the level of the potential supplied to the data signal line during the previous horizontal scanning period corresponds to a white tone and the reached potential at a time when the level corresponds to a black tone to be closer to each other. It should be noted that Figs. 41 and 42 relate to the cases of double speed driving as explained above and 1H (1 horizontal scanning period) is 14.82 [µs] and the refresh period is 3 [µs]. Further, when the double speed driving is performed in the configuration of Fig. 9, 1H and the refresh period R are specifically as above.

By causing the display section 10c shown in Fig. 5(a) based on a pixel-division system to be driven as shown in Fig. 10, it is possible to reduce variations in reached voltage (charge ratio) of a current horizontal scanning period due to a difference in the levels of potentials supplied to the same data signal line during the previous horizontal scanning period.

Further, the display section 10a shown in (a) of Fig. 1 may be driven as shown in Fig. 11. That is, a refresh period R is provided at the beginning of each horizontal scanning period and a refresh potential (e.g. Vcom) is supplied to a data signal line during the refresh period R, and each scanning signal line is selected plural times (e.g. three times) with timing when approximately 2/3 frame period has passed from previous scanning and in synchronization with the refresh period R, and the refresh potential (e.g. Vcom) is written in a pixel connected with the scanning signal line during this intermediate selection period. Although the intermediate selection period is shorter than one horizontal scanning period, by setting a plurality of intermediate selection periods with one horizontal scanning period therebetween and thus performing impulse driving, it is possible to write black (insert black) in individual pixels. Consequently, a pixel displays input video data during 2/3 frame period out of one frame period and displays black during 1/3 frame period out of the one frame period. This reduces tailing etc. when displaying a moving image, thereby improving the quality of the displayed moving image.

Also by causing the display section 10c shown in Fig. 5(a) based on the pixel-division system to be driven as shown in Fig. 12, it is possible to reduce tailing etc. when displaying a moving image and thus improve the quality of the displayed moving image.

### [Embodiment 2]

(a) of Fig. 13 is a drawing schematically showing one example of a configuration of a display section of the liquid crystal display of the present invention. Figs. 13(b)-13(d) show a driving method of the display section. Fig. 14 is a timing chart showing the driving method. As shown in (a) of Fig. 13, a display section 10e includes first and second data signal lines (e.g. S1x and S1y) with respect to each pixel column (e.g. PS1), and one pixel (e.g. P(1, 1)) included in the pixel column is connected with one scanning signal line (e.g. G1) and is connected with one of the first and second data signal lines (e.g. S1x and S1y). Specifically, assume that pixels on each pixel column are sequentially made pairs from a pixel on a first row on the pixel column in such a manner that two pixels adjacent in a column direction are made a pair, and pairs thus made are given count numbers sequentially. In this case, two pixels in each pair are connected with different data signal lines, and two pairs that are given successive count numbers are designed such that an odd-number-positioned pixel in one of the two pairs and an odd-number-positioned pixel in the other of the two pairs are connected with different data signal lines. That is, pixels are connected with data signal lines in such a manner that when a pixel on a first row is regarded as a 1^{st} pixel, each pixel other than 2×1×i+1^{st} (i is a natural number) pixel counted in a scanning direction and its upstream-adjacent pixel of the pixel are connected with different data signal lines, and the 2×1×i+1^{st} pixel and its upstream-adjacent pixel are connected with the same data signal line. In each pixel, a pixel electrode PE is connected with one data signal line via a transistor (TFT) and the gate terminal of the transistor is connected with one scanning signal line.

Further, first and second data signal lines are supplied with signal potentials with opposite polarities, respectively, and the polarity of a signal potential supplied to each data signal line is inverted with respect to one horizontal scanning period (1H). Further, pixels included in one pixel row are connected with the same scanning signal line, a first data signal line for one of two adjacent pixel columns and a first data signal line for the other of the two adjacent pixel columns are supplied with signal potentials having the same polarity, and connections with the first and second data signal lines are made oppositely between pixels adjacent in a row direction. First and second data signal lines for a pixel column are provided at both sides of the pixel column, respectively, and a first data signal line for one of adjacent two pixel columns and a first data signal line for the other of the adjacent two pixel columns are adjacent to each other without a pixel column therebetween, or a second data signal line for one of adjacent two pixel columns and a second data signal line for the other of the adjacent two pixel columns are adjacent to each other without a pixel column therebetween.

Simultaneous selection of scanning signal lines connected with two pixels in a pair, respectively, is sequentially carried out in a scanning direction (according to count numbers mentioned above). That is, scanning signal lines are sequentially selected with starting from a scanning signal line connected with a pixel on a 1^{st} row in such a manner that adjacent two scanning signal lines are simultaneously selected.

For example, in a case of the pixel column PS 1, the first data signal line S1x and the second data signal line S1y are provided at sides of the pixel column PS1, respectively, a first-positioned pixel P(1,1) and a second-positioned pixel P(2,1) are regarded as a pair, the pixel P(1,1) is connected with the scanning signal line G1 and the first data signal line S1x, and the pixel (2,1) is connected with a scanning signal line G2 and the second data signal line S1y. Similarly, a third-positioned pixel P(3,1) and a fourth-positioned pixel P(4,1) are regarded as a pair, the pixel P(3,1) is connected with the scanning signal line G3 and the second data signal line S1y, and the pixel (4,1) is connected with a scanning signal line G4 and the first data signal line S1x. Similarly, a fifth-positioned pixel P(5,1) and a sixth-positioned pixel P(6,1) are regarded as a pair, the pixel P(5,1) is connected with the scanning signal line G5 and the first data signal line S1x, and the pixel (6,1) is connected with a scanning signal line G6 and the second data signal line S1y.

Further, in a case of a pixel column PS2, a first data signal line S2x and a second data signal line S2y are provided at sides of a pixel column PS2, respectively, a first-positioned pixel P(1,2) and a second-positioned pixel P(2,2) are regarded as a pair, the pixel P(1,2) is connected with the scanning signal line G1 and a second data signal line S2y, and the pixel (2,2) is connected with a scanning signal line G2 and the first data signal line S2x. Similarly, a third-positioned pixel P(3,2) and a fourth-positioned pixel P(4,2) are regarded as a pair, the pixel P(3,2) is connected with the scanning signal line G3 and the first data signal line S2x, and the pixel (4,2) is connected with a scanning signal line G4 and the second data signal line S2y. Similarly, a fifth-positioned pixel P(5,2) and a sixth-positioned pixel P(6,2) are regarded as a pair, the pixel P(5,2) is connected with the scanning signal line G5 and the second data signal line S2y, the pixel (6,2) is connected with a scanning signal line G6 and the first data signal line S2x.

During a given horizontal scanning period (state shown in (b) of Fig. 13), the first data signal line S1x is supplied with a potential having a plus polarity, and the second data signal line S1y is supplied with a potential having a minus polarity. During a next horizontal scanning period (state shown in (c) of Fig. 13), the first data signal line S1x is supplied with a potential having a minus polarity, and the second data signal line S1y is supplied with a potential having a plus polarity. Further, during a given horizontal scanning period (state shown in (b) of Fig. 13), the first data signal line S2x is supplied with a potential having a plus polarity, and the second data signal line S2y is supplied with a potential having a minus polarity. During a next horizontal scanning period (state shown in (c) of Fig. 13), the first data signal line S2x is supplied with a potential having a minus polarity, and the second data signal line S2y is supplied with a potential having a plus polarity. Between the adjacent pixel columns PS1 and PS2, the second data signal line S1y for the pixel column PS1 and the second data signal line S2y for the pixel column PS2 are adjacent to each other without a pixel column therebetween.

As shown in (b)-(d) of Fig. 13 and Fig. 14, initially, the scanning signal line G1 connected with the pixels P(1,1) and P(1,2) and the scanning signal line G2 connected with the pixels P(2,1) and P(2,2) are selected simultaneously. Then, the scanning signal line G3 connected with the pixels P(3,1) and P(3,2) and the scanning signal line G4 connected with the pixels P(4,1) and P(4,2) are selected simultaneously. Then, the scanning signal line G5 connected with the pixels P(5,1) and P(5,2) and the scanning signal line G6 connected with the pixels P(6,1) and P(6,2) are selected simultaneously.

Consequently, in the display section 10e, during a first horizontal scanning period, writing of a potential having a plus polarity from the first data signal line S1x to the pixel electrode of the pixel P(1,1) and writing of a potential having a minus polarity from the second data signal line S1y to the pixel P(2,1) are carried out simultaneously, and writing of a potential having a minus polarity from the second data signal line S2y to the pixel electrode of the pixel P(1,2) and writing of a potential having a plus polarity from the first data signal line S2x to the pixel P(2,2) are carried out simultaneously (see (b) of Fig. 13). Further, during a next horizontal scanning period, writing of a potential having a plus polarity from the second data signal line S1y to the pixel electrode of the pixel P(3,1) and writing of a potential having a minus polarity from the first data signal line S1x to the pixel P(4,1) are carried out simultaneously, and writing of a potential having a minus polarity from the first data signal line S2x to the pixel electrode of the pixel P(3,2) and writing of a potential having a plus polarity from the second data signal line S2y to the pixel P(4,2) are carried out simultaneously (see (c) of Fig. 13). During a further next horizontal scanning period, writing of a potential having a plus polarity from the first data signal line S1x to the pixel electrode of the pixel P(5,1) and writing of a potential having a minus polarity from the second data signal line S1y to the pixel P(6,1) are carried out simultaneously, and writing of a potential having a minus polarity from the second data signal line S2y to the pixel electrode of the pixel P(5,2) and writing of a potential having a plus polarity from the first data signal line S2x to the pixel P(6,2) are carried out simultaneously (see (d) of Fig. 13).

As described above, in the display section 10e, it is possible to lengthen one horizontal scanning period by simultaneously selecting two scanning signal lines, and at the same time to carry out dot-inversion of individual pixels. That is, it is possible to increase a time for charging a pixel while reducing flickers. Further, signal potentials supplied to two data signal lines adjacent to each other (close to each other) without a pixel column therebetween (e.g. S1y and S2y) always have the same polarity, and therefore it is possible to reduce power consumption due to a parasitic capacitance between the two data signal lines. This allows reducing a load on a source driver.

Further, in this configuration of the present invention, when the length of one horizontal scanning period is set to be the same as that in a comparative configuration where scanning signal lines are selected one by one, it is possible to scan twice the number of scanning signal lines compared with the comparative configuration, and when the number of scanning signal lines is set to be the same as that in the comparative configuration, it is possible to make the length of one horizontal scanning period twice. Accordingly, the liquid crystal display of the present invention is preferably used for double speed driving in which the number of frames per unit time is doubled (e.g. 120 frames/sec). Double speed driving inevitably results in a shorter time for charging a pixel. However, employing the configuration of the present invention allows securing a sufficient time for charging a pixel. Further, the liquid crystal display of the present invention may be preferably used for a digital-cinema-standard liquid crystal display having 2160 scanning signal lines and a super-high-vision-standard liquid crystal display having 4320 scanning signal lines.

Further, in this configuration, the polarity of a signal potential supplied to a data signal line is inverted with respect to each horizontal scanning period. This allows a liquid crystal display whose time for charging a pixel gets inevitably shorter as the display gets enlarged, has higher definition and is driven by higher speed driving to almost reduce unevenness in reached potential (charge ratio) during a current horizontal scanning period due to a difference in the levels of potentials supplied to the same data signal line during the previous horizontal scanning period. That is, in double speed driving, when the polarity of a signal potential supplied to a data signal line is plus during one frame and the grayscale in a current horizontal scanning period is a halftone, the reached potential varies due to a difference in the levels of potentials supplied during the previous horizontal scanning period (see Fig. 41). However, by performing double speed driving while causing the polarity of a signal potential supplied to a data signal line to be inverted with respect to each horizontal scanning period as shown in Fig. 14, it is possible to cause (i) the waveform of a pixel potential at the time when the level of a potential supplied during the previous horizontal scanning period corresponds to a white tone (grayscale potential V255=-7.5V (potential when common potential is potential 0)), (ii) the waveform of a pixel potential at the time when the level corresponds to a black tone (grayscale potential V0=0V), and (iii) the waveform of a pixel potential at the time when the level corresponds to a halftone to be uniform with one another as shown in Fig. 44, thereby causing reached potentials of individual cases to be substantially the same with one another. Note that Fig. 44 relates to double speed driving as described above, and 1H (one horizontal scanning period) is 14.82 [µs]. Further, when the double speed driving is performed in the configuration of Fig. 14, 1H is specifically as above.

A display section of the liquid crystal display of the present invention may be configured as in (a) of Fig. 15. A display section 10f of (a) of Fig. 15 is different from the display section 10e in that the display section 10f is configured such that a second data signal line for one of adjacent two pixel columns and a first data signal line for the other of the adjacent two pixel columns are adjacent to each other without a pixel column therebetween, or a first data signal line for one of adjacent two pixel columns and a second data signal line for the other of the adjacent two pixel columns are adjacent to each other without a pixel column therebetween.

For example, a first data signal line S1x and a second data signal line S1y are provided at sides of a pixel column PS1, respectively, a first data signal line S2x and a second data signal line S2y are provided at sides of a pixel column PS2, respectively, and the second data signal line S1y for the pixel column PS1 and the first data signal line S2x for the pixel column PS2 are adjacent to each other. Fig. 16 shows a method for driving the display section 10f. (b)-(d) of Fig. 15 show states in which data is written into pixels. As shown in these drawings, in the display section 10f, it is possible to lengthen a time for charging a pixel while reducing flickers, and to almost overcome variations in reached potential (charge ratio) due to a difference in the levels of potentials supplied during the previous scanning period.

The display section 10e in (a) of Fig. 13 may be configured to have a pixel-division system (multi-pixel configuration). In a display section 10g shown in (a) of Fig. 17, a scanning signal line for a pixel is provided in such a manner that the scanning signal line intersects the pixel, and a plurality of retention capacitance lines are provided in such a manner as to be parallel to the scanning signal line. Each pixel is configured such that a first transistor and a first pixel electrode PE1 are provided at one side of a scanning signal line intersecting the pixel, a second transistor and a second pixel electrode PE2 are provided at the other side of the scanning signal line, the first pixel electrode PE1 and the second pixel electrode PE2 are connected with the same data signal line via the first transistor and the second transistor, respectively, the first transistor and the second transistor are connected with the same scanning signal line, and the first pixel electrode PE1 and the second pixel electrode PE2 form retention capacitances with different retention capacitance lines, respectively. Further, a retention capacitance line is provided for two pixels adjacent in a column direction (two pixel columns), and a first or second pixel electrode provided in one of the two pixels and a first or second pixel electrode provided in the other of the two pixels form retention capacitance with this retention capacitance line. Connections between each pixel (first and second pixel electrodes PE1 and PE2 and first and second transistors included in the pixel) and a data signal line and a scanning signal line are the same as those of the display section 10e shown in (a) of Fig. 13.

For example, a scanning signal line G1 is provided in such a manner as to intersect a pixel P(1,1), and a plurality of retention capacitance lines (Cs1-Cs7) are provided in such a manner as to be parallel to scanning signal lines (G1-G6). Connections of pixels P(1,1), P(2,1), P(1,2), and P(2,2) are the same as those in the display section 10c shown in Fig. 5(a). Further, a pixel P(3,1) is configured such that a first pixel electrode PE1 is connected with a second data signal line S1y via a first transistor and a second pixel electrode PE2 is connected with a second data signal line S1y via a second transistor, the first and second transistors are connected with a scanning signal line G3, the first pixel electrode PE1 forms retention capacitance with the retention capacitance line Cs3, and the second pixel electrode PE2 forms retention capacitance with the retention capacitance line Cs4. Further, a pixel P(4,1) is configured such that a first pixel electrode PE1 is connected with a first data signal line S1x via a first transistor and a second pixel electrode PE2 is connected with a first data signal line S1x via a second transistor, the first and second transistors are connected with a scanning signal line G4, the first pixel electrode PE1 forms retention capacitance with the retention capacitance line Cs4, and the second pixel electrode PE2 forms retention capacitance with the retention capacitance line Cs5. Further, a pixel P(3,2) is configured such that a first pixel electrode PE1 is connected with a first data signal line S2x via a first transistor and a second pixel electrode PE2 is connected with a first data signal line S2x via a second transistor, the first and second transistors are connected with a scanning signal line G3, the first pixel electrode PE1 forms retention capacitance with the retention capacitance line Cs4, and the second pixel electrode PE2 forms retention capacitance with the retention capacitance line Cs3. Further, a pixel P(4,2) is configured such that a first pixel electrode PE1 is connected with a second data signal line S2y via a first transistor and a second pixel electrode PE2 is connected with a second data signal line S2y via a second transistor, the first and second transistors are connected with a scanning signal line G4, the first pixel electrode PE1 forms retention capacitance with the retention capacitance line Cs5, and the second pixel electrode PE2 forms retention capacitance with the retention capacitance line Cs4.

Fig. 18 is a timing chart showing a method for driving data signal lines, scanning signal lines, and retention capacitance lines of the display section 10g. As shown in Fig. 18, the method for driving data signal lines and scanning signal lines is similar to the method shown in Fig. 14. In synchronization with putting a scanning signal line connected with a certain pixel in an OFF state, or after putting the scanning signal line in an OFF state, potentials of two retention capacitance lines that form retention capacitances with a first pixel electrode PE1 and a second pixel electrode PE2 of the pixel, respectively, are caused to shift in opposite directions (rising and falling directions). For example, in synchronization with putting the scanning signal lines G1 and G2 in an OFF state, a potential of the retention capacitance line Cs1 is caused to shift in a rising direction and a potential of the retention capacitance line Cs2 is caused to shift in a falling direction, and in synchronization with putting the scanning signal lines G3 and G4 in an OFF state, a potential of the retention capacitance line Cs3 is caused to shift in a rising direction and a potential of the retention capacitance line Cs4 is caused to shift in a falling direction.

The operation of the display section 10g during the first horizontal scanning period shown in (b) of Fig. 17 is the same as that shown in (b) of Fig. 5, and the operation during the next horizontal scanning period is performed as shown in (c) of Fig. 17. That is, scanning signal lines G3 and G4 are simultaneously made ON (put in a selected state), writing of a same potential having a plus polarity from the second data signal line S1y to the first and second pixel electrodes PE1 and PE2 of the pixel P(3,1) and writing of a same potential having a minus polarity from the first data signal line S1x to the first and second pixel electrodes PE1 and PE2 of the pixel P(4,1) are carried out simultaneously, and writing of a same potential having a minus polarity from the first data signal line S2x to the first and second pixel electrodes PE1 and PE2 of the pixel P(3,2) and writing of a same potential having a plus polarity from the second data signal line S2y to the first and second pixel electrodes PE1 and PE2 of the pixel P(4,2) are carried out simultaneously.

In synchronization with making the scanning signal lines G3 and G4 OFF, the retention capacitance line Cs3 is caused to rise and the retention capacitance line Cs4 is caused to fall. Consequently, in a pixel column PS1, a portion of the pixel P(2,1) which includes the second pixel electrode PE2 serves as a dark sub-pixel, a portion of the pixel P(3,1) which includes the first pixel electrode PE1 serves as a bright sub-pixel, a portion of the pixel P(3,1) which includes the second pixel electrode PE2 serves as a dark sub-pixel, and a portion of the pixel P(4,1) which includes the first pixel electrode PE1 serves as a bright sub-pixel. In a pixel column PS2, a portion of the pixel P(2,2) which includes the first pixel electrode PE1 serves as a bright sub-pixel, a portion of the pixel P(3,2) which includes the second pixel electrode PE2 serves as a dark sub-pixel, a portion of the pixel P(3,2) which includes the first pixel electrode PE1 serves as a bright sub-pixel, and a portion of the pixel P(4,2) which includes the second pixel electrode PE2 serves as a dark sub-pixel. Control during the next horizontal scanning period is performed as shown in (d) of Fig. 17. This causes sub-pixels in the pixel column PS1 to be positioned in the order of bright, dark, bright, dark, bright ... and causes sub-pixels in the pixel column PS2 to be positioned in the order of dark, bright, dark, bright, dark .... Thus, bright sub-pixels and dark sub-pixels are positioned in a checkered pattern.

As described above, the display section 10g allows (i) increasing a time for charging a pixel while reducing flickers, (ii) almost overcoming variations in reached potential (charge ratio) in a current horizontal scanning period due to difference in the levels of potentials supplied during the previous horizontal scanning period, and (iii) improving a viewing angle characteristic. Further, signal potentials supplied to two data signal lines adjacent to each other (close to each other) without a pixel column therebetween (e.g. S1y and S2y) always have the same polarity. This allows reducing power consumption due to parasitic capacitance between the two data signal lines, thereby reducing a load on a source driver. Further, bright sub-pixels and dark sub-pixels are positioned in a checkered pattern, thereby preventing the bright sub-pixels from being adjacent to one another or preventing the dark sub-pixels from being adjacent to one another. This allows improving a viewing angle characteristic while reducing jaggyness.

Further, also in this configuration of the present invention, when the length of one horizontal scanning period is set to be the same as that in a comparative configuration where scanning signal lines are selected one by one, it is possible to scan twice the number of scanning signal lines compared with the comparative configuration, and when the number of scanning signal lines is set to be the same as that in the comparative configuration, it is possible to make the length of one horizontal scanning period twice. Accordingly, the liquid crystal display of the present invention is preferably used for a liquid crystal display performing double speed driving and a liquid crystal display with a digital cinema standard or super high vision standard.

The display section of the liquid crystal display device of the present invention may be configured as shown in (a) of Fig. 19. A display section 10h shown in (a) of Fig. 19 is different from the display section 10g shown in (a) of Fig. 17 in that the display section 10h is configured such that a second data signal line for one of two adjacent pixel columns and a first data signal line for the other of the two adjacent pixel columns are adjacent to each other without a pixel column therebetween, or a first data signal line for one of the two adjacent pixel columns and a second data signal line for the other of the two adjacent pixel columns are adjacent to each other without a pixel column therebetween.

For example, a first data signal line S1x and a second data signal line S1y are provided at sides of a pixel column PS1, respectively, a first data signal line S2x and a second data signal line S2y are provided at sides of a pixel column PS2, respectively, and the second data signal line S1y for the pixel column PS1 and the first data signal line S2x for the pixel column PS2 are adjacent to each other. Fig. 20 shows a method for driving the display section 10h. (b)-(d) of Fig. 19 show states in which data is written into pixels. As shown in these drawings, also in the display section 10h, it is possible to (i) lengthen a time for charging a pixel while reducing flickers, (ii) almost overcome variations in reached potential (charge ratio) of a present horizontal scanning period due to difference in the levels of potentials supplied during the previous horizontal scanning period, and (iii) improve a viewing angle characteristic. Further, it is possible to position bright sub-pixels and dark sub-pixels in a checkered pattern, thereby preventing bright sub-pixels from being adjacent to each other or preventing dark sub-pixels from being adjacent to each other. This allows improving a viewing angle characteristic while reducing jaggyness.

The display section 10e shown in (a) of Fig. 13 may be driven as shown in Fig. 21. That is, a refresh period R is provided at the beginning of each horizontal scanning period, and a refresh potential (Vcom for example) is supplied to each data signal line during the refresh period R. The refresh period R is in synchronization with a period during which a latch strobe signal LS is in a "High" state for example (this will be mentioned later). This allows a liquid crystal display whose time for charging a pixel gets inevitably shorter as the display gets enlarged, has higher definition and is driven by higher speed driving to reduce unevenness in reached potential (charge ratio) during a current horizontal scanning period due to a difference in the levels of potentials supplied to the same data signal line during the previous horizontal scanning period. In double speed driving, when the polarity of a signal potential supplied to a data signal line is plus in one frame and the grayscale during a current horizontal scanning period is a halftone, a reached level of a pixel potential differs due to a difference in the levels of potentials supplied during the previous horizontal scanning period (see Fig. 41). However, by performing double speed driving while causing the polarity of a signal potential supplied to a data signal line to be inverted with respect to each 1H and supplying a refresh potential (Vcom) during a refresh period R at the beginning of each horizontal scanning period as shown in Fig. 21, it is possible to cause (i) the waveform of a pixel potential at the time when the level of a potential supplied during the previous horizontal scanning period corresponds to a white tone (grayscale potential V255=-7.5V (potential when common potential is potential 0)), (ii) the waveform of a pixel potential at the time when the level corresponds to a black tone (grayscale potential V0=0V (potential when common potential is potential 0)), and (iii) the waveform of a pixel potential at the time when the level corresponds to a halftone to be close to one another, thereby reducing variations in reached potential. Note that Fig. 43 relates to double speed driving as described above, and 1H (one horizontal scanning period) is 14.82 [µs] and the refresh period is 1.5[µs]. Further, when the double speed driving is performed in the configuration of Fig. 21, 1H and the refresh period R are specifically as above.

Comparison between driving shown in Figs. 14 and 16 (driving in which the polarity of a signal is inverted with respect to each 1H) and driving shown in Fig. 21 (driving in which the polarity of a signal is inverted with respect to each 1H and a refresh potential is supplied at the beginning of 1H) shows that the driving shown in Fig. 21 has higher variations in reached potential (charge ratio) since a time for charging a pixel is shorter due to a refresh period (see Figs. 43 and 44), but supply of a refresh potential reduces a load on a driving circuit for data signal lines (source driver). That is, the driving shown in Fig. 21 is advantageous in that it reduces power consumption and heat of the source driver compared with the driving shown in Fig. 16.

Also by causing the display section 10g shown in (a) of Fig. 17 based on a pixel-division system to be driven as shown in Fig. 22, it is possible to greatly reduce variations in reached potential (charge ratio) during a current horizontal scanning period due to a difference in the levels of potentials supplied to the same data signal line during the previous horizontal scanning period. The driving shown in Fig. 22 is advantageous in that it reduces power consumption and heat of the source driver compared with the driving shown in Figs. 18 and 20.

Further, the display section 10e shown in (a) of Fig. 13 may be driven as shown in Fig. 23. That is, a refresh period R is provided at the beginning of each horizontal scanning period and a refresh potential (e.g. Vcom) is supplied to a data signal line during the refresh period R, and each scanning signal line is selected plural times (e.g. three times) with timing when approximately 2/3 frame period has passed from previous scanning and in synchronization with the refresh period R, and the refresh potential (e.g. Vcom) is written in a pixel connected with the scanning signal line during this intermediate selection period. Although the intermediate selection period is shorter than one horizontal scanning period, by setting a plurality of intermediate selection periods with one horizontal scanning period therebetween and thus performing impulse driving, it is possible to write black (insert black) in individual pixels. Consequently, a pixel displays input video data during 2/3 frame period out of one frame period and displays black during 1/3 frame period out of the one frame period. This reduces tailing etc. when displaying a moving image, thereby improving the quality of the displayed moving image.

Also by causing the display section 10g shown in (a) of Fig. 17 based on the pixel-division system to be driven as shown in Fig. 24, it is possible to reduce tailing etc. when displaying a moving image and thus improve the quality of the displayed moving image.

### [Embodiment 3]

(a) of Fig. 25 is a drawing schematically showing one example of a configuration of a display section of the liquid crystal display of the present invention. (b)-(d) of Fig. 25 are drawings schematically showing a driving method of the display section. Fig. 26 is a timing chart showing the driving method. As shown in (a) of Fig. 25, a display section 10i includes first and second data signal lines (e.g. S1x and S1y) with respect to each pixel column (e.g. PS1), and one pixel (e.g. P(1, 1)) included in the pixel column is connected with one scanning signal line (e.g. G1) and is connected with one of the first and second data signal lines (e.g. S1x and S1y). Specifically, assume that pixels on each pixel column are sequentially paired and grouped from a pixel on a first column in such a manner that two pixels adjacent in a column direction are made a pair, adjacent two pairs are grouped sequentially, and groups thus made are given count numbers sequentially. In this case, two pixels in each pair in one group are connected with different data signal lines, odd-number-positioned pixels are connected with the same data signal line, and two groups that are given successive count numbers are designed such that an odd-number-positioned pixel in one of the two groups and an odd-number-positioned pixel in the other of the two groups are connected with different data signal lines. That is, pixels are connected with data signal lines in such a manner that when a pixel on a first row is regarded as a 1^{st} pixel, each pixel other than 2×2×i+1^{st} (i is a natural number) pixel counted in a scanning direction and its upstream-adjacent pixel of the pixel are connected with different data signal lines and the 2×2×i+1^{st} pixel and its upstream-adjacent pixel are connected with the same data signal line. In each pixel, a pixel electrode PE is connected with one data signal line via a transistor (TFT) and the gate terminal of the transistor is connected with one scanning signal line.

Further, signal potentials with opposite polarities are supplied to first and second data signal lines, respectively, and the polarity of a signal potential supplied to each data signal line is inverted with respect to two horizontal scanning periods (2H). Further, pixels included in one pixel row are connected with the same scanning signal line, a first data signal line for one of two adjacent pixel columns and a first data signal line for the other of the two adjacent pixel columns are supplied with signal potentials having the same polarity, and connections with first and second data signal lines are made oppositely between pixels adjacent in a row direction. First and second data signal lines for a pixel column are provided at both sides of the pixel column, respectively, and a first data signal line for one of adjacent two pixel columns and a first data signal line for the other of the adjacent two pixel columns are adjacent to each other without a pixel column therebetween, or a second data signal line for one of adjacent two pixel columns and a second data signal line for the other of the adjacent two pixel columns are adjacent to each other without a pixel column therebetween.

A group is selected in a scanning direction (according to the count number mentioned above), and simultaneous selection of two scanning signal lines respectively connected with two pixels in a pair is sequentially carried out in the selected group. That is, scanning signal lines are sequentially selected with starting from a scanning signal line connected with a pixel on a first row in such a manner that adjacent two scanning signal lines are selected simultaneously.

As for the first data signal line S1x and the second data signal line S1y shown in (a) of Fig. 25, during a given horizontal scanning period (state shown in (b) of Fig. 25), the first data signal line S1x is supplied with a potential with a plus polarity, and the second data signal line S1y is supplied with a potential with a minus polarity. Also during a next horizontal scanning period (state shown in (c) of Fig. 25), the first data signal line S1x is supplied with a potential with a plus polarity, and the second data signal line S1y is supplied with a potential with a minus polarity. During a further next horizontal scanning period (state shown in (d) of Fig. 25), the first data signal line S1x is supplied with a potential with a minus polarity, and the second data signal line S1y is supplied with a potential with a plus polarity. As for the first data signal line S2x and the second data signal line S2y shown in (a) of Fig. 25, during a given horizontal scanning period (state shown in (b) of Fig. 25), the first data signal line S2x is supplied with a potential with a plus polarity, and the second data signal line S2y is supplied with a potential with a minus polarity. Also during a next horizontal scanning period (state shown in (c) of Fig. 25), the first data signal line S2x is supplied with a potential with a plus polarity, and the second data signal line S2y is supplied with a potential with a minus polarity. During a further next horizontal scanning period (state shown in (d) of Fig. 25), the first data signal line S2x is supplied with a potential with a minus polarity, and the second data signal line S2y is supplied with a potential with a plus polarity. Note that between adjacent pixel columns PS1 and PS2, the second data signal line S1y for the pixel column PS1 and the second data signal line S2y for the pixel column PS2 are adjacent to each other without a pixel column therebetween.

As shown in (b)-(d) of Fig. 25 and Fig. 26, initially, the scanning signal line G1 connected with the pixels P(1,1) and P(1,2) and the scanning signal line G2 connected with the pixels P(2,1) and P(2,2) are selected simultaneously. Then, the scanning signal line G3 connected with the pixels P(3,1) and P(3,2) and the scanning signal line G4 connected with the pixels P(4,1) and P(4,2) are selected simultaneously. Then, the scanning signal line G5 connected with the pixels P(5,1) and P(5,2) and the scanning signal line G6 connected with the pixels P(6,1) and P(6,2) are selected simultaneously.

Consequently, in the display section 10i, during a first horizontal scanning period, writing of a potential having a plus polarity from the first data signal line S1x to the pixel electrode of the pixel P(1,1) and writing of a potential having a minus polarity from the second data signal line S1y to the pixel P(2,1) are carried out simultaneously, and writing of a potential having a minus polarity from the second data signal line S2y to the pixel electrode of the pixel P(1,2) and writing of a potential having a plus polarity from the first data signal line S2x to the pixel P(2,2) are carried out simultaneously (see (b) of Fig. 25). Further, during a next horizontal scanning period, writing of a potential having a plus polarity from the first data signal line S1x to the pixel electrode of the pixel P(3,1) and writing of a potential having a minus polarity from the second data signal line S1y to the pixel P(4,1) are carried out simultaneously, and writing of a potential having a minus polarity from the second data signal line S2y to the pixel electrode of the pixel P(3,2) and writing of a potential having a plus polarity from the first data signal line S2x to the pixel P(4,2) are carried out simultaneously (see (c) of Fig. 25). During a further next horizontal scanning period, writing of a potential having a plus polarity from the second data signal line S1y to the pixel electrode of the pixel P(5,1) and writing of a potential having a minus polarity from the first data signal line S1x to the pixel electrode of the pixel P(6,1) are carried out simultaneously, and writing of a potential having a minus polarity from the first data signal line S2x to the pixel electrode of the pixel P(5,2) and writing of a potential having a plus polarity from the second data signal line S2y to the pixel electrode of the pixel P(6,2) are carried out simultaneously (see (d) of Fig. 25).

As described above, in the display section 10i, it is possible to lengthen one horizontal scanning period by simultaneously selecting two scanning signal lines, and at the same time to carry out dot-inversion of individual pixels. That is, it is possible to increase a time for charging a pixel while reducing flickers. Further, signal potentials supplied to two data signal lines adjacent to each other (close to each other) without a pixel column therebetween (e.g. S1y and S2y) always have the same polarity, and therefore it is possible to reduce power consumption due to a parasitic capacitance between the two data signal lines. This allows reducing a load on a source driver.

Further, also in this configuration of the present invention, when the length of one horizontal scanning period is set to be the same as that in a comparative configuration where scanning signal lines are selected one by one, it is possible to scan twice the number of scanning signal lines compared with the comparative configuration, and when the number of scanning signal lines is set to be the same as that in the comparative configuration, it is possible to make the length of one horizontal scanning period twice. Accordingly, the liquid crystal display of the present invention is preferably used for a liquid crystal display that carries out double speed driving and a liquid crystal display with a digital-cinema standard or a super-highvision standard.

Further, by inverting the polarity of a signal potential supplied to a data signal line with respect to every two horizontal scanning periods, it is possible to reduce power consumption of a source driver compared with a case where the polarity of the signal potential is inverted with respect to each horizontal scanning period.

The display section 10i in (a) of Fig. 25 may be configured to have a pixel-division system (multi-pixel configuration) as shown in (a) of Fig. 27. In a display section 10j of (a) of Fig. 27, a scanning signal line for a pixel is provided in such a manner that the scanning signal line intersects the pixel, and a plurality of retention capacitance lines are provided in such a manner as to be parallel to the scanning signal line. Each pixel is configured such that a first transistor and a first pixel electrode PE1 are provided at one side of a scanning signal line intersecting the pixel, a second transistor and a second pixel electrode PE2 are provided at the other side of the scanning signal line, the first pixel electrode PE1 and the second pixel electrode PE2 are connected with the same data signal line via the first transistor and the second transistor, respectively, the first transistor and the second transistor are connected with the same scanning signal line, and the first pixel electrode PE1 and the second pixel electrode PE2 form retention capacitances with different retention capacitance lines, respectively. Further, a retention capacitance line is provided for two pixels adjacent in a column direction (two pixel columns), and a first or second pixel electrode provided in one of the two pixels and a first or second pixel electrode provided in the other of the two pixels form retention capacitance with this retention capacitance line. Connections of each pixel (first and second pixel electrodes PE1 and PE2 and first and second transistors included in the pixel) and data signal lines and scanning signal lines are the same as those of the display section 10i shown in Fig. 25(a).

Fig. 28 is a timing chart showing a method for driving data signal lines, scanning signal lines, and retention capacitance lines of the display section 10j. As shown in Fig. 28, the method for driving the data signal lines and the scanning signal lines is similar to the method shown in Fig. 26. In synchronization with putting a scanning signal line connected with a certain pixel in an OFF state, or after putting the scanning signal line in an OFF state, potentials of two retention capacitance lines that form retention capacitances with a first pixel electrode PE1 and a second pixel electrode PE2 of the pixel, respectively, are caused to shift in opposite directions (rising and falling directions). For example, in synchronization with putting the scanning signal lines G1 and G2 in an OFF state, a potential of the retention capacitance line Cs1 is caused to shift in a rising direction and a potential of the retention capacitance line Cs2 is caused to shift in a falling direction, and in synchronization with putting the scanning signal lines G3 and G4 in an OFF state, a potential of the retention capacitance line Cs3 is caused to shift in a rising direction and a potential of the retention capacitance line Cs4 is caused to shift in a falling direction.

The operation of the display section 10j during the first horizontal scanning period shown in (b) of Fig. 27 is the same as that shown in (b) of Fig. 5, the operation during the next horizontal scanning period is performed as shown in (c) of Fig. 27, and the operation during the further next horizontal scanning period is performed as shown in (d) of Fig. 27. This causes sub-pixels in the pixel column PS1 to be positioned in the order of bright, dark, bright, dark, bright ... and causes sub-pixels in the pixel column PS2 to be positioned in the order of dark, bright, dark, bright, dark ....

As described above, the display section 10j allows (i) increasing a time for charging a pixel while reducing flickers, and (ii) improving a viewing angle characteristic. Further, signal potentials supplied to two data signal lines adjacent to each other (close to each other) without a pixel column therebetween (e.g. S1y and S2y) always have the same polarity. This allows reducing power consumption due to parasitic capacitance between the two data signal lines, thereby reducing a load on a source driver. Further, bright sub-pixels and dark sub-pixels are positioned in a checkered pattern, thereby preventing the bright sub-pixels from being adjacent to one another or preventing the dark sub-pixels from being adjacent to one another. This allows improving a viewing angle characteristic while reducing jaggyness.

Further, also in this configuration of the present invention, when the length of one horizontal scanning period is set to be the same as that in a comparative configuration where scanning signal lines are selected one by one, it is possible to scan twice the number of scanning signal lines compared with the comparative configuration, and when the number of scanning signal lines is set to be the same as that in the comparative configuration, it is possible to make the length of one horizontal scanning period twice. Accordingly, the liquid crystal display of the present invention is preferably used for a liquid crystal display performing double speed driving and a liquid crystal display with a digital cinema standard or super high vision standard.

The display section 10i shown in (a) of Fig. 25 may be driven as shown in Fig. 29. That is, a refresh period R is provided at the beginning of each horizontal scanning period, and a refresh potential (Vcom for example) is supplied to each data signal line during the refresh period R. The refresh period R is in synchronization with a period during which a latch strobe signal LS is in a "High" state for example (this will be mentioned later). This allows a liquid crystal display whose time for charging a pixel gets inevitably shorter as the display gets enlarged, has higher definition and is driven by higher speed driving to reduce unevenness in reached potential (charge ratio) during a current horizontal scanning period due to a difference in the levels of potentials supplied to the same data signal line during the previous horizontal scanning period. In double speed driving, when the polarity of a signal potential supplied to a data signal line is plus in one frame and the grayscale during a current horizontal scanning period is a halftone, a reached level of a pixel potential differs due to a difference in the levels of potentials supplied during the previous horizontal scanning period (see Fig. 41). However, by performing double speed driving while causing the polarity of a signal potential supplied to a data signal line to be inverted with respect to every 2H and supplying a refresh potential (Vcom) during a refresh period R at the beginning of each horizontal scanning period, it is possible to reduce variations in reached level.

Also by causing the display section 10j shown in (a) of Fig. 27 based on a pixel-division system to be driven as shown in Fig. 30, it is possible to greatly reduce variations in reached potential (charge ratio) during a current horizontal scanning period due to a difference in the levels of potentials supplied to the same data signal line during the previous horizontal scanning period.

Further, the display section 10i shown in (a) of Fig. 25 may be driven as shown in Fig. 31. That is, a refresh period R is provided at the beginning of each horizontal scanning period and a refresh potential (e.g. Vcom) is supplied to a data signal line during the refresh period R, and each scanning signal line is selected plural times (e.g. three times) with timing when approximately 2/3 frame period has passed from last scanning and in synchronization with the refresh period R, and the refresh potential (e.g. Vcom) is written in a pixel connected with the scanning signal line during this intermediate selection period. Although the intermediate selection period is shorter than one horizontal scanning period, by setting a plurality of intermediate selection periods with one horizontal scanning period therebetween and thus performing impulse driving, it is possible to write black (insert black) in individual pixels. Consequently, a pixel displays input video data during 2/3 frame period out of one frame period and displays black during 1/3 frame period out of the one frame period. This reduces tailing etc. when displaying a moving image, thereby improving the quality of the displayed moving image.

Also by causing the display section 10j shown in (a) of Fig. 27 based on the pixel-division system to be driven as shown in Fig. 32, it is possible to reduce tailing etc. when displaying a moving image and thus improve the quality of the displayed moving image.

### [Embodiment 4]

(a) of Fig. 33 is a drawing schematically showing one example of a configuration of a display section of the liquid crystal display of the present invention. (b)-(e) of Fig. 33 are drawings schematically showing a driving method of the display section. Fig. 34 is a timing chart showing the driving method. As shown in (a) of Fig. 33, a display section 10k includes first and second data signal lines (e.g. S1a and S1b) that correspond to one pixel column (e.g. PS1) and that are provided both sides of the pixel column, and one pixel (e.g. P(1, 1)) included in the pixel column is connected with one scanning signal line (e.g. G1) and is connected with one of the first and second data signal lines (e.g. S1a and S1b). Specifically, assume that pixels on each pixel column are paired sequentially from a first pixel on the pixel column in such a manner that successive two odd-number-positioned pixels counted in a scanning direction are paired sequentially, successive two even-number-positioned pixels counted in the scanning direction are paired sequentially, and a pair consisting of successive two odd-number-positioned pixels and a pair consisting of successive two even-number-positioned pixels are given count numbers alternately. In this case, two pixels in each pair are connected with different data signal lines. In each pixel, a pixel electrode PE is connected with one data signal line via a transistor (TFT) and the gate terminal of the transistor is connected with one scanning signal line.

Further, signal potentials with the same polarity are supplied to first and second data signal lines (e.g. S1a and S1b), respectively, and the polarity of a signal potential supplied to each data signal line is inverted with respect to one horizontal scanning period (1H). Further, pixels included in one pixel row are connected with the same scanning signal line, and first and second data signal lines for one of adjacent two pixel columns (e.g. PS1) are given signal potentials opposite to signal potentials given to first and second data signal lines for the other of the adjacent two pixel columns (e.g. PS2).

Simultaneous selection of scanning signal lines respectively connected with two pixels in a pair is carried out in accordance with the count numbers mentioned above (the simultaneous selection of scanning signal lines connected with two odd-number-positioned pixels in a pair and the simultaneous selection of scanning signal lines connected with two even-number-positioned pixels in a pair are carried out alternately in a scanning direction). That is, scanning signal lines are selected sequentially with starting from a first scanning signal line that is connected with a pixel on a first row, in such a manner that simultaneous selection of successive two odd-number-positioned scanning signal lines and simultaneous selection of successive two even-number-positioned scanning signal lines are carried out alternately).

For example, in a case of the pixel column PS1, a first data signal line S1x and a second data signal line S1y are provided at sides of the pixel column PS1, respectively, a first-positioned pixel P(1,1) and a third-positioned pixel P(3,1) are paired, the pixel P(1,1) is connected with a scanning signal line G1 and the first data signal line S1a, and the pixel P(3,1) is connected with a scanning signal line G3 and the second data signal line S1b. Similarly, a second-positioned pixel P(2,1) and a fourth-positioned pixel P(4,1) are paired, the pixel P(2,1) is connected with a scanning signal line G2 and the first data signal line S1a, and the pixel P(4,1) is connected with a scanning signal line G4 and the second data signal line S1b. Similarly, a fifth-positioned pixel P(5,1) and a seventh pixel P(7,1) are paired, the pixel P(5,1) is connected with a scanning signal line G5 and the first data signal line S1a, and the pixel P(7,1) is connected with a scanning signal line G7 and the second data signal line S1b.

Further, in a case of the pixel column PS2, a first data signal line S2a and a second data signal line S2b are provided at sides of the pixel column PS2, respectively, a first-positioned pixel P(1,2) and a third-positioned pixel P(3,2) are paired, the pixel P(1,2) is connected with a scanning signal line G1 and the first data signal line S2a, and the pixel P(3,2) is connected with a scanning signal line G3 and the second data signal line S2b. Similarly, a second-positioned pixel P(2,2) and a fourth-positioned pixel P(4,2) are paired, the pixel P(2,2) is connected with a scanning signal line G2 and the first data signal line S2a, and the pixel P(4,2) is connected with a scanning signal line G4 and the second data signal line S2b. Similarly, a fifth-positioned pixel P(5,2) and a seventh pixel P(7,2) are paired, the pixel P(5,2) is connected with a scanning signal line G5 and the first data signal line S2a, and the pixel P(7,2) is connected with a scanning signal line G7 and the second data signal line S2b.

As for the first and second data signal lines S1a and S1b, during a given horizontal scanning period (state shown in (b) of Fig. 33), a potential having a plus polarity is supplied to the first data signal line S1a, and a potential having a plus polarity is supplied to the second data signal line S1b. During a next horizontal scanning period (state shown in (c) of Fig. 33), a potential having a minus polarity is supplied to the first data signal line S1a, and a potential having a minus polarity is supplied to the second data signal line S1b. During a further next horizontal scanning period (state shown in (d) of Fig. 33), a potential with a plus polarity is supplied to the first data signal line S1a and a potential with a plus polarity is supplied to the second data signal line S1b.

As shown in (b)-(d) of Fig. 33 and Fig. 34, initially, the scanning signal line G1 connected with the pixels P(1,1) and P(1,2) and the scanning signal line G3 connected with the pixels P(3,1) and P(3,2) are selected simultaneously. Then, the scanning signal line G2 connected with the pixels P(2,1) and P(2,2) and the scanning signal line G4 connected with the pixels P(4,1) and P(4,2) are selected simultaneously. Then, the scanning signal line G5 connected with the pixels P(5,1) and P(5,2) and the scanning signal line G7 connected with the pixels P(7,1) and P(7,2) are selected simultaneously.

Consequently, in the display section 10k, during a first horizontal scanning period, writing of a potential having a plus polarity from the first data signal line S1a to the pixel electrode of the pixel P(1,1) and writing of a potential having a plus polarity from the second data signal line S1y to the pixel P(3,1) are carried out simultaneously, and writing of a potential having a minus polarity from the first data signal line S2a to the pixel electrode of the pixel P(1,2) and writing of a potential having a minus polarity from the second data signal line S2b to the pixel electrode of the pixel P(3,2) are carried out simultaneously (see (b) of Fig. 33). Further, during a next horizontal scanning period, writing of a potential having a minus polarity from the first data signal line S1a to the pixel electrode of the pixel P(2,1) and writing of a potential having a minus polarity from the second data signal line S1b to the pixel electrode of the pixel P(4,1) are carried out simultaneously, and writing of a potential having a plus polarity from the first data signal line S2a to the pixel electrode of the pixel P(2,2) and writing of a potential having a plus polarity from the second data signal line S2b to the pixel electrode of the pixel P(4,2) are carried out simultaneously (see (c) of Fig. 33). During a further next horizontal scanning period, writing of a potential having a plus polarity from the first data signal line S1a to the pixel electrode of the pixel P(5,1) and writing of a potential having a plus polarity from the second data signal line S1b to the pixel electrode of the pixel P(7,1) are carried out simultaneously, and writing of a potential having a minus polarity from the first data signal line S2a to the pixel electrode of the pixel P(5,2) and writing of a potential having a minus polarity from the second data signal line S2b to the pixel electrode of the pixel P(7,2) are carried out simultaneously (see (d) of Fig. 33).

As described above, in the display section 10k, it is possible to lengthen one horizontal scanning period by simultaneously selecting two scanning signal lines, and at the same time to carry out dot-inversion of individual pixels. That is, it is possible to increase a time for charging a pixel while reducing flickers.

Further, also in this configuration of the present invention, when the length of one horizontal scanning period is set to be the same as that in a comparative configuration where scanning signal lines are selected one by one, it is possible to scan twice the number of scanning signal lines compared with the comparative configuration, and when the number of scanning signal lines is set to be the same as that in the comparative configuration, it is possible to make the length of one horizontal scanning period twice. Accordingly, the liquid crystal display of the present invention is preferably used for a liquid crystal display that performs double speed driving and a liquid crystal display with a digital cinema standard or a super high vision standard.

Further, in this configuration, the polarity of a signal potential supplied to a data signal line is inverted with respect to each horizontal scanning period. This allows a liquid crystal display whose time for charging a pixel gets inevitably shorter as the display gets enlarged, has higher definition and is driven by higher speed driving to almost reduce unevenness in reached potential (charge ratio) during a current horizontal scanning period due to a difference in the levels of potentials supplied to the same data signal line during the previous horizontal scanning period. That is, in double speed driving, when the polarity of a signal potential supplied to a data signal line is plus during one frame and the grayscale in a current horizontal scanning period is a halftone, the reached potential varies due to a difference in the levels of potentials supplied during the previous horizontal scanning period (see Fig. 41). However, by performing double speed driving while causing the polarity of a signal potential supplied to a data signal line to be inverted with respect to each horizontal scanning period as shown in Fig. 34, it is possible to cause (i) the waveform of a pixel potential at the time when the level of a potential supplied during the previous horizontal scanning period corresponds to a white tone (grayscale potential V255=-7.5V), (ii) the waveform of a pixel potential at the time when the level corresponds to a black tone (grayscale potential V0=0V), and (iii) the waveform of a pixel potential at the time when the level corresponds to a halftone to be uniform with one another as shown in Fig. 44, thereby causing reached potentials of individual cases to be substantially the same with one another.

The display section 10k in (a) of Fig. 33 may be configured to have a pixel-division system (multi-pixel configuration) as shown in (a) of Fig. 35. In a display section 10p of (a) of Fig. 35, a scanning signal line for a pixel is provided in such a manner that the scanning signal line intersects the pixel, and a plurality of retention capacitance lines are provided in such a manner as to be parallel to the scanning signal line. Each pixel is configured such that a first transistor and a first pixel electrode PE1 are provided at one side of a scanning signal line intersecting the pixel, a second transistor and a second pixel electrode PE2 are provided at the other side of the scanning signal line, the first pixel electrode PE1 and the second pixel electrode PE2 are connected with the same data signal line via the first transistor and the second transistor, respectively, the first transistor and the second transistor are connected with the same scanning signal line, and the first pixel electrode PE1 and the second pixel electrode PE2 form retention capacitances with different retention capacitance lines, respectively. Further, a retention capacitance line is provided for two pixels adjacent in a column direction (two pixel columns), and a first or second pixel electrode provided in one of the two pixels and a first or second pixel electrode provided in the other of the two pixels form retention capacitance with the retention capacitance line. Connections of each pixel (first and second pixel electrodes PE1 and PE2 and first and second transistors included in the pixel) and data signal lines and scanning signal lines are the same as those of the display section 10k shown in Fig. (a) of Fig. 33.

Fig. 36 is a timing chart showing a method for driving data signal lines, scanning signal lines, and retention capacitance lines of the display section 10p. As shown in Fig. 36, the method for driving the data signal lines and the scanning signal lines is similar to the method shown in Fig. 34. In synchronization with putting a scanning signal line connected with a certain pixel in an OFF state, or after putting the scanning signal line in an OFF state, potentials of two retention capacitance lines that form retention capacitances with a first pixel electrode PE1 and a second pixel electrode PE2 of the pixel, respectively, are caused to shift in opposite directions (rising and falling directions). For example, when the scanning signal lines G1 and G3 are put in an OFF state, potentials of the retention capacitance lines Cs1 and Cs2 are not caused to shift, but in synchronization with putting the scanning signal lines G2 and G4 in an OFF state, the potential of the retention capacitance line Cs1 is caused to shift in a rising direction and the potential of the retention capacitance line Cs2 is caused to shift in a falling direction, and a potential of the retention capacitance line Cs3 is caused to shift in a rising direction and a potential of the retention capacitance line Cs4 is caused to shift in a falling direction.

To be more specific, the retention capacitance lines of the display section 10p are configured and subjected to potential-control as follows: retention capacitance lines that form retention capacitances with pixel electrodes PE1 and PE2 of a pixel on a 1^{st} row (e.g. P(1,1)) are first-positioned and second-positioned retention capacitance lines Cs1 and Cs2. The second-positioned retention capacitance line Cs2 also forms retention capacitance with a pixel electrode PE2 of a pixel on a 2^{nd} row (e.g. P(2,1)). At the time of completion of simultaneous writing of the pixels on the 1^{st} and 2^{nd} rows or after the completion, potentials of the first-positioned and second-positioned retention capacitance lines Cs1 and Cs2 shift simultaneously and in an opposite direction. Assume that retention capacitance lines are counted from a first-positioned retention capacitance line Cs1 in a scanning direction and every two odd-number-positioned retention capacitance lines are paired. In each pair (e.g. pair consisting of Cs1 and Cs3), in synchronization with shift of the level of a potential of the former retention capacitance line in the pair (e.g. Cs1), a potential of the latter retention capacitance line in the pair (e.g. Cs3) is shifted in the same direction. Between adjacent two pairs (e.g. a pair consisting of Cs1 and Cs3 and a pair consisting of Cs5 and Cs7), potentials of retention capacitance lines included in the pair at the downstream of a scanning direction (e.g. Cs5 and Cs7) are shifted by two horizontal scanning periods (2H) after shifting of potentials of retention capacitance lines at the upstream in a scanning direction (e.g. Cs1 and Cs3). Assume that every two even retention capacitance lines are paired. In each pair (e.g. pair consisting of Cs2 and Cs4), in synchronization with shift of the level of a potential of the former retention capacitance line in the pair (e.g. Cs2), a potential of the latter retention capacitance line in the pair (e.g. Cs4) is shifted in the same direction. Between adjacent two pairs (e.g. a pair consisting of Cs2 and Cs4 and a pair consisting of Cs6 and Cs8), potentials of retention capacitance lines included in the pair at the downstream of a scanning direction (e.g. Cs6 and Cs8) are shifted by two horizontal scanning periods (2H) after shifting of potentials of retention capacitance lines at the upstream in a scanning direction (e.g. Cs2 and Cs4). A cycle of shifting of a potential level of each retention capacitance line is 1 vertical scanning period (1 frame period).

As shown in (b) of Fig. 35, in the display section 10p, during a first horizontal scanning period, scanning signal lines G1 and G3 are simultaneously made ON (put in a selected state), writing of a same potential having a plus polarity from the first data signal line S1a to the first and second pixel electrodes PE1 and PE2 of the pixel P(1,1) and writing of a same potential having a plus polarity from the second data signal line S1b to the first and second pixel electrodes PE1 and PE2 of the pixel P(3,1) are carried out simultaneously, and writing of a same potential having a minus polarity from the first data signal line S2a to the first and second pixel electrodes PE1 and PE2 of the pixel P(1,2) and writing of a same potential having a minus polarity from the second data signal line S2b to the first and second pixel electrodes PE1 and PE2 of the pixel P(3,2) are carried out simultaneously.

Subsequently, as shown in (c) of Fig. 35, during a next horizontal scanning period, scanning signal lines G2 and G4 are simultaneously made ON (put in a selected state), writing of a same potential having a minus polarity from the first data signal line S1a to the first and second pixel electrodes PE1 and PE2 of the pixel P(2,1) and writing of a same potential having a minus polarity from the second data signal line S1b to the first and second pixel electrodes PE1 and PE2 of the pixel P(4,1) are carried out simultaneously, and writing of a same potential having a plus polarity from the first data signal line S2a to the first and second pixel electrodes PE1 and PE2 of the pixel P(2,2) and writing of a same potential having a plus polarity from the second data signal line S2b to the first and second pixel electrodes PE1 and PE2 of the pixel P(4,2) are carried out simultaneously.

In synchronization with making the scanning signal lines G2 and G4 OFF simultaneously, the retention capacitance line Cs1 is caused to rise and the retention capacitance line Cs2 is caused to fall, and the retention capacitance line Cs3 is caused to rise and the retention capacitance line Cs4 is caused to fall.

Consequently, in the pixel column PS1, a portion of the pixel P(1,1) which includes the first pixel electrode PE1 serves as a bright sub-pixel, a portion of the pixel P(1,1) which includes the second pixel electrode PE2 serves as a dark sub-pixel, a portion of the pixel P(2,1) which includes the first pixel electrode PE1 serves as a bright sub-pixel, a portion of the pixel P(2,1) which includes the second pixel electrode PE2 serves as a dark sub-pixel, a portion of the pixel P(3,1) which includes the first pixel electrode PE1 serves as a bright sub-pixel, and a portion of the pixel P(3,1) which includes the second pixel electrode PE2 serves as a dark sub-pixel, and so on. In the pixel column PS2, a portion of the pixel P(1,2) which includes the second pixel electrode PE2 serves as a dark sub-pixel, a portion of the pixel P(1,2) which includes the first pixel electrode PE1 serves as a bright sub-pixel, a portion of the pixel P(2,1) which includes the second pixel electrode PE2 serves as a dark sub-pixel, a portion of the pixel P(2,1) which includes the first pixel electrode PE1 serves as a bright sub-pixel, a portion of the pixel P(3,1) which includes the second pixel electrode PE2 serves as a dark sub-pixel, and a portion of the pixel P(3,1) which includes the first pixel electrode PE1 serves as a bright sub-pixel, and so on. This causes sub-pixels in the pixel column PS1 to be positioned in the order of bright, dark, bright, dark, bright ... and causes sub-pixels in the pixel column PS2 to be positioned in the order of dark, bright, dark, bright, dark ....

As described above, the display section 10p allows increasing a time for charging a pixel while reducing flickers, allows almost overcoming variations in reached potential (charge ratio) during a current horizontal scanning period due to a difference in the levels of potentials supplied during the previous scanning period, and allows improving a viewing angle characteristic. Further, since bright sub-pixels and dark sub-pixels are positioned in a checkered pattern, it is possible to prevent bright sub-pixels from being adjacent to each other or prevent dark sub-pixels from being adjacent to each other. This allows improving a viewing angle characteristic while reducing jaggyness.

Further, also in this configuration of the present invention, when the length of one horizontal scanning period is set to be the same as that in a conventional configuration where scanning signal lines are selected one by one, it is possible to scan twice the number of scanning signal lines compared with the conventional configuration, and when the number of scanning signal lines is set to be the same as that in the conventional configuration, it is possible to make the length of one horizontal scanning period twice. Accordingly, the liquid crystal display of the present invention is preferably used for a liquid crystal display performing double speed driving and a liquid crystal display with a digital cinema standard or super high vision standard.

Further, shifts of levels of potentials of the retention capacitance lines Cs1 and Cs3 are made in the same direction and in synchronization with each other, and shifts of levels of potentials of the retention capacitance lines Cs2 and Cs4 are made in the same direction and in synchronization with each other. Accordingly, it is possible for the retention capacitance lines Cs1 and Cs3 to share the same signal (Cs signal) supplied thereto and possible for the retention capacitance lines Cs2 and Cs4 to share the same signal (Cs signal) supplied thereto. That is, as described above, when odd-number-positioned retention capacitance lines are sequentially paired from a first-positioned retention capacitance line in such a manner that every successive two retention capacitance lines are regarded as a pair and even-number-positioned retention capacitance lines are sequentially paired from a second-positioned retention capacitance line in such a manner that every successive two retention capacitance lines are regarded as a pair, it is possible for paired two retention capacitance lines to share the same Cs signal supplied thereto. This allows reducing the number (kind) of Cs signals supplied to all retention capacitance lines almost by half, thereby reducing the size of a Cs control circuit for generating Cs signals (see Fig. 46). Paired two retention capacitance lines (e.g. Cs1 and Cs3) may be connected in a panel (e.g. connected with the same Cs main line) or may be connected with the same output terminal in the Cs control circuit.

The display section 10k shown in (a) of Fig. 33 may be driven as shown in Fig. 37. That is, a refresh period R is provided at the beginning of each horizontal scanning period, and a refresh potential (Vcom for example) is supplied to each data signal line during the refresh period R. The refresh period R is in synchronization with a period during which a latch strobe signal LS is in a "High" state for example (this will be mentioned later). This allows a liquid crystal display whose time for charging a pixel gets inevitably shorter as the display gets enlarged, has higher definition and is driven by higher speed driving to reduce unevenness in reached potential (charge ratio) during a current horizontal scanning period due to a difference in the levels of potentials supplied to the same data signal line during the previous horizontal scanning period. In double speed driving, when the polarity of a signal potential supplied to a data signal line is plus in one frame and the grayscale during a current horizontal scanning period is a halftone, a reached potential differs due to a difference in the levels of potentials supplied during the previous horizontal scanning period (see Fig. 41). However, by performing double speed driving while causing the polarity of a signal potential supplied to a data signal line to be inverted with respect to every 1H and supplying a refresh potential (Vcom) during a refresh period R at the beginning of each horizontal scanning period as shown in Fig. 37, it is possible to cause (i) the waveform of a pixel potential at the time when the level of a potential supplied during the previous horizontal scanning period corresponds to a white tone (grayscale potential V255=-7.5V), (ii) the waveform of a pixel potential at the time when the level corresponds to a black tone (grayscale potential V0=0V), and (iii) the waveform of a pixel potential at the time when the level corresponds to a halftone to be close to one another as shown in Fig. 43, thereby reducing variations in reached potentials of individual cases.

Also by causing the display section 10p shown in (a) of Fig. 35 based on a pixel-division system to be driven as shown in Fig. 38, it is possible to greatly reduce variations in reached potential (charge ratio) during a current horizontal scanning period due to a difference in the levels of potentials supplied to the same data signal line during the previous horizontal scanning period.

Further, the display section 10k shown in (a) of Fig. 33 may be driven as shown in Fig. 39. That is, a refresh period R is provided at the beginning of each horizontal scanning period and a refresh potential (e.g. Vcom) is supplied to a data signal line during the refresh period R, and each scanning signal line is selected plural times (e.g. three times) with timing when approximately 2/3 frame period has passed from previous scanning and in synchronization with the refresh period R, and the refresh potential (e.g. Vcom) is written in a pixel connected with the scanning signal line during this intermediate selection period. Although the intermediate selection period is shorter than one horizontal scanning period, by setting a plurality of intermediate selection periods with one horizontal scanning period therebetween and thus performing impulse driving, it is possible to write black (insert black) in individual pixels. Consequently, a pixel displays input video data during 2/3 frame period out of one frame period and displays black during 1/3 frame period out of the one frame period. This reduces tailing etc. when displaying a moving image, thereby improving the quality of the displayed moving image.

Also by causing the display section 10p shown in (a) of Fig. 35 based on the pixel-division system to be driven as shown in Fig. 40, it is possible to reduce tailing etc. when displaying a moving image and thus improve the quality of the displayed moving image.

In Embodiment 4, an explanation was made as to a case where the polarity of a signal potential supplied to a data signal line is inverted with respect to one horizontal scanning period (1H). However, the present invention is not limited to this case. By changing the order of simultaneous selection of pixels without changing connections of the pixels, it is possible to invert the polarity of a signal potential supplied to a data signal line with respect to a plurality of horizontal scanning periods. In this case, it is possible to reduce power consumption of a source driver compared with a case where the polarity of a signal potential is inverted with respect to each horizontal scanning period.

### [Regarding individual embodiments]

In individual embodiments as described above, first and second data signal lines for one pixel column are provided at sides of the pixel column, respectively. However, the present invention is not limited to this configuration. For example, as shown in Fig. 53, first and second data signal lines for a pixel column may be provided in such a manner that the first data signal line (e.g. S1x or S1a) is positioned at one side of the pixel column and the second data signal line (e.g. S1y or S1b) are positioned so as to overlap the pixel column. This configuration allows the data signal lines to be separated from each other, thereby reducing parasitic capacitance between the data signal lines. Further, this configuration allows maintaining a wider distance between the data signal lines, compared with a configuration in which data signal lines for a pixel column are provided at sides of the pixel column, respectively. This allows reducing the ratio of short-circuits between data signal lines, thereby increasing the yield ratio of products. It should be noted that since this configuration requires overlapping of a data signal line and a pixel electrode of each pixel, it is desirable to thicken an interlayer insulating film on the data signal line (e.g. use an organic insulating film as the interlayer insulating film).

When performing refreshing in a 1V inversion driving (driving in which the polarity of a signal potential supplied to a data signal line is inverted with respect to 1 frame) shown in Figs. 9-12, it is possible to set a refresh potential Vr based on a signal potential Vp during the previous horizontal scanning period, a signal potential Vq during a current horizontal scanning period, and a potential Vcom of a common electrode on a counter substrate that faces an active matrix substrate (active refresh). For example, assume that Vr=Vq+{(Vq-Vcom)-(Vp-Vcom)}/2. In this case, a refresh period is set to 90-100 percent with respect to a time constant of a data signal line (time constant of a source line). Fig. 57 is a waveform chart showing variations in reached potential of a current horizontal scanning period due to the level of a potential supplied during the previous horizontal scanning period in a case where the above-described active refresh is performed with a refresh period being 90 percent of the time constant of a data signal line. It is understood from Fig. 57 that reached potentials of pixels are well uniformed and the reached potentials are substantially equal to set grayscale potentials in respective cases of grayscale 0 (previous horizontal scanning period)→grayscale 100 (current horizontal scanning period), grayscale 100→grayscale 100, and grayscale 255 (previous horizontal scanning period)→grayscale 100. Fig. 58 is a waveform chart showing variations in reached potential of a current horizontal scanning period due to the level of a potential supplied during the previous horizontal scanning period in a case where the above-described active refresh is performed with a refresh period being 100 percent of the time constant of a data signal line. It is understood from Fig. 58 that reached potentials of pixels are better uniformed and the reached potentials are substantially equal to set grayscale potentials in respective cases of grayscale 0 (previous horizontal scanning period)→grayscale 100 (current horizontal scanning period), grayscale 100→grayscale 100, and grayscale 255 (previous horizontal scanning period)→grayscale 100.

Fig. 45 is a block diagram showing a configuration of a liquid crystal display of the present invention which includes the display section 10a, 10e, 10i, 10k or the like (based on a pixel-non-division system). As shown in the drawing, the liquid crystal display includes a display section (liquid crystal panel), a source driver, a gate driver, a backlight, a backlight driving circuit, a display control circuit, and a data permutation circuit 44. The source driver drives data signal lines, the gate driver drives scanning signal lines, the data permutation circuit 44 permutates input data (mentioned later), and the display control circuit controls the source driver, the gate driver, and the backlight driving circuit.

The display control circuit receives, from an outside signal source, a digital video signal Dv indicative of an image to be displayed; a horizontal sync signal HSY and a vertical sync signal VSY each corresponding to the digital video signal Dv; and a control signal Dc for controlling display operation. Further, the display control circuit generates, based on the signals Dv, HSY, VSY, and Dc thus received, a data start pulse signal SSP, a data clock signal SCK, a latch strobe signal LS, a digital image signal DA indicative of an image to be displayed (signal corresponding to video signal Dv), a gate start pulse signal GSP, a gate clock signal GCK, and a gate driver output control signal (scanning signal output control signal) GOE, each serving as a signal for enabling the display section to display an image indicated by the digital video signal Dv, and the display control circuit outputs these signals.

To be more specific, the video signal Dv is subjected to timing adjustment etc. in an internal memory if necessary and then outputted as the digital image signal DA from the display control circuit. The data clock signal SCK is generated as a signal consisting of pulses corresponding to pixels of an image indicated by the digital image signal DA. The data start pulse signal SSP is generated, based on the horizontal sync signal HSY, as a signal which has a high (H) level only during a predetermined period with respect to each horizontal scanning period. The gate start pulse signal GSP is generated, based on the vertical sync signal VSY, as a signal which has a H level only during a predetermined period with respect to each frame period (each vertical scanning period). The gate clock signal GCK is generated based on the horizontal sync signal HSY. The latch strobe signal LS and the gate driver output control signal GOE are generated based on the horizontal sync signal HSY and the control signal Dc.

Among the signals thus generated by the display control circuit, the digital image signal DA, the latch strobe signal LS, a signal POL for controlling the polarity of a signal potential (data signal potential), the data start pulse signal SSP, and the data clock signal SCK are input to the source driver, and the gate start pulse signal GSP, the gate clock signal GCK, and the gate driver output control signal GOE are input to the gate driver.

Based on the digital image signal DA, the data clock signal SCK, the latch strobe signal LS, the data start pulse signal SSP, and the polarity inversion signal POL, the source driver sequentially generates data signals that are analog voltages corresponding to pixel values in each horizontal scanning line of an image represented by the digital image signal DA, and applies the data signals to source lines (e.g. S1x and S1y).

Based on the gate start pulse signal GSP, the gate clock signal GCK, and the gate driver output control signal GOE, the gate driver generates scanning signals and applies the scanning signals to gate lines, so as to selectively drive the gate lines.

As described above, the source driver and the gate driver drive the source lines and the gate lines of the display section (liquid crystal panel), so that a signal potential is written in a pixel electrode from a data signal line via a TFT connected with the selected scanning signal line. Thus, a voltage corresponding to the digital image signal DA is applied to the liquid crystal layer in individual pixels, and application of the voltage controls transmittance of light from the backlight, enabling the display section to display an image indicated by the digital video signal Dv.

Fig. 46 is a block diagram showing a configuration of a liquid crystal display of the present invention which includes the display section 10c, 10g, 10j, 10p or the like (pixel-division system). The liquid crystal display includes a CS control circuit in addition to the configuration of Fig. 45. The CS control circuit is a circuit for controlling a phase, a cycle etc. of a CS signal for controlling a potential of a retention capacitance line (CS line). The CS control circuit receives a gate start pulse signal GSP and a gate clock signal GCK that are supplied from the display control circuit.

As shown in Fig. 47, the liquid crystal display of the present invention may be arranged such that an upper domain and a lower domain are provided in a display section (based on a pixel-non-division system) and each domain is provided with data signal lines, scanning signal lines, and pixels, and the data signal lines, the scanning signal lines, and the pixels are driven with respect to each domain. In this configuration, data signal lines are separately provided in the upper domain and the lower domain, and the data signal lines in the upper domain and the data signal lines in the lower domain are driven by first and second source drivers, respectively. Further, scanning signal lines G1, G2, ... in the upper domain are driven by a first gate driver GD1 and scanning signal lines g1, g2, ... in the lower domain are driven by a second gate driver GD2. Further, the first and second source drives receive DA1 and DA2, respectively, from the display control circuit. In a case where the display section is based on a pixel-division system, the liquid crystal display may be configured as shown in Fig. 48. That is, the liquid crystal display shown in Fig. 48 includes, in addition to the configuration shown in Fig. 47, a first CS control circuit CSC1 corresponding to the upper domain and a second CS control circuit CSC2 corresponding to the lower domain. The first CS control circuit CSC1 controls retention capacitance lines in the upper domain and the second CS control circuit CSC2 controls retention capacitance lines in the lower domain.

(a) and (b) of Fig. 49 show a configuration of a gate driver. As shown in the drawings, the gate driver includes gate driver IC (Integrated Circuit) chips 411a, 411p, ...411q serving as partial circuits each including a shift register 40 (see (b) of Fig. 49). As shown in Fig. (b) of 49, each of the gate driver IC chips includes the shift register 40, first AND gates 42 and second AND gates 43 that are provided so as to correspond to individual stages of the shift register 40, and an output section 45 for outputting scanning signals G(1), ... based on output signals g(1) of the second AND gates 43, and the gate driver IC chip receives a start pulse signal SPi, a clock signal CK, and an output control signal OE that are supplied from outside.

The start pulse signal SPi is supplied to an input terminal of the shift register 40, and a start pulse signal SPo to be supplied to a subsequent gate driver IC chip is supplied from an output terminal of the shift register 40. Further, each of the first AND gates 41 receives a logic inversion signal of the clock signal CK, and each of the second AND gates 43 receives a logic inversion signal of the output control signal OE. Output signals Qk (k=1, ...) from individual stages of the shift register 40 are supplied to first AND gates 41 corresponding to the stages, and output signals from the first AND gates 41 are supplied to second AND gates 43 corresponding to the stages.

As shown in (a) of Fig. 49, the gate driver is realized by cascade-connecting the plurality of gate driver IC chips 411a-411q each having the above configuration. That is, in order that the shift registers 40 in the gate driver IC chips 411a-411q constitute one shift register, an output terminal of a shift register in a gate driver IC chip (output terminal for the start pulse signal SPo) is connected with an input terminal of a shift register in the next gate driver IC chip (input terminal for the start pulse signal SPi).

It should be noted that a gate start pulse signal GSP is supplied from the display control circuit to the shift register in the gate driver IC chip 411a at the head and the shift register in the gate driver IC chip 411q at the end is not connected with the outside. Further, a gate clock signal GCK from the display control circuit is supplied to individual gate driver IC chips as a clock signal CK common among the gate driver IC chips. On the other hand, the gate driver output control signal GOE generated in the display control circuit includes a first gate driver output control signal GOE1 to a qth gate driver output control signal GOEq. The first gate driver output control signal GOE1 to the qth gate driver output control signal GOEq are supplied as output control signals OE to the gate driver IC chips (411a to 411q), respectively.

Fig. 50 shows a configuration of a data permutation circuit 44 (see Figs. 45-48) used in the liquid crystal display of the present invention. As shown in Fig. 50, the data permutation circuit 44 includes a permutation control circuit 61, a first line memory 51A and a second line memory 51B. The permutation control circuit 61 serializes parallel input data corresponding to two lines (two pixel rows) using input signals Dv, HSY, VSY, and Dc, and considers the serialized data as output data corresponding to one horizontal scanning period (1H). For example, the permutation control circuit 61 temporarily writes individual data corresponding to an odd-number-positioned pixel row in the first line memory 51A, and temporarily writes individual data corresponding to a next row (even-number-positioned pixel row) in the second line memory 51B, and reads out data alternately from the first line memory 51A and the second line memory 51B, thereby serializing parallel input data corresponding to two lines (two pixel rows). Data which are read out alternately from the first line memory 51A and the second line memory 51B correspond to signal potentials supplied to first and second data signal lines.
(a) and (b) of Fig. 51 show a configuration of a source driver in a case where a refresh period is provided in the liquid crystal display of the present invention. As shown in (a) of Fig. 51, the source driver includes buffers 31, data output switches SWa, and refresh switches SWb corresponding to individual data signal lines. Each of the buffers 31 receives corresponding data d, and an output of the buffer 31 is connected with an output terminal to a data signal line via a data output switch SWa. Further, output terminals respectively corresponding to adjacent two data signal lines are connected with each other via a refresh switch SWb. That is, the refresh switches SWb are connected in series, and one terminal thereof is connected with a refresh potential supply source 35 (Vcom). LS (latch strobe signal) is supplied to a gate terminal of a data output switch SWa via an inverter 33, and an LS signal is supplied to a gate terminal of a refresh switch SWb. This configuration is preferably used in a case where charge sharing of a refresh potential is relatively easy (in a case of using the display section 10b, 10f or the like in which adjacent data signal lines do not have the same polarity).

The configuration shown in (a) of Fig. 51 may be arranged as shown in (b) of Fig. 51. The arranged configuration is such that refresh switches SWc are connected with only corresponding data signal lines and a refresh potential supply source 35 (Vcom), and the refresh switches SWc are not connected with one another in series. This configuration allows speedily supplying a refresh potential to individual data signal lines. This configuration is preferably used in a case where charge sharing of a refresh potential is relatively difficult (in a case of using the display section 10a, 10e, 10k or the like in which adjacent data signal lines have the same polarity).

In the above embodiments, an explanation was made as to a case where a refresh potential is Vcom. However, the present invention is not limited to this case. For example, the present invention may be arranged such that a suitable refresh potential is calculated based on the level of a potential supplied to a data signal line during previous horizontal scanning period and a signal potential to be supplied to the data signal line during a current horizontal scanning period, and the refresh potential thus calculated is supplied to the data signal line. The configuration of the source driver in this case is shown in Fig. 52. In this configuration, data output buffers 131, refresh buffers 132, data output switches SWa, and refresh switches SWe are provided in such a manner as to correspond to individual data signal lines. Each of the data output buffers 131 receives corresponding data d, and an output of the data output buffer 131 is connected with an output terminal to a data signal line via a data output switch SWa. To the refresh buffer 132 is supplied corresponding non-image data N (data corresponding to a suitable refresh potential determined based on the level of a potential supplied during previous horizontal scanning period and a signal potential to be supplied during a current horizontal scanning period), and an output of the refresh buffer 132 is connected with an output terminal to a data signal line via the refresh switch SWe.

Next, the following explains one example of configuration of applying the liquid crystal display according to the present invention to a television receiver. Fig. 54 is a block diagram showing a configuration of a liquid crystal display 800 for a television receiver. The liquid crystal display 800 includes a liquid crystal display unit 84, a Y/C separation circuit 80, a video chroma circuit 81, an A/D converter 82, a liquid crystal controller 83, a backlight drive circuit 85, a backlight 86, a microcomputer 87, and a gradation circuit 88. The liquid crystal panel 84 includes: a liquid crystal panel; and a source driver and a gate driver each for driving the liquid crystal panel.

In the liquid crystal display 800 having the aforementioned configuration, a complex color video signal Scv as a television signal is inputted from the outside to the Y/C separation circuit 80. In the Y/C separation circuit 80, the complex color video signal Scv is separated into a luminance signal and a color signal. The luminance signal and the color signal are converted to analog RGB signals corresponding to three primary colors of light in the video chroma circuit 81. Further, the analog RGB signals are converted to digital RGB signals by the A/D converter 82. The digital RGB signals are inputted to the liquid crystal controller 83. Moreover, in the Y/C separation circuit 80, horizontal and vertical sync signals are extracted from the complex color video signal Scv inputted from the outside. These sync signals are also inputted to the liquid crystal controller 83 via the microcomputer 87.

The liquid crystal display unit 84 receives, from the liquid crystal controller 83, the digital RGB signals as well as timing signals based on the sync signals with predetermined timing. Further, the gradation circuit 88 generates gradation potentials corresponding to three primary colors R, G, and B for color display, and supplies the gradation potentials to the liquid crystal display unit 84. In the liquid crystal display unit 84, drive signals (data signals = signal potentials, scanning signals etc.) are generated by source driver, gate driver etc. in accordance with the RGB signals, the timing signals, and the gradation potentials, and a color image is displayed by a liquid crystal panel. In order to enable the liquid crystal display unit 84 to display an image, it is necessary to emit light from the backside of the liquid crystal panel in the liquid crystal display unit. In the liquid crystal display 800, under control of the microcomputer 87, the backlight drive circuit 85 drives the backlight 86 so as to emit light to the backside of the liquid crystal panel.

Control of the whole system, including the aforementioned processes is carried out by the microcomputer 87. As the video signal (complex color video signal) inputted from the outside, not only a video signal in accordance with television broadcast but also a video signal picked up by a camera or supplied via the Internet line is also usable. In the liquid crystal display 800, image display in accordance with various video signals can be performed.

In displaying an image by the liquid crystal display 800 in accordance with television broadcast, a tuner section 90 is connected to the liquid crystal display 800 as shown in Fig. 55, and thus a television receiver 601 of the present invention is provided. The tuner section 90 extracts a channel signal to be received from waves (high-frequency signals) received by an antenna (not shown), and converts the channel signal to an intermediate frequency signal. The tuner section 90 detects the intermediate frequency signal, thereby extracting the complex color video signal Scv as the television signal. The complex color video signal Scv is inputted to the liquid crystal display 800 as described above and an image is displayed by the liquid crystal display 800 in accordance with the complex color video signal Scv.

Fig. 56 is an exploded perspective view showing one example of configuration of the television receiver of the present invention. As shown in the drawing, the television receiver 601 includes, as components thereof, a first housing 801 and a second housing 806 in addition to the liquid crystal display 800. The liquid crystal display 800 is arranged such that the first and second housings 801 and 806 hold the liquid crystal display 800 so as to wrap therein the liquid crystal display 800. The first housing 801 has an opening 801a for transmitting an image displayed on a liquid crystal display 800. On the other hand, the second housing 806 covers a back side of the liquid crystal display 800. The second housing 806 is provided with an operating circuit 805 for operating the liquid crystal display 800. The second housing 806 is further provided with a supporting member 808 therebelow.

In the present embodiment, the potential of a retention capacitance line is controlled in response to a retention capacitance line signal supplied to the retention capacitance line. In this case, the above explanation may be interpreted that the potential (level) of a retention capacitance line indicates the potential (level) of a retention capacitance line signal supplied to the retention capacitance line.

Further, "the polarity of a potential" indicates being not more than a reference potential or being not less than a reference potential. Plus polarity indicates being not less than a reference potential, and minus polarity indicates being not more than a reference potential. The reference potential may be Vcom (common potential) that is a potential of a common electrode (counter electrode) or any other potential.

Further, "inversion of the polarity of a potential" indicates shifting from the level of not more than a reference potential to the level of not less than the reference potential, or shifting from the level of not less than a reference potential to the level of not more than the reference potential. As described above, the reference potential may be Vcom (common potential) that is a potential of a common electrode (counter electrode) or any other potential. Accordingly, "inversion of a potential (inversion of the polarity of a potential)" may be interpreted as "shift of the level of a potential".

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

### Industrial Applicability

The liquid crystal panel and the liquid crystal display of the present invention are preferably applicable to a liquid crystal television receiver for example.

## Claims

1. A liquid crystal display, having pixels aligned in a row direction and a column direction, the row direction being a direction in which scanning signal lines are extended,
the liquid crystal display comprising pixel columns, first data signal lines, and second data signal lines,
a first data signal line and a second data signal line being provided for each pixel column, one pixel included in the pixel column being connected with a scanning signal line and one of the first data signal line and the second data signal line, and signal potentials with opposite polarities being supplied to the first data signal line and the second data signal line, respectively,
in a case where a predetermined pixel in the pixel column is regarded as a first pixel from which counting of a pixel starts, an odd-number-positioned pixel and an even-number-positioned pixel in a scanning direction are paired, n (n is a natural number) pairs are regarded as a group, and each group is given a count number,
each group being configured such that two pixels in each pair are connected with different data signal lines and each odd-number-positioned pixel is connected with one data signal line, and
in two groups with successive count numbers, an odd-number-positioned pixel in one group and an odd-number-positioned pixel in the other group being connected with different data signal lines.

2. The liquid crystal display as set forth in claim 1, wherein a polarity of a signal potential supplied to a data signal line is inverted with respect to n horizontal scanning period.

3. The liquid crystal display as set forth in claim 1, wherein a group is selected according to the count number, in the selected group, scanning signal lines respectively connected with two pixels in a pair are simultaneously selected, and when n is 2 or more, the simultaneous selection is sequentially performed with respect to each pair.

4. A liquid crystal display, having pixels aligned in a row direction and a column direction, the row direction being a direction in which scanning signal lines are extended,
the liquid crystal display comprising pixel columns, first data signal lines, and second data signal lines,
a first data signal line and a second data signal line being provided for each pixel column, one pixel included in the pixel column being connected with a scanning signal line and one of the first data signal line and the second data signal line, and signal potentials with opposite polarities being supplied to the first data signal line and the second data signal line, respectively,
in a case where a predetermined pixel in the pixel column is regarded as a first pixel from which counting of a pixel starts, an odd-number-positioned pixel and an even-number-positioned pixel counted in a scanning direction are paired, and each pair is given a count number,
two pixels in each pair being connected with different data signal lines, and
an odd-number-positioned pixel in one of two pairs with successive count numbers and an odd-number-positioned pixel in the other of the two pairs with successive count numbers being connected with a same data signal line.

5. The liquid crystal display as set forth in claim 4, wherein a polarity of a signal potential supplied to each data signal line is inverted with respect to each vertical scanning period.

6. The liquid crystal display as set forth in claim 4, wherein simultaneous selection of scanning signal lines that are respectively connected with two pixels in a pair is performed according to the count number with respect to each pair.

7. The liquid crystal display as set forth in any one of claims 1 to 6, wherein pixels in one pixel row are connected with one scanning signal line, a first data signal line for one of adjacent two pixel columns and a first data signal line for the other of the adjacent two pixel columns are supplied with a signal potential with a same potential, and connections with a first data signal line and a second data signal line are made oppositely between pixels adjacent in a row direction.

8. The liquid crystal display as set forth in claim 7, wherein a first data signal line and a second data signal line for a pixel column are provided at both sides of the pixel column, and a first data signal line for one of adjacent two pixel columns and a second data signal line for the other of the adjacent two pixel columns are adjacent to each other without a pixel column therebetween or a second data signal line for one of adjacent two pixel columns and a first data signal line for the other of the adjacent two pixel columns are adjacent to each other without a pixel column therebetween.

9. The liquid crystal display as set forth in claim 7, wherein a first data signal line and a second data signal line for a pixel column are provided at both sides of the pixel column, and a first data signal line for one of adjacent two pixel columns and a first data signal line for the other of the adjacent two pixel columns are adjacent to each other without a pixel column therebetween or a second data signal line for one of adjacent two pixel columns and a second data signal line for the other of the adjacent two pixel columns are adjacent to each other without a pixel column therebetween.

10. The liquid crystal display as set forth in claim 1, wherein the odd-number-positioned pixel and the even-number-positioned pixel in a pair are adjacent to each other.

11. The liquid crystal display as set forth in claim 10, wherein each pixel other than 2×n×i+1^{st} (i is a natural number) pixel and its upstream-adjacent pixel are connected with different data signal lines and the 2×n×i+1^{st} pixel and its upstream-adjacent pixel are connected with a same data signal line, and
the scanning signal lines are sequentially selected with starting from a scanning signal line connected with the predetermined pixel in such a manner that adjacent two scanning signal lines are selected simultaneously.

12. The liquid crystal display as set forth in claim 1, wherein n=1.

13. The liquid crystal display as set forth in claim 4, wherein two pixels in a pair are adjacent to each other.

14. The liquid crystal display as set forth in claim 13, wherein
each pixel positioned at downstream side in a scanning direction from the predetermined pixel and a pixel at an upstream-adjacent position of said each pixel in the scanning direction are connected with different data signal lines, and
the scanning signal lines are sequentially selected with starting from a scanning signal line connected with the predetermined pixel in such a manner that adjacent two scanning signal lines are selected simultaneously.

15. A liquid crystal display, having pixels aligned in a row direction and a column direction, the row direction being a direction in which scanning signal lines are extended,
the liquid crystal display comprising pixel columns, first data signal lines, and second data signal lines,
a first data signal line and a second data signal line being provided for each pixel column, one pixel included in the pixel column being connected with a scanning signal line and one of the first data signal line and the second data signal line, and signal potentials with opposite polarities being supplied to the first data signal line and the second data signal line, respectively,
in a case where a predetermined pixel in the pixel column is regarded as a first pixel from which counting of pixel starts, two odd-number-positioned pixels counted in a scanning direction are paired and two even-number-positioned pixels counted in the scanning direction are paired, and a group including n (n is a natural number) pair consisting of two odd-number-positioned pixels and a group including n pair consisting of two even-number-positioned pixels are alternately given count numbers,
two pixels in each pair are connected with different data signal lines, and a polarity of a signal potential supplied to a data signal line is inverted with respect to n horizontal scanning period.

16. The liquid crystal display as set forth in claim 15, wherein a group is selected according to the count number, in the selected group, scanning signal lines respectively connected with two pixels in a pair are simultaneously selected, and when n is 2 or more, the simultaneous selection is sequentially performed with respect to each pair.

17. The liquid crystal display as set forth in claim 15, wherein a polarity of a signal potential supplied to a first data signal line and a second data signal line for one of adjacent two pixel columns is different from a polarity of a signal potential supplied to a first data signal line and a second data signal line for the other of the adjacent two pixel columns.

18. The liquid crystal display as set forth in claim 15, wherein the two pixels in each pair are two pixels with successive odd count numbers or two pixels with successive even count numbers.

19. The liquid crystal display as set forth in any one of claims 1 to 18, wherein
there are provided a plurality of retention capacitance lines whose potentials are controllable,
the pixel includes a first transistor, second transistor, a first pixel electrode, and a second pixel electrode,
the first pixel electrode and the second pixel electrode are connected with a same data signal line via the first transistor and the second transistor, respectively,
the first transistor and the second transistor are connected with the scanning signal line,
the first pixel electrode and the second pixel electrode form retention capacitances with different retention capacitance lines, respectively,
potentials of the different retention capacitance lines with which the first pixel electrode and the second pixel electrode form retention capacitances are caused to shift their levels in an opposite direction to each other in synchronization with or after completion of scanning of the scanning signal line with which the first transistor and the second transistor are connected.

20. The liquid crystal display as set forth in claim 19, wherein
a retention capacitance line is provided for two pixels adjacent in a column direction, and
a first pixel electrode or a second pixel electrode provided in one of the two pixels and a first pixel electrode or a second pixel electrode provided in the other of the two pixels form retention capacitances with the retention capacitance line.

21. The liquid crystal display as set forth in any one of claims 1 to 20, wherein during each horizontal scanning period, the first data signal line and the second data signal line are supplied with a preliminary potential and thereafter with the signal potential.

22. The liquid crystal display as set forth in claim 21, wherein the preliminary potential has a constant value.

23. The liquid crystal display as set forth in claim 22, wherein the constant value is a middle value of a range of the signal potential.

24. The liquid crystal display as set forth in claim 20, wherein the preliminary potential is determined based on a signal potential supplied to a data signal line during a previous horizontal scanning period and a signal potential to be supplied to the data signal line during a current horizontal scanning period.

25. The liquid crystal display as set forth in claim 21, wherein an intermediate selection period is provided between scanning periods for a scanning signal line in accordance with timing of supplying the preliminary potential, and the preliminary potential is written in a pixel connected with the scanning signal line during the intermediate selection period.

26. The liquid crystal display as set forth in any one of claims 1, 4, and 15, wherein one of the first data signal line and the second data signal line is provided at one side of the pixel column and the other of the first data signal line and the second data signal line is provided in such a manner as to overlap the pixel column.

27. The liquid crystal display as set forth in claims 3, 6, and 16, wherein the simultaneously selected scanning signal lines are connected in a liquid crystal panel or connected with a same output of a gate driver for driving the scanning signal lines.

28. The liquid crystal display as set forth in any one of claims 1 to 27, wherein a display section includes a plurality of domains, and each of the plurality of domains includes data signal lines, scanning signal lines, and pixels, and the data signal lines, scanning signal lines, and the pixels included in each domain are driven with respect to said each domain.

29. The liquid crystal display as set forth in any one of claims 1 to 28, wherein the number of frames displayed per one second is more than 60.

30. The liquid crystal display as set forth in claim 11 or 14, wherein
there are provided a plurality of retention capacitance lines whose potentials are controllable, each pixel includes a first transistor, a second transistor, a first pixel electrode, and a second pixel electrode, the first pixel electrode and the second pixel electrode are connected with a same data signal line via the first transistor and the second transistor, respectively, the first transistor and the second transistor are connected with a same scanning signal line, the first pixel electrode and the second pixel electrode form retention capacitances with different retention capacitance lines, respectively,
a retention capacitance line is provided for adjacent two pixels in the pixel column, one of a first pixel electrode and a second pixel electrode of one of the adjacent two pixels and one of a first pixel electrode and a second pixel electrode of the other of the adjacent two pixels form retention capacitances with the retention capacitance line provided for the two pixels,
retention capacitance lines that form retention capacitances with a first pixel electrode and a second pixel electrode in a first-positioned pixel positioned first among all the pixels are first-positioned and second-positioned retention capacitance lines, the second-positioned retention capacitance line also forms retention capacitance with one of a first pixel electrode and a second pixel electrode of a second-positioned pixel positioned second among all the pixels, and at a time of completion of writing of the first-positioned and second-positioned pixels or after the completion, potentials of the first-positioned and second-positioned retention capacitance lines shift simultaneously and in an opposite direction,
between two successive odd-number-positioned retention capacitance lines counted in a scanning direction from the first-positioned retention capacitance line, shift of a potential of a former of the two successive odd-number-positioned retention capacitance lines is followed after 1 horizontal scanning period by shift of potential of a latter of the two successive odd-number-positioned retention capacitance lines in a same direction, and between two successive even-number-positioned retention capacitance lines, shift of a potential of a former of the two successive even-number-positioned retention capacitance lines is followed after 1 horizontal scanning period by shift of a potential of a latter of the two successive even-number-positioned retention capacitance lines in a same direction.

31. The liquid crystal display as set forth in claim 18, wherein
there are provided a plurality of retention capacitance lines whose potentials are controllable, each pixel includes a first transistor, a second transistor, a first pixel electrode, and a second pixel electrode, the first pixel electrode and the second pixel electrode are connected with a same data signal line via the first transistor and the second transistor, respectively, the first transistor and the second transistor are connected with a same scanning signal line, the first pixel electrode and the second pixel electrode form retention capacitances with different retention capacitance lines, respectively,
a retention capacitance line is provided for adjacent two pixels in the pixel column, one of a first pixel electrode and a second pixel electrode of one of the adjacent two pixels and one of a first pixel electrode and a second pixel electrode of the other of the adjacent two pixels form retention capacitances with the retention capacitance line provided for the adjacent two pixels,
retention capacitance lines that form retention capacitances with a first pixel electrode and a second pixel electrode in a first-positioned pixel positioned first among all the pixels are first-positioned and second-positioned retention capacitance lines, the second-positioned retention capacitance line also forms retention capacitance with one of a first pixel electrode and a second pixel electrode of a second-positioned pixel positioned second among all the pixels, and at a time of completion of writing of the first-positioned and second-positioned pixels or after the completion, potentials of the first-positioned and second-positioned retention capacitance lines shift simultaneously and in an opposite direction,
when every successive two odd-number-positioned retention capacitance lines are paired based on counting in a scanning direction from the first-positioned retention capacitance line, potentials of two retention capacitance lines in each pair are shifted simultaneously in a same direction, and between adjacent two pairs, shift of potentials of retention capacitance lines in a pair at upstream side of a scanning direction is followed after 2 horizontal scanning periods by shift of potentials of retention capacitance lines in a pair at downstream side of the scanning direction, and
when every successive two even-number-positioned retention capacitance lines are paired, potentials of two retention capacitance lines in each pair are shifted simultaneously in a same direction, and between adjacent two pairs, shift of potentials of retention capacitance lines in a pair at upstream side of a scanning direction is followed after 2 horizontal scanning periods by shift of potentials of retention capacitance lines in a pair at downstream side of the scanning direction.

32. A method for driving a liquid crystal display,
the liquid crystal display having pixels aligned in a row direction and a column direction, the row direction being a direction in which scanning signal lines are extended,
the liquid crystal display comprising pixel columns, first data signal lines, and second data signal lines,
a first data signal line and a second data signal line being provided for each pixel column, one pixel included in the pixel column being connected with a scanning signal line and one of the first data signal line and the second data signal line,
in a case where a predetermined pixel in the pixel column is regarded as a first pixel from which counting of a pixel starts, an odd-number-positioned pixel and an even-number-positioned pixel in a scanning direction are paired, n (n is a natural number) pairs are regarded as a group, and each group is given a count number,
each group being configured such that two pixels in each pair are connected with different data signal lines and each odd-number-positioned pixel is connected with one data signal line, and
in two groups with successive count numbers, an odd-number-positioned pixel in one group and
an odd-number-positioned pixel in the other group being connected with different data signal lines,
the method comprising the steps of:
supplying signal potentials with opposite polarities to the first data signal line and the second data signal line, respectively,
inverting a polarity of a signal potential supplied to a data signal line with respect to n horizontal scanning period,
selecting a group according to the count number,
and
performing simultaneous selection of scanning signal lines respectively connected with two pixels in a pair in the selected group, whereby when n is 2 or more, the simultaneous selection is sequentially performed with respect to each pair.

33. A method for driving a liquid crystal display,
the liquid crystal display having pixels aligned in a row direction and a column direction, the row direction being a direction in which scanning signal lines are extended,
the liquid crystal display comprising pixel columns, first data signal lines, and second data signal lines,
a first data signal line and a second data signal line being provided for each pixel column, one pixel included in the pixel column being connected with a scanning signal line and one of the first data signal line and the second data signal line,
in a case where a predetermined pixel in the pixel column is regarded as a first pixel from which counting of a pixel starts, an odd-number-positioned pixel and an even-number-positioned pixel counted in a scanning direction are paired, and each pair is given a count number,
two pixels in a pair being connected with different data signal lines, and
an odd-number-positioned pixel in one of two pairs with successive count numbers and an odd-number-positioned pixel in the other of the two pairs with successive count numbers being connected with a same data signal line,
the method comprising the steps of:
supplying signal potentials with opposite polarities to the first data signal line and the second data signal line, respectively,
inverting a polarity of a signal potential supplied to each data signal line with respect to each vertical scanning period, and
simultaneously selecting scanning signal lines that are respectively connected with two pixels in a pair according to the count number with respect to each pair.

34. A method for driving a liquid crystal display,
the liquid crystal display having pixels aligned in a row direction and a column direction, the row direction being a direction in which scanning signal lines are extended,
the liquid crystal display comprising pixel columns, first data signal lines, and second data signal lines,
a first data signal line and a second data signal line being provided for each pixel column, one pixel included in the pixel column being connected with a scanning signal line and one of the first data signal line and the second data signal line,
in a case where a predetermined pixel in the pixel column is regarded as a first pixel from which counting of pixel starts, two odd-number-positioned pixels counted in a scanning direction are paired and two even-number-positioned pixels counted in the scanning direction are paired, and a group including n (n is a natural number) pair consisting of two odd-number-positioned pixels and a group including n (n is a natural number) pair consisting of two even-number-positioned pixels are alternately given count numbers,
two pixels in a pair are connected with different data signal lines,
the method comprising the steps of:
supplying signal potentials with opposite polarities to the first data signal line and the second data signal line, respectively,
inverting a polarity of a signal potential supplied to a data signal line with respect to n (n is a natural number) horizontal scanning period,
selecting a group according to the count number, and
simultaneously selecting scanning signal lines respectively connected with two pixels in a pair in the selected group, whereby when n is 2 or more, the simultaneous selection is sequentially performed with respect to each pair.

35. A television receiver, comprising
a liquid crystal display as set forth in any one of claims 1 to 31, and
a tuner section for receiving television broadcasting.
